# EUROPÄISCHE PATENTSCHRIFT

(11) **EP 2 585 963 B1**
(45) Veröffentlichungstag und Bekanntmachung des Hinweises auf die Patenterteilung: **05.12.2018**
(21) Anmeldenummer: 11726388.9
(22) Anmeldetag: 10.06.2011
(51) Int. Cl.: G06F 21/64, H04L 9/32

(54) **VERFAHREN ZUR ERZEUGUNG EINES ZERTIFIKATS**
METHOD FOR GENERATING A CERTIFICATE
PROCÉDÉ DE PRODUCTION D'UN CERTIFICAT

(30) Priorität: 28.06.2010 DE 102010030590
(43) Veröffentlichungstag der Anmeldung: 01.05.2013
(73) Patentinhaber: Bundesdruckerei GmbH, 10958 Berlin (DE)
(72) Erfinder: ENTSCHEW, Enrico, 12435 Berlin (DE); WIRTH, Klaus-Dieter, 12683 Berlin (DE)
(74) Vertreter: Richardt Patentanwälte PartG mbB
(86) Internationale Anmeldenummer: PCT/EP2011/059716
(87) Internationale Veröffentlichungsnummer: WO 2012/000775

(56) Entgegenhaltungen:
- EP-A1- 1 549 019
- WO-A1-2009/126994
- DE-A1- 10 259 270
- US-B2- 7 370 202
- "eCard-API-Framework Protocols Amendment 1 (eID-SSCD Activation Protocol)", BSI - TECHNICAL GUIDELINE, FEDERAL OFFICE FOR INFORMATION SECURITY, DE, Nr. BSI TR-03112-7-Amd1, 10. September 2009 (2009-09-10), Seiten 1-14, XP007914801,
- "eCards mit kontaktloser Schnittstelle als sichere Signaturerstellungseinheit", Technische Richtlinie TR-03117, 1. Januar 2009 (2009-01-01), XP55004069, [gefunden am 2011-08-03]
- "Technische Richtlinie TR-03127 Architektur Elektronischer Personalausweis", TECHNISCHE RICHTLINIE TR-03127, BUNDESAMT FÜR SICHERHEIT IN DER INFORMATIONSTECHNIK, DE, Nr. Version 0.5, 17. April 2009 (2009-04-17), Seiten 1-37, XP007914804,
- "Technische Richtlinie eID-Server", 20090714, Nr. BSI TR-03130. Version 1.0, 14. Juli 2009 (2009-07-14), Seiten 1-50, XP007914820,

## Beschreibung

Die Erfindung betrifft ein Verfahren zur Erzeugung eines Zertifikats, ein Computersystem sowie einen ID-Token.

Aus dem Stand der Technik sind verschiedene Verfahren zur Erzeugung von Zertifikaten und/oder zum Nachweis der so genannten digitalen Identität eines Nutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert. Aus WO 2009/126994 A1 (LOCKSTEP TECHNOLOGIES PTY LTD [AU]; WILSON STEPHEN [AU]) 22. Oktober 2009 ist ein Verfahren mit ID-Tokens bekannt, die einem Nutzer zugeordnet sind und die für die Signatur von transaktionsrelevanten Daten genutzt werden könne. Jedoch müssen hier die dem Zertifikat zugeordneten Schlüssel von dem Token bereits bei der Personalisierung erzeugt werden.

Ganz allgemein sind verschiedene Verfahren zur Signatur elektronischer Dokumente bekannt, welche die Funktion haben, den signierten Dokumenten rechtsverbindlichen Charakter zuzuweisen. Dies wird dadurch erreicht, dass sich ein Nutzer zum Beispiel einmalig von einer zur Zertifizierung berechtigten Stelle ein digitales Zertifikat und zum Beispiel ein asymmetrisches Schlüsselpaar zur Signierung elektronischer Dokumente zuweisen lässt.

Ein generelles Problem bei der Verwendung elektronischer Zertifikate und kryptographischer Verschlüsselungsverfahren zur Erstellung elektronischer Signaturen, insbesondere qualifizierter elektronischer Signaturen, ist der Umstand, dass die aus dem Stand der Technik bekannten Zertifikate für eine qualifizierte elektronische Signatur allgemein und über einen langen Zeitraum hinweg gültig sind, es aber eine Vielzahl von Personen und Nutzern gibt, denen ein derartiges Zertifikat zu viel Verantwortung für zu wenig Nutzen bietet. Besagtes Problem betrifft insbesondere, aber nicht ausschließlich, wenig technik-affine Nutzer. Da eine qualifizierte elektronische Signatur rechtsverbindliche Folgen für den Nutzer, dem diese Signatur zugeordnet ist, hat, besteht ein hohes Missbrauchspotenzial, sollten die technischen Mittel zur Signierung, wie zum Beispiel ein privater Signaturschlüssel, in falsche Hände geraten. Führt der Nutzer nur sehr selten elektronische Transaktionen durch, für welche eine elektronische Signatur erforderlich ist (zum Beispiel die Aufnahme eines Kredits über das Internet, eine online-basierte Einreichung der jährlichen Steuererklärung, etc.), so ist die Missbrauchsgefahr im Verhältnis zum Nutzen einer qualifizierten elektronischen Signatur für viele Nutzer zu hoch.

Viele rechtsverbindliche Geschäfte sind heute zwar theoretisch mittels einer qualifizierten elektronischen Signatur durchführbar, in der Praxis ziehen allerdings viele Nutzer nach wie vor den Postweg für die Abwicklung dieser Geschäfte vor, da vielen Nutzern die Verwendung einer elektronischen Signatur, insbesondere einer qualifizierten elektronischen Signatur, zu unsicher und/oder technisch zu aufwändig erscheint. Viele Personen sind nicht bereit, sich permanent Zertifikate für ein oder mehrere Signaturschlüsselpaare zuordnen zu lassen und damit für die sichere Aufbewahrung der Schlüssel und für die Geheimhaltung von PINs oder Passwörtern für deren Benutzung verantwortlich zu sein, da eine missbräuchliche Nutzung dieser Schlüssel und PINs zunächst ihnen zugerechnet wird bis sie zweifelsfrei das Gegenteil nachweisen können (Prinzip der Beweislastumkehr).

Der Erfindung liegt demgegenüber die Aufgabe zugrunde, ein verbessertes Verfahren zur Erzeugung eines ersten digitalen Zertifikates zu schaffen, sowie ein entsprechendes Computersystem und ein entsprechendes ID-Token.

In einem Aspekt ist es Aufgabe der vorliegenden Erfindung, ein erleichtertes Verfahren zur Identifizierung von Personen bei einem Public-Key-Infrastruktur Anbieter (Zertifikatsaussteller) zu schaffen. Die Identifizierung der Person kann dabei durch persönliches Erscheinen, telefonische Kontaktaufnahme oder auch elektronische, zum Beispiel auf kryptographischen Mitteln beruhende, Identifizierung vor dem Zertifikatsaussteller erreicht werden. Insbesondere die Identifizierung mit kryptographischen Mitteln auf elektronischem Wege wie dies neben anderen Identifizierungsformen durch Ausführungsformen der vorliegenden Erfindung ermöglicht wird, ist vorteilhaft, da eine auf elektronischem Wege erfolgte Authentifizierung eines Nutzers bei einem Zertifikatsaussteller ein medienbruchfreies Verfahren zur Identifizierung der Person sowie zur Ausstellung eines dieser Person zugeordneten Zertifikats ermöglicht.

In einem weiteren Aspekt liegt der Erfindung die Aufgabe zu Grunde, ein Verfahren zur Erzeugung eines ersten digitalen Zertifikates zu schaffen, welches einen hohen Schutz vor Missbrauch bietet. Dadurch soll die Akzeptanz elektronischer Signaturen zur Abwicklung rechtsverbindlicher Geschäfte verbessert und mehr Nutzer für die Verwendung elektronischer Transaktionswege gewonnen werden.

In einem weiteren Aspekt ist es Aufgabe der vorliegenden Erfindung, Anbietern von Geschäftsprozessen wie etwa Kaufhäusern, online-Shops oder Banken sowie Anbietern von Public-Key-Infrastrukturen zu ermöglichen, Risiken für Inhaber von Schlüsseln und Zertifikaten zu minimieren und dadurch einen größeren Personenkreis für die elektronische Abwicklung von Geschäftsprozessen zu animieren. Ferner können durch Ausführungsformen der vorliegenden Erfindung Verwaltungsabläufe automatisiert und Kosten reduziert werden.

In einem weiteren Aspekt stellen Ausführungsformen der vorliegenden Erfindung besonders attraktive Formen der elektronischen Abwicklung von Geschäftsprozessen für die Anbieter von Dienstleistungen dar, da nicht nur die Identität des Kunden mittels eines dem Kunden zugewiesenen Zertifikates nachweisbar ist, sondern den Anbietern der Dienstleistungen und Geschäftsprozesse auch die Möglichkeit eingeräumt werden kann, für einen Kunden und/oder einen bestimmten geplanten Geschäftsprozess ein legitimierendes Zertifikat auszustellen, welches für andere Geschäftsprozesse, zum Beispiel Geschäftstransaktionen mit Konkurrenten, nicht gültig ist beziehungsweise nachträglich gesperrt werden kann. So kann der Anbieter eines Geschäftsprozesses zum Beispiel unmittelbar nach Erhalt, Prüfung und gegebenenfalls Dokumentation und Archivierung eines signierten elektronischen Dokumentes die Löschung des zugehörigen Zertifikates beantragen und dadurch zum Beispiel ausschließen, dass das Zertifikat von der Person, der es zugeordnet ist, in diesem Fall also von einem bestimmten Kunden, für eine Transaktion im Geschäftsverkehr mit Wettbewerbern Verwendung findet.

Ein elektronisches Zertifikat enthält gemäß bevorzugten Ausführungsformen der Erfindung Angaben zur Gültigkeit eines öffentlichen Schlüssels. Besagter öffentlicher Schlüssel bildet zusammen mit einem privaten Schlüssel ein asymmetrisches Schlüsselpaar. Der private Schlüssel dient zur Verschlüsselung von Daten, z.B. Daten eines elektronischen Dokumentes, oder der Verschlüsselung von abgeleiteten Daten eines elektronischen Dokumentes, z.B. eines Hash-Wertes des elektronischen Dokumentes. Durch Verschlüsselung besagter Daten eines elektronischen Dokumentes mit dem privaten Schlüssel wird das elektronische Dokument signiert. Ein einem signierten elektronischen Dokument zugehöriges bzw. zugeordnetes Zertifikat ist also ein Zertifikat, welches die Gültigkeit eines privaten Schlüssels bestätigt, mit welchem das elektronische Dokument signiert wurde.

Ein vorteilhafter Aspekt von Ausführungsformen der vorliegenden Erfindung ist die Ermöglichung einer flexiblen, anlassbezogenen Ausstellung und Nutzung elektronischer Zertifikate. Die damit einhergehende Einschränkung der Gültigkeit von für Signaturzwecke verwendeten Zertifikaten reduziert die Gefahr des Missbrauchs von elektronischen Signaturen, da diese gemäß Ausführungsformen der Erfindung immer nur für bestimmte Anlässe, Zeiträume, Vertragstypen, beziehungsweise nur für ein einziges elektronisches Dokument bzw. eine einzige Transaktion gültig sind.

Unter einer "Transaktion" wird im Folgenden ein Datenverarbeitungsschritt verstanden, welcher durch ein Computer-basiertes System oder Gerät nach Erhalt einer Transaktionsanforderung durchgeführt wird. Der Datenverarbeitungsschritt kann z.B. ein technischer Steuerungs- oder Regelungsschritt sein. Eine Transaktion kann z.B. der Initiation eines Schaltvorgangs oder eines aus mehreren Schaltvorgängen bestehenden Schaltprozesses sein. Eine Transaktion kann auch ein Datenverarbeitungsprozess zur Verarbeitung technischer, medizinischer, finanzbezogener, logistischer oder sonstiger Daten sein. Eine Transaktion kann dabei aus einem einzigen Datenverarbeitungsschritt bestehen oder einer Reihe von Schritten, die in Ihrer Gesamtheit einen bestimmten Effekt bewirken, z.B. die Verarbeitung von Daten zur Berechnung eines Ergebnisses und/oder eine physikalisch messbare Zustandsänderung an dem Computer-basiertes System oder Gerät. Eine Transaktion kann z.B. ein Steuerungsprozess oder Regelungsprozess, wie er in der Hauselektronik vorkommt (Steuerung der Hausbeleuchtung, der Jalousien, der Heizung etc.), oder die Abwicklung eines Geschäftes, z.B. eines rechtsverbindlichen Geschäftes zur Einrichtung eines Girokontos. Gemäß weiteren Ausführungsformen kann es sich bei einer Transaktion auch um eine Datenbanktransaktion handeln.

Eine Transaktionsanforderung ist eine Anforderung zur Durchführung einer Transaktion. Eine Transaktionsanforderung kann insbesondere eine auf elektronischem Wege übermittelte Anforderung zur Durchführung einer Transaktion sein, z.B. ein Http-Request, eine E-Mail, der Aufruf eines Webservice, Remote Procedure Calls etc. Eine Transaktionsanforderung kann auf verschiedenen technischen Protokollen zur Datenübertragung und/oder zur Initiation von Programmfunktionen auf einem entfernten Computer-basierten System beruhen, wobei die Instanz, welche die Transaktionsanforderung aussendet, nicht identisch ist mit derjenigen Instanz, die angeforderte Transaktion durchführt. Die Übertragung der Transaktionsanforderung vom Sender an den Empfänger kann beispielsweise über das Internet, Bluetooth, eine Infrarotschnittstelle etc. erfolgen. Eine Transaktionsanforderung kann insbesondere eine auf elektronischem Wege übermittelte Anforderung zur Übertragung von Informationen oder eine Anforderung der Lieferung von Gütern oder eine Anforderung der Erbringung einer Dienstleistung sein.

Eine "Dienstanforderung" ist eine Anforderung zur Durchführung eines Datenverarbeitungsschrittes, wobei die Dienstanforderung durch die gleiche Instanz, die auch die Transaktionsanforderung generiert, erstellt wird, und wobei die Dienstanforderung an die gleiche Zielinstanz wie die Transaktionsanforderung gerichtet ist. Die Dienstanforderung ist dabei der Transaktionsanforderung zugeordnet und bewirkt das Auslesen von dem Nutzer zugeordneten Attributen und deren Übermittlung an den Dienstanbieter.

Die Zuordnung einer Dienstanforderung zu einer Transaktionsanforderung bedeutet, dass die Dienstanforderung Bestandteil der Transaktionsanforderung sein kann. Alternativ kann die Dienstanforderung der Transaktionsanforderung vorausgehen, wobei die erfolgreiche Erbringung des angeforderten Dienstes notwendig für die Ausführung der Transaktionsanforderung sein kann. Eine Dienstanforderung kann auch der zugehörigen Transaktion nachgelagert sein, und die erfolgreiche Durchführung der angeforderten Transaktion kann für die Erstellung der Dienstanforderung erforderlich sein.

Falls ein Dienstanbieter z.B. mehrere auf eine bestimmte Nutzergruppe beschränkte elektronische Dienste anbietet, wobei die Ausführung jedes Dienstes jeweils durch eine Transaktionsanforderung initiiert wird, können als Resultat der Dienstanforderung Attribute von z.B. dem ID-Token an den Dienst übermittelt werden. Diese Attribute können den Nutzer hinsichtlich seiner Nutzergruppenzugehörigkeit als berechtig zur Anforderung jedes der bereitgestellten Dienste ausweisen. Alternativ ist es möglich, dass zusammen mit einer Transaktionsanforderung für einen bestimmten Dienst auch eine Dienstanforderung an den Dienst übermittelt wird, mit der Folge, dass Attribute, die den Nutzer als für diesen Dienst berechtigt ausweisen, an den Dienstanbieter übermittelt werden.

Die der Erfindung zu Grunde liegenden Aufgaben werden mit den Merkmalen der unabhängigen Patentansprüche gelöst. Ausführungsformen der Erfindung sind in den abhängigen Ansprüchen angegeben.

Gemäß bevorzugter Ausführungsformen der vorliegenden Erfindung ist das nach Erhalt einer Transaktionsanforderung für einen bestimmten Nutzer erstellte Zertifikat also in seiner Gültigkeit begrenzt. Das Zertifikat ist zum Beispiel nur für wenige Tage, nur für ein elektronisches Dokument oder wenige elektronische Dokumente, oder nur für einen bestimmten Dienstanbieter wie zum Beispiel ein Kaufhaus oder eine bestimmte Bank, gültig. Gemäß weiterer Ausführungsformen der Erfindung gilt das für Signaturzwecke ausgestellte Zertifikat nur für ein einziges Dokument beziehungsweise eine einzige Transaktion, nur für die Durchführung eines einmaligen Schaltprozesses, z.B. das Anschalten der Heizung oder der Öffnung einer Sicherheitstür, etc. Der Nutzer, dem dieses in seiner Gültigkeit begrenzte Zertifikat zugeordnet ist muss also nicht unter Umständen jahrelang auf das ihm zugeordnete Zertifikat beziehungsweise die zugehörigen Signaturschlüssel aufpassen, da besagtes Zertifikat nach einem bestimmten Zeitraum seine Gültigkeit verliert oder ohnehin nur für eine einzige Transaktion beziehungsweise ein im Zuge dieser Transaktion zu signierendes elektronisches Dokument Gültigkeit besitzt. Der Nutzer muss sich also nach Abschluss der Transaktion über den Verbleib seiner Signaturschlüssel beziehungsweise des Speichermediums, auf welchem diese gespeichert sind, keine Sorgen machen. Dadurch können neue Nutzerkreise für digitale Zertifikate und die elektronischer Form der Transaktionsabwicklung gewonnen werden. Die technische Entwicklung im Bereich elektronischer Transaktionen wird beschleunigt, Verwaltungsaufwand und Kosten, die im Zusammenhang mit elektronischen Transaktionen entstehen, werden reduziert, und die Sicherheit vor dem Missbrauch elektronischer Zertifikate und zugehöriger Signaturschlüssel wird deutlich erhöht.

Da Zertifikate gemäß Ausführungsformen der vorliegenden Erfindung in Abhängigkeit von einer bestimmten Transaktionsanforderung bei einem Zertifizierungsdienstanbieter (ZDA) beantragt und speziell für einige oder einige wenige Dokumente erstellt und in ihrer Gültigkeit begrenzt werden, ist das Verfahren zur Erstellung elektronischer Zertifikate gemäß Ausführungsformen der vorliegenden Erfindung besonders sicher. Sowohl das Schlüsselmaterial, welches zur Verschlüsselung und Signierung elektronischer Dokumente Verwendung finden soll, als auch das zugehörige Zertifikat werden spezielle für den jeweiligen Einsatzzweck generiert, so dass die Gültigkeit des Zertifikats zeitlich, funktional, personell, dokumentbezogen und/oder sachbezogen beschränkt ist.

In einem weiteren Aspekt betrifft die vorliegende Erfindung ein ID-Token, welches einem Nutzer zugeordnet ist und geeignet ist für die erfindungsgemäße Erzeugung von Zertifikaten. Ausführungsformen des erfindungsgemäßen ID-Tokens stellen darüber hinaus besonders sichere Speichermedien für die Speicherung der zu Signaturzwecken verwendeten Schlüssel dar, so dass auch im Falle eines Verlusts eines ID-Tokens das in diesem gespeicherte Schlüsselmaterial vor Missbrauch geschützt ist.

Bei dem ID-Token kann es sich zum Beispiel um ein tragbares elektronisches Gerät wie zum Beispiel einen USB-Stick handeln oder um ein Dokument, insbesondere ein Wert- oder Sicherheitsdokument.

Unter einem "Dokument" werden erfindungsgemäß insbesondere papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise. "Elektronische Dokumente" sind dagegen computerlesbare Daten, z.B. Word- oder PDF-Dateien, die mit einer digitalen Signatur versehen werden können.

Digitale Zertifikate sind bei der Absicherung elektronischer Kommunikation durch asymmetrische kryptographische Verfahren ein bewährtes Mittel um die Echtheit und die Zuordnung der kryptographischen Mittel zu einer bestimmten Person nachzuweisen. Zertifikate sind strukturierte Daten, die die Authentizität und/oder weitere Eigenschaften des Eigentümers eines öffentlichen Schlüssels (Signaturprüfschlüssel) dokumentieren und durch eine unabhängige, glaubwürdige Instanz (ZDA) bestätigen. Zertifikate werden in der Regel einem breiten Personenkreis zur Verfügung gestellt um diesem eine Prüfung elektronischer Signaturen auf Authentizität und Gültigkeit zu überprüfen. Ein Zertifikat kann einer elektronischen Signatur zum Beispiel zugeordnet werden, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität (zum Beispiel einer Person, einer Organisation oder einem Energiesystem) zuzuordnen. Je nach Sicherheitsgrad des verwendeten Kryptosystems kann eine elektronische Signatur deshalb auch zum Abschließen rechtsverbindlicher Verträge genutzt werden.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem privaten Schlüssel, welcher zur Verschlüsselung von Daten verwendet wird und im Regelfall geheim gehalten werden muss, und einem öffentlichen Schlüssel, welcher an Dritte - zum Beispiel einen Dienstanbieter und/oder eine ZDA - weitergegeben werden kann. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen.

Digitale Signaturen werden zur sicheren Abwicklung von Geschäften im Internet eingesetzt und ermöglichen die Prüfung der Identität der Vertragspartner und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein. Die Besonderheit einer Signatur besteht darin, dass deren Urheberschaft und Zugehörigkeit zu einer bestimmten Person oder Instanz durch jeden geprüft werden kann.

Mit einer Signatur versehene elektronische Daten erlauben es also, den Urheber bzw. die Person, die die Signatur dieser Daten durchgeführt hat, eindeutig zu identifizieren und die Integrität (Unverfälschtheit durch Dritte) der signierten elektronischen Informationen zu prüfen. Eine "qualifizierte elektronische Signatur" ist eine Signatur welche gemäß den rechtlichen Regelungen innerhalb eines Rechtsgebietes (in Deutschland zum Beispiel entsprechend der in Paragraph 2 Nummer 3 Signaturgesetz getroffenen Regelungen) die Anforderungen an die elektronische Form erfüllt und dadurch geeignet ist, die gesetzlich für manche Transaktionsformen vorgeschriebene Schriftform zu ersetzen. Die Begriffe "elektronische Signatur" beziehungsweise "qualifizierte elektronische Signatur" sind rein rechtlicher Natur. In der Praxis und auch in der vorliegenden Beschreibung der Erfindung werden diese Begriffe jedoch als Synonyme zu dem rein technischen Begriff der "digitalen Signatur" verwendet.

Ausführungsformen der Erfindung beinhalten ein Verfahren zur Erzeugung eines Zertifikats zur Signierung elektronischer Dokumente mittels eines ID-Tokens. Das Verfahren besteht aus den folgenden Schritten:
1. Senden einer Transaktionsanforderung für einen Nutzer zur Durchführung einer Transaktion.
2. Aufgrund der Sendung der Transaktionsanforderung Überprüfung, ob das Zertifikat verfügbar ist, und wenn dies nicht der Fall ist, Ausführung der folgenden Schritte:
3. Erzeugung eines ersten asymmetrischen Schlüsselpaares bestehend aus einem ersten privaten Schlüssel und einem ersten öffentlichen Schlüssel durch das ID-Token, wobei das ID-Token dem Nutzer zugeordnet ist,
4. Speicherung des erzeugten ersten asymmetrischen Schlüsselpaares in dem ID-Token, wobei zumindest der erste private Schlüssel in einem ersten geschützten Speicherbereich des ID-Tokens gespeichert wird,
5. Übertragung des generierten ersten öffentlichen Schlüssels an das erste Computersystem
6. Erzeugung des ersten Zertifikates durch das erste Computersystem für den ersten öffentlichen Schlüssel.

Im Folgenden werden diese Schritte aufgeführt und beispielhaft erläutert.

### 1. Senden einer Transaktionsanforderung für einen Nutzer zur Durchführung einer Transaktion.

Beispiel: Ein Nutzer, der beispielsweise bei einer Online-Bank einen Kreditvertrag über eine bestimmte Summe abschließen möchte, füllt ein HTML Formular, welches von der Bank über das Internet zur Verfügung gestellt wird, aus. Er gibt dabei neben seinen Adressdaten auch Daten hinsichtlich des Kreditvertrages wie etwa Höhe und Dauer des Kredits sowie Rückzahlungsmodalitäten an. Die Transaktionsanforderung wird per http Request an das Computersystem der Bank (zweites Computersystem) übermittelt.

### 2. Aufgrund der Sendung der Transaktionsanforderung Überprüfung, ob das Zertifikat verfügbar ist

Die Überprüfung ob das Zertifikat verfügbar ist, kann dabei seitens des dritten Computersystems, d.h. durch das Nutzer-Computersystem, oder durch das zweite Computersystem, d.h. das Dienst-Computersystem, erfolgen. Gemäß weiterer Ausführungsformen kann die Überprüfung auch durch das erste Computersystem vorgenommen werden. Falls sich aufgrund dieser Überprüfung ergibt, dass ein solches Zertifikat zur nutzerseitigen Signierung von Daten nicht verfügbar ist, wird daraufhin die Erzeugung dieses Zertifikats initiiert.
Das zweite Computersystem, beispielsweise das Computersystem einer Bank, erhält die Transaktionsanforderung und sendet dem Nutzer eine Aufforderung zur elektronischen Signierung von Daten, z.B. eines Dokumentes zu. Gemäß Ausführungsformen der Erfindung wird die Transaktionsanforderung von dem dritten Computersystem an ein zweites Computersystem gesendet und das zweite Computersystem sendet in Antwort darauf eine Signaturanforderung an das dritte Computersystem. Die zu signierenden Daten können z.B. ein elektronisches Dokument, z.B. ein zur Abwicklung der Transaktion erforderliches Vertragsdokument, sein. Es kann sich bei den zu signierenden Daten auch um die Transaktionsanforderung selbst handeln. Die zu signierenden Daten können im Zuge der Signaturanforderung von dem zweiten Computersystem an das dritte Computersystem gesendet werden. Der Empfang der Signaturanforderung durch das dritte Computersystem geschieht als Antwort auf das Senden der Transaktionsanforderung. Die Signaturanforderung kann z.B. dergestalt ablaufen, dass die vom Nutzer an das zweite Computersystem der Bank übermittelten Daten automatisch in einen elektronischen Kreditvertrag-Vordruck einfließen. Der mit den Daten des Nutzers ausgefüllte Kreditvertrags-Vordruck, welcher z.B. in der Form einer formatierten Textdatei vorliegt, kann von dem zweiten Computersystem zum Beispiel in der Form eines E-Mail-Attachements an den Nutzer zusammen mit der Aufforderung zur Signierung des elektronisch ausgefüllten Kreditvertrages zugeschickt werden. Besagte E-Mail könnte also z.B. ein Worddokument oder PDF Dokument mit den vom Nutzer spezifizierten Daten beinhalten. Alternativ könnte dem Nutzer auch lediglich eine Aufforderung zur Signierung eines von dem Nutzer auszufüllenden elektronischen Kreditvertrags z.B. per E-Mail zugehen, wobei in dieser E-Mail ein Link zum Downloaden eines entsprechenden Vertragstemplates enthalten ist.

Unter "Signaturanforderung" wird im Folgenden jegliche Art von elektronisch oder auf anderem Wege übermittelter Anfrage zur Signierung von Daten, deren Signierung zur Durchführung der in der Transaktionsanforderung angeforderten Transaktion notwendig ist, bezeichnet. Die Signaturanforderung beinhaltet eine Anfrage zur Signierung von Daten, z.B. eines elektronischen Dokumentes, durch die Verschlüsselung dieser Daten oder eines von diesen abgeleiteten Wertes, z.B. eines Hash-Wertes, mit einem privaten Signaturschlüssel. Der private Signaturschlüssel bildet mit einem öffentlichen Signaturprüfschlüssel ein asymmetrisches Schlüsselpaar, wobei für den öffentlichen Signaturprüfschlüssel ein von einer ZDA ausgestelltes Zertifikat die Authentizität des Absenders sowie die Unverfälschtheit der signierten Daten und die Zugehörigkeit des zur Signierung verwendeten öffentlichen Schlüssels zum Sender der signierten Daten belegt. Die Signaturanforderung kann die zu signierenden Daten bereits beinhalten oder die Signaturanforderung signalisiert lediglich, dass für die Durchführung der angeforderten Transaktion die Signierung von Daten erforderlich ist. Diese Daten können nutzerseitig generiert und/oder gespeichert sein oder zu dem Nutzer-Computersystem übertragen werden.

Falls die Überprüfung ergeben hat, dass kein geeignetes Zertifikat für die angeforderte Transaktion zur Verfügung steht, Ausführung der folgenden Schritte:

### 3. Authentifizierung des Nutzers gegenüber dem ID-Token

Gemäß bevorzugter Ausführungsformen der Erfindung muss sich der Nutzer des ID-Tokens vor der Nutzung bestimmter auf diesem ID-Token spezifizierter Funktionen bei dem ID-Token authentifizieren. Nach bevorzugten Ausführungsformen der Erfindung authentifiziert sich ein Nutzer dadurch als berechtigt, dass er die Kenntnis eines bestimmten Authentisierungsdatums, zum Beispiel eines Passwortes oder einer PIN, nachweist. Je nach Ausführungsform kann der ID-Token eine Mindestlänge beziehungsweise Mindestkomplexität für das Passwort oder die PIN vorsehen. Der Nutzer hat die Authentisierungsdaten so zu verwalten, dass er alleine die Authentisierungsdaten kennt. Nach weiteren Ausführungsformen wird der ID-Token mit einer Initialen Transport PIN ausgestattet, welche von dem Nutzer vor dem ersten Gebrauch des ID-Tokens zur Signierung elektronischer Dokumente durch eine operationelle Signatur-PIN ersetzt werden muss.

Nach weiteren Ausführungsformen der Erfindung kann die Sicherheit der Authentifizierung des Nutzers bei dem ID-Token durch Verwendung weiterer Sicherheitsmerkmale erhöht werden. So kann zur Authentifizierung des Nutzers bei dem ID-Token zum Beispiel die Verwendung biometrischer Merkmale, zum Beispiel eines Fingerabdrucks des Nutzers, eine für jeden Nutzer spezifische Tastenanschlagfrequenz, ein Iris-Bild oder dergleichen erforderlich sein. Gemäß weiteren Ausführungsformen kann der ID-Token eine PUK zum Entsperren von Authentisierungsdaten beinhalten. Gemäß weiteren Ausführungsformen kann die Authentifizierung eines Nutzers bei dem ID-Token die Eingabe einer so genannten "Card Access Number" (CAN) erfordern, welche den Nutzer als unmittelbaren Besitzer des ID-Tokens ausweist.

Gemäß weiteren Ausführungsformen kann außerdem die korrekte Eingabe einer zweiten PIN zur Authentifizierung des Nutzers bei dem ID-Token erforderlich sein, wobei die Eingabe der zweiten PIN nur nach erfolgreicher Eingabe der ersten PIN möglich ist, wobei es sich bei der zweiten PIN um eine durch den Nutzer spezifizierte Signatur-PIN handelt. Nach weiteren Ausführungsformen der Erfindung wird die Signatur-PIN vor jeder Datensignierung mittels des ID-Tokens durch den Nutzer neu gesetzt.

Nach einer Ausführungsform der Erfindung beinhaltet das ID-Token sowohl Funktionen zum Nachweis der Identität eines Nutzers als auch eine Signaturfunktion. Gemäß dieser Ausführungsform erfordert die Nutzung des ID-Tokens als Identitätsnachweis die erfolgreiche Eingabe der ersten PIN. Wird vom Nutzer zudem das ID-Token für Signaturzwecke verwendet, muss der Nutzer zusätzlich noch eine zweite PIN, die Signatur-PIN, richtig eingeben, und dadurch die Signaturfunktionalität des ID-Tokens entsperren.

Welche Authentisierungsdaten für eine bestimmte Ausführungsform der Erfindung im Einzelnen erforderlich sind hängt von den Sicherheitsanforderungen des jeweiligen ID-Tokens ab.

### 4. Authentifizierung eines ersten Computersystems gegenüber dem ID-Token

Nach einer Ausführungsform der Erfindung handelt es sich bei dem ersten Computersystem um ein Computersystem eines behördlich zertifizierten Trust-Centers, insbesondere ein Signaturgesetz-konformen Trust-Centers, und wird im Folgenden als "ID-Provider-Computersystem" bezeichnet. Bei dem ID-Provider-Computersystem kann es sich beispielsweise um ein Computersystem eines Zertifizierungsdiensteanbieters (ZDA), auch Certification Service Provider (CSP) genannt, oder um ein Computersystem einer Zertifizierungsstelle (CA) handeln. Eine Zertifizierungsstelle (CA) ist ein Herausgeber von Zertifikaten. Ein Zertifizierungsdiensteanbieter (ZDA) ist Herausgeber von Zertifikaten und den zugehörigen Dienstleistungen. Zu diesen Dienstleistungen gehört z. B. die Herausgabe von Sperrlisten, das Führen eines Verzeichnisdienstes, etc. Ein ZDA bildet eine vertrauenswürdige Stelle, die Zertifikate herausgibt und die Prüfung digitaler Signaturen auf Unverfälschtheit und die sichere Zuordnung digitaler Signaturen zu einem Nutzer ermöglicht.

Gemäß weiterer Ausführungsformen der Erfindung muss im Zuge der Authentifizierung des ersten Computersystems gegenüber dem ID-Token zunächst ein sicherer Kommunikationskanal aufgebaut werden. Dies ist zum Beispiel durch Verwendung verschiedener asymmetrischer kryptographischer Protokolle möglich. Nach einer weiteren Ausführungsform wird ein sicherer Kommunikationskanal zwischen dem ersten Computersystem und dem ID-Token hergestellt. Die Verbindung zwischen dem ID-Token und dem ersten Computersystem kann dabei bevorzugt über ein Netzwerk, insbesondere das Internet, aufgebaut werden.

Nach einer Ausführungsform der Erfindung beinhaltet die Authentifizierung des ersten Computersystems am ID-Token die Überprüfung durch das ID-Token, ob das erste Computersystem Lese- beziehungsweise Schreib-Rechte für den Datenspeicher des ID-Tokens besitzt. Falls der ID-Token mehrere Speicherbereiche mit unterschiedlichen Zugangsrechten besitzt kann dieser Schritt auch mehrfach für jeden einzelnen Speicherbereich ausgeführt werden. Gemäß weiteren Ausführungsformen besitzt das erste Computersystem zumindest ein zweites Zertifikat, welches zur Authentifizierung des ersten Computersystems gegenüber dem ID-Token verwendet wird. Das zweite Zertifikat beinhaltet eine Angabe derjenigen Attribute, für welche das erste Computersystem eine Leseberechtigung und/oder Schreibberechtigung hat. Der ID-Token prüft anhand dieses zweiten Zertifikats, ob das erste Computersystem die erforderliche Leseberechtigung für den Lesezugriff auf das Attribut hat, bevor ein solcher Lesezugriff durch das erste Computersystem durchgeführt werden kann.

Erfindungsgemäße ID-Token, bei welchen es sich um behördliche Ausweise, zum Beispiel um Reisepässe oder Personalausweise handelt, sind besonders vorteilhaft, da ein oder mehrere Attribute aus einem besonders vertrauenswürdigen Dokument ausgelesen werden können. Diese Attribute können zum Nachweis der Identität des Nutzers dienen (Funktion des ID-Tokens als Identitätsnachweis). Diese Attribute können aber auch dazu dienen, die Zugehörigkeit des Nutzers zu einer bestimmten für eine Dienstleistung zugelassenen Nutzergruppe nachzuweisen (z.B. Altersnachweisfunktion). Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung kann der Schritt der Authentifizierung des ersten Computersystems bei dem ID-Token durch ein zweites Computersystem initiiert werden. Diese Initiierung kann beispielsweise dadurch erfolgen, dass das zweite Computersystem einen Link zu einer entsprechenden Funktionalität des ersten Computersystems bereitstellt. Besagter Link kann also zum Beispiel auf eine von einem Server eines Trustcenters über das Internet bereitgestellte Funktionalität zur Erstellung eines Zertifikates verweisen. Der Nutzer kann mittels besagter Funktionalität veranlassen, dass sich das erste Computersystem des Trustcenters bei dem dem Nutzer zugeordneten ID-Token authentifiziert.

Bei dem zweiten Computersystem kann es sich zum Beispiel um einen Server zur Erbringung eines Online-Dienstes oder eines sonstigen Dienstes, wie zum Beispiel einer Bankdienstleistung, oder eines Dienstes zur Bestellung eines Produkts handeln.

### 5. Erzeugung eines ersten asymmetrischen Schlüsselpaares bestehend aus einem ersten privaten Schlüssel und einem ersten öffentlichen Schlüssel durch das ID-Token

Das ID-Token ist einem Nutzer zugeordnet, das heißt, der Nutzer verfügt über die Möglichkeit, sich bei dem ID-Token als berechtigter Nutzer auszuweisen, z.B. mittels einer PIN und/oder biometrischer Daten. Durch Verwendung geeigneter kryptographischer Algorithmen zur Erzeugung des asymmetrischen Schlüsselpaares wird eine Rekonstruktion des privaten Schlüssels aus dem öffentlichen Schlüssel oder aus dem verschlüsselten beziehungsweise signierten elektronischen Dokument ausgeschlossen. Die Algorithmen zur Erzeugung des asymmetrischen Schlüsselpaares sind auf dem ID-Token gespeichert und können von dem Prozessor des ID-Tokens ausgeführt werden.

Als Verschlüsselungsalgorithmen können zum Beispiel RSA Verfahren, Rabin- und Elgamal-Kryptosysteme oder auf elliptischen Kurven basierende kryptographische Algorithmen Verwendung finden.

Das vom ID-Token erzeugte asymmetrische Schlüsselpaar kann zum Beispiel zur Signierung von elektronischen Dokumenten verwendet werden. In diesem Fall spricht man bei dem privaten Schlüssel oft auch von einem "Signaturschlüssel", bei dem öffentlichen Schlüssel von einem "Signaturprüfschlüssel".

Nach weiteren Ausführungsformen der Erfindung beinhaltet der Schritt der Überprüfung, ob bereits ein geeignetes erstes Zertifikat vorhanden ist, welches für die angeforderte Transaktion Gültigkeit besitzt, auch die Überprüfung, ob auf dem ersten geschützten Speicherbereich des ID-Tokens ein diesem Zertifikat zugehöriges asymmetrisches Schlüsselpaar vorhanden ist. Gemäß dieser Ausführungsform werden das erste asymmetrische Schlüsselpaar und das erste Zertifikat nur dann erstellt, wenn auf dem Speichermedium des ID-Tokens kein asymmetrischen Schlüsselpaar mit zugehörigem, für die Transaktion gültigen, Zertifikat, gespeichert ist.

Falls auf dem Speichermedium des ID-Tokens lediglich ein erstes asymmetrisches Schlüsselpaar gespeichert ist, dessen zugehöriges Zertifikat nicht mehr gültig ist beziehungsweise für die angeforderte Transaktion keine Gültigkeit besitzt, wird also ein neues erstes asymmetrisches Schlüsselpaar generiert und auf dem Speichermedium des ID-Tokens beziehungsweise in geeigneten Speicherbereichen dieses Speichermediums gespeichert.

Gemäß weiterer Ausführungsformen der Erfindung kann die Gesamtzahl der auf dem ID-Tokens gespeicherten ersten asymmetrischen Schlüsselpaare durch den Nutzer auf eine bestimmte Zahl begrenzt werden.

### 6. Speicherung des erzeugten ersten asymmetrischen Schlüsselpaares auf dem ID-Token, wobei zumindest der erste private Schlüssel auf einem geschützten Speicherbereich des ID-Tokens gespeichert wird

Die Speicherung des erzeugten ersten privaten Schlüssels in einem ersten geschützten Speicherbereich des ID-Tokens gewährleistet, dass dieser erst nach einer erfolgreichen Authentifizierung eines Nutzers des ID-Tokens bei dem ID-Token sowie einer erfolgreichen Authentifizierung eines dritten Computersystems durch das ID-Token zur Signierung elektronischer Dokumente verwendet werden kann. Bei dem dritten Computersystem handelt es sich gemäß bevorzugter Ausführungsformen der Erfindung um ein dem Nutzer zugeordnetes Computersystem, zum Beispiel dessen Notebook oder dessen Desktop Rechner. Der Nutzer empfängt über das dritte Computersystem elektronische Dokumente zur Signatur und kann diese vermittels des auf dem ID-Token gespeicherten ersten privaten Schlüssels signieren. Das Erfordernis doppelter Authentifizierung (durch den Nutzer sowie durch das dritte Computersystem) bei dem ID-Token zur Erstellung einer elektronischen Signatur mit dem privaten Schlüssel gewährleistet, dass die in dem ID-Token gespeicherten Schlüssel, insbesondere erste private Schlüssel, nicht von Unberechtigten ausgelesen und zur Signatur von elektronischen Dokumenten verwendet werden können.

### 7. Übertragung des generierten ersten öffentlichen Schlüssels an das erste Computersystem

Das erste Computersystem empfängt den generierten ersten öffentlichen Schlüssel von dem ID-Token. Nach bevorzugten Ausführungsformen der Erfindung geschieht dies über einen sicheren Kommunikationskanal, der z.B. durch Ende-zu-Ende Verschlüsselung der Datenübertragung zwischen ID-Token und erstem Computersystem aufgebaut wird. Die Authentizität des gelesenen ersten öffentlichen Schlüssels ergibt sich dabei zumindest dadurch, dass die Datenübertragung auf einem sicheren Kommunikationskanal, zum Beispiel einen so genannten "Secure-Messaging" Kommunikationskanal, stattfindet.

### 8. Erzeugung des ersten Zertifikates mit einer Gültigkeit für die angeforderte Transaktion durch das erste Computersystem für den ersten öffentlichen Schlüssel.

Das erste Computersystem, zum Beispiel ein Trust-Center, stellt nun ein erstes digitales Zertifikat, zum Beispiel ein qualifiziertes erstes digitales Zertifikat, für den gelesenen öffentlichen Schlüssel aus. Gemäß Ausführungsformen der Erfindung wird das ausgestellte erste digitale Zertifikat öffentlich abrufbar bereitgestellt. Dadurch ist es beliebigen Dritten möglich, den öffentlichen Schlüssel dem Nutzer, dem das ID-Token zugeordnet ist, zuzuordnen und den die Gültigkeit des öffentlichen Schlüssels sowie die Gültigkeit der Signaturen, die mit dem öffentlichen Schlüssel zugehörenden privaten Schlüssel erstellt wurden, zu prüfen.

Nach weiteren Ausführungsformen der Erfindung kann das so generierte erste digitale Zertifikat auf dem geschützten oder einem weiteren Speicherbereich des ID-Tokens gespeichert werden.

Das erste digitale Zertifikat kann in manchen Ausführungsformen der Erfindung über den sicheren Kommunikationskanal in Kopie auf das ID-Token übertragen und dort auf dem Speichermedium des ID-Tokens gespeichert werden.

### Signierung eines elektronischen Dokumentes

Nach weiteren Ausführungsformen der Erfindung können die zu signierenden Daten mittels des erzeugten ersten asymmetrischen Schlüsselpaares elektronisch signiert werden, indem zunächst die zu signierenden Daten, z.B. ein zu signierendes elektronisches Dokument, durch ein drittes Computersystem des Nutzers empfangen werden.

Bei dem dritten Computersystem handelt es sich bei dieser und weiteren Ausführungsformen z.B. um einen Personalcomputer, einen tragbaren Computer, wie zum Beispiel einen Laptop oder Palmtop-Computer, ein Notebook, ein Netbook, einen Personal Digital Assistant, ein mobiles Telekommunikationsgerät, insbesondere ein Smart Phone, oder dergleichen. Im Regelfall, jedoch nicht notwendigerweise, ist das dritte Computersystem dem Nutzer des ID Tokens zugeordnet.

In einem weiteren Schritt erfolgt die Authentifizierung des dritten Computersystems gegenüber dem ID-Token. In weiteren Ausführungsformen der Erfindung kann die Authentifizierung des dritten Computersystems gegenüber dem ID-Token basierend auf dem vom Bundesamt für Sicherheit in der Informationstechnik (BSI) entwickelten kryptografischen PACE-Authentisierungsprotokolls durchgeführt werden.

Das erfindungsgemäße Verfahren zur Signierung eines elektronischen Dokumentes gemäß weiterer Ausführungsformen der Erfindung beinhaltet die folgenden Schritte: Empfang der zu signierenden Daten von einem zweiten Computersystem durch ein drittes Computersystem, Authentifizierung des dritten Computersystems gegenüber dem ID-Token, Authentifizierung des Nutzers gegenüber dem ID-Token, nach erfolgreicher Authentifizierung des Nutzers und des dritten Computersystems beim ID-Token, Senden der zu signierenden Daten oder eines von diesen abgeleiteten Wertes sowie eines Befehls zur Signierung der an das ID-Token gesendeten Daten durch das dritte Computersystem an das ID-Token, Signierung der gesendeten Daten mit dem ersten privaten Schlüssel durch das ID-Token, und Übertragung der signierten Daten vom ID-Token an das dritte Computersystem. Von dort aus können die signierten Daten dann z.B. an ein zweites Computersystem eines Dienstes weitergeleitet werden.

Die Authentifizierung des Nutzers gegenüber dem ID-Token kann dabei zum Beispiel durch Eingabe einer ersten PIN, die dem Nutzer zugeordnet ist, erfolgen. Gemäß weiterer Ausführungsformen der Erfindung erfolgt die Authentifizierung des Nutzers gegenüber dem ID-Token durch Eingabe einer ersten und mindestens einer zweiten PIN, wobei die erste und die mindestens eine zweite PIN dem Nutzer zugeordnet sind und wobei die Eingabe der mindestens einen zweiten PIN nur nach erfolgreicher Eingabe der ersten PIN erfolgen kann. Ausführungsformen der Erfindung, gemäß welcher der ID-Token als Sicherheitsdokument, zum Beispiel als behördlicher Personalausweis oder Reisepass ausgebildet ist, verfügen beispielsweise über eine erste PIN zur Authentifizierung des Nutzers gegenüber dem ID-Token, die so genannte eID-PIN. Besagte Ausführungsformen verfügen ferner über mindestens eine weitere zweite PIN, die so genannte "eSign PIN" oder "Signatur-PIN", welche erst nach erfolgreicher Eingabe der eID PIN eingegeben werden kann und nach erfolgreicher Eingabe die Signaturfunktionalität des ID-Tokens entsperrt.

Gemäß weiterer Ausführungsformen der Erfindung beinhaltet das Verfahren ferner die Schritte der Übertragung der signierten Daten sowie des ersten öffentlichen Schlüssels vom ID-Token an das dritte Computersystem, der Übertragung der signierten Daten und je nach Ausführungsform der Erfindung auch des ersten öffentlichen Schlüssels vom dritten Computersystem an das zweite Computersystem, sowie der Überprüfung der Signatur des signierten Daten durch das zweite Computersystem, indem das zweite Computersystem beispielsweise den ersten öffentlichen Schlüssel in einer Zertifikat-Prüfungsanfrage an das erste Computersystem sendet und von dem ersten Computersystem das zu dem öffentlichen Schlüssel zugehörige erste Zertifikat anfordert.

Das erste Computersystem, welches das dem ersten öffentlichen Schlüssel des ersten asymmetrischen Schlüsselpaares zugeordnete erste Zertifikat öffentlich verfügbar macht, kann das erste Zertifikat zum Beispiel zusammen mit dem diesem ersten Zertifikat zugeordneten ersten öffentlichen Schlüssel als Hash-Map speichern, so dass für jeden bekannten ersten öffentlichen Schlüssel sehr schnell ein zugehöriges erstes Zertifikat abrufbar ist. Dies ermöglicht es jedem Dritten, zum Beispiel einem Kaufhaus oder Bankinstitut, signierte elektronische Dokumente über deren zugeordnete erste öffentlichen Schlüssel auf deren Authentizität und Validität zu prüfen, indem von dem ersten Computersystem ein zugehöriges erstes Zertifikat angefordert wird.

Das dritte Computersystem, zum Beispiel ein Notebook des Nutzers, hat typischerweise einen üblichen Internetbrowser installiert, mit welchem der Nutzer eine Webseite des zweiten Computersystems (zum Beispiel Webseite einer Bank) öffnen und damit eine Transaktionsanforderung initiieren kann. Die Transaktionsanforderung kann zum Beispiel eine Bestellung eines Dienstes oder einer Ware sein.

Das zweite Computersystem spezifiziert nach weiteren Ausführungsformen der Erfindung daraufhin zumindest einen ersten Datenwert. Nach Ausführungsformen der Erfindung ist dieser erste Datenwert den zu signierenden Daten, z.B. einem zu signierenden elektronischen Dokument, zugeordnet und beinhaltet zum Beispiel die Kundennummer des Nutzers, eine Auftragsnummer für die angeforderte Transaktion, ein Identifikator des Betreibers eines Computersystems, welches die Signaturanforderung versendet, z.B. eine Partnernummer, ein Identifikator des Computersystems, welches die Signaturanforderung versendet, z.B. eine MAC-Adresse, oder eine Dokumentennummer für ein angefordertes elektronisches Dokument. Der erste Datenwert kann auch ein von besagten Werten abgeleiteter Wert sein, zum Beispiel ein Hashwert der Kundennummer, Auftragsnummer oder Dokumentennummer bzw. ein Hashwert des Inhalts des gesamten elektronischen Dokumentes. Enthält das elektronische Dokument eine Vorgangsnummer, so ist allein dadurch schon mit sehr hoher Wahrscheinlichkeit garantiert, dass der abgeleitete Hash-Wert einmalig und dokumentspezifisch ist. Der erste Datenwert wird von dem ersten Computersystem zur Begrenzung der Gültigkeit des erstellten ersten Zertifikates genutzt, und der erste Datenwert wird für die Durchführung der angeforderten Transaktion spezifiziert. Die Gültigkeit des durch das ersten Computersystem erzeugten Zertifikates wird gemäß Ausführungsformen der Erfindung dadurch beschränkt, dass das erstellte Zertifikat zusätzlich den Datenwert beinhaltet und dieser in das Zertifikat integrierte Wert bei der Zertifikats-Prüfung berücksichtigt wird.

Gemäß weiteren Ausführungsformen handelt es sich bei dem erstellten ersten Zertifikat um ein transaktionsgebundenes Zertifikat, dessen Gültigkeit auf die angeforderte Transaktion beschränkt ist. Gemäß Ausführungsformen der Erfindung wird die Transaktionsgebundenheit dadurch erzielt, dass der erste Datenwert in Antwort auf das Senden einer Transaktionsanforderung spezifiziert wird und einen Datenwert, welcher Bestandteil der im Zuge der durchzuführenden Aktion zu signierenden Daten ist oder mit den zu signierenden Daten identisch ist oder von den zu signierenden Daten abgeleitet ist, darstellt. Bei dem ersten Datenwert kann es sich z.B. um eine Dokumentennummer oder Vorgangsnummer handeln, welche erst nach Erhalt einer Transaktionsanforderung eines dritten Computersystems an ein zweites Computersystem von dem zweiten Computersystem speziell für die angeforderte Transaktion erstellt wurde. Der erste Datenwert wird im Zuge der Zertifikatsübertragung oder bei einer anderen Gelegenheit von dem zweiten an das erste Computersystem übermittelt, wo es er durch das erste Computersystem in das zu erstellende Zertifikat integriert wird. In Folge der Integration ist der erste Datenwert Bestandteil des spezifizierten Zertifikates. Das zweite Computersystem ist dadurch in der Lage, im Zuge der Prüfung einer digitalen Signatur zu untersuchen, ob dieser erste Datenwert Bestandteil desjenigen transaktionsgebundenen ersten Zertifikates ist, welches dem zu der untersuchten Signatur zugehörigen öffentlichen Schlüssel Gültigkeit verleiht. Da die Dokumentennummer, ggf. in Kombination mit weiteren Daten wie etwa dem Namen des Dienstes, gemäß besagter Ausführungsformen einmalig für die angeforderte Transaktion ist, ist es also möglich, transaktionsgebundene Zertifikate zu erstellen.

Nach weiteren Ausführungsformen der Erfindung kann der erste Datenwert auch einen Zeitraum beinhalten, für welchen ein auszustellendes Zertifikat Gültigkeit besitzen soll. Der erste Datenwert kann alternativ oder zusätzlich ein bestimmtes Geschäftsgebiet und/oder bestimmte juristische Instanzen oder Vorgangsarten bezeichnen, für welchen das auszustellende erste Zertifikat gültig sein soll. Der besagte erste Datenwert kann auch aus einer Kombination besagter Werte bestehen.

Der erste Datenwert hat die Funktion, dass das basierend auf dem ersten Datenwert von dem ersten Computersystem ausgestellte erste Zertifikat in seiner Gültigkeit begrenzt wird. Je nach Ausprägungsform und Inhalt des ersten Datenwerts kann das Auszustellende Zertifikat also auf einen bestimmten Zeitraum und/oder einen oder mehrere bestimmte Dienstleister und/oder einen oder mehrere bestimmte Dokumente beschränkt sein. Durch Kombination mehrerer beschränkender Spezifikationen ist es zum Beispiel möglich, ein Zertifikat auszustellen, welches nur für ein bestimmtes elektronisches Dokument mit einer bestimmten Dokumentennummer und dies auch nur innerhalb eines befristeten Zeitraumes gültig ist.

Digitale Zertifikate können z.B. Informationen zu dem Nutzer, dem ein Zertifikat zugeordnet ist, enthalten. Die Informationen zu dem Nutzer können sich auf eine natürliche oder juristische Person beziehen. Die in einem digitalen Zertifikat enthaltenen Angaben bzw. Informationen können außerdem zum Beispiel den Namen des Zertifikats-Ausstellers (ZDA), Informationen zu den Regeln und Verfahren, unter denen das Zertifikat ausgegeben wurde und/oder Informationen zur Gültigkeitsdauer des Zertifikates enthalten. Besagte Angaben bzw. Informationen können den öffentlichen Schlüssel, zu dem das Zertifikat Angaben macht, beinhalten und/oder den Namen oder eine andere eindeutige Bezeichnung des Eigentümers des öffentlichen Schlüssels, sowie verschiedene weitere Informationen zum Eigentümer des öffentlichen Schlüssels. Ein digitales Zertifikat kann außerdem eine digitale Signatur der das Zertifikat ausstellenden Instanz über eine oder mehrere der vorher genannten Informationen beinhalten. Dadurch, dass gemäß bevorzugten Ausführungsformen der Erfindung ein transaktionsspezifischer Wert, zum Beispiel eine Dokumentennummer, als weiteres Attribut in dem Zertifikat enthalten ist, ist es beispielsweise einem Dienstleister, welcher ein elektronisches Dokument zur Signatur bereitstellt, möglich, zu überprüfen, ob das Zertifikat, welches zu einem empfangenen signierten Dokument gehört, auch wirklich diese dokumentspezifische Informationen aufweist. Falls dies nicht der Fall ist, wird das Zertifikat und das zugehörige signierte Dokument nicht als gültig erachtet.

Dieser erste, vom zweiten Computersystem bestimmte Datenwert wird für den Zweck der Erstellung eines Zertifikates mit begrenzter Gültigkeit von dem zweiten Computersystem an das erste Computersystem gesendet. Je nach Ausführungsform der Erfindung kann dies mit oder ohne Zwischenschaltung des dritten Computersystems erfolgen. Im ersteren Fall kann der Nutzer das gewünschte erste Computersystem gegenüber dem zweiten Computersystem spezifizieren, beispielsweise durch Eingabe der URL des ersten Computersystems in eine Webseite des zweiten Computersystems von dem dritten Computersystem aus. Im letzteren Fall müssen zusätzlich zu dem vom zweiten auf das erste Computersystem übertragenen ersten Datenwert weitere Daten an das erste Computersystem gesendet werden, welche es dem ersten Computersystem ermöglichen, den empfangenen ersten Datenwert einem zu erstellenden ersten digitalen Zertifikat zuzuordnen.

Nach einer Ausführungsform der Erfindung beinhaltet die Transaktions-Anforderung des Nutzers an das zweite Computersystem die Angabe eines Identifikators, wobei der Identifikator das erste Computersystem identifiziert. Beispielsweise handelt es sich bei dem Identifikator um einen Link, beispielsweise eine URL des ersten Computersystems.

Nach einer Ausführungsform der Erfindung erhält das zweite Computersystem eine Transaktionsanforderung von dem dritten Computersystem und sendet nach dem Erhalt dieser Transaktionsanforderung eine Signaturanforderung an das dritte Computersystem. Diese Signaturanforderung beinhaltet gemäß weiterer Ausführungsformen der Erfindung Daten, deren Signierung durch einen dem Nutzer zugeordneten öffentlichen Schlüssel für die Durchführung der angeforderten Transaktion notwendig ist, z.B. ein oder mehrere zu signierende elektronische Dokumente beziehungsweise Angaben zum Bezug einer oder mehrerer zu signierender elektronischen Dokumente. Diese Angaben können beispielsweise als Link zu einer Internetseite ausgebildet sein, welche die zu signierenden elektronischen Dokumente bereitstellt. Die Signaturanforderung beinhaltet gemäß weiterer Ausführungsformen der Erfindung ferner den ersten Datenwert zur Begrenzung der Gültigkeit des für die angeforderte Transaktion auszustellenden ersten digitalen Zertifikates. Dieser Datenwert kann aber auch mit einer anderen Nachricht von dem zweiten Computersystem über das dritte Computersystem an das erste Computersystem oder unmittelbar ohne Zwischenschaltung des dritten Computersystems an das erste Computersystem übertragen werden.

Gemäß weiteren Ausführungsformen wird der erste Datenwert nicht im Zuge der Signaturanforderung von dem zweiten an das dritte Computersystem gesendet.

Nach Erhalt der Signaturanforderung durch das dritte Computersystem erfolgt zunächst eine Prüfung, ob in dem dem Nutzer zugeordneten ID-Tokens ein asymmetrisches Schlüsselpaar gespeichert ist mit einem öffentlichen Schlüssel, dem ein Zertifikat zugeordnet ist, welches die Gültigkeit des öffentlichen Schlüssels für die angeforderte Transaktion bestätigt. Falls kein gültiges Zertifikat vorhanden ist, wird eine Nachricht von dem dritten an das zweite Computersystem gesendet, welche beinhaltet, dass kein für die angeforderte Transaktion verwendbares Zertifikat vorliegt. Nach Empfang dieser Nachricht durch das zweite Computersystem sendet dieses den ersten Datenwert an das dritte Computersystem.

Das dritte Computersystem empfängt den ersten Datenwert und authentifiziert sich bei dem ID-Token. Nach erfolgreicher Authentifizierung des ersten Computersystems sowie des dem ID-Token zugeordneten Nutzers wird zumindest der erste Datenwert an das ID-Token übermittelt. Gemäß Ausführungsformen der Erfindung sendet das erste Computersystem einen Befehl zur Generierung eines ersten asymmetrischen Schlüsselpaares. Das erste asymmetrische Schlüsselpaar wird durch von einem Prozessor ausführbare Programminstruktionen des ID-Tokens erzeugt. Der generierte erste öffentliche und erste private Schlüssel, welche zusammen ein erstes asymmetrisches kryptographisches Schlüsselpaar bilden, werden auf dem ID-Token in geeigneten Speicherbereichen des Speichermediums gespeichert. Zumindest der erste öffentliche Schlüssel und der erste Datenwert werden an das erste Computersystem übertragen. Das erste Computersystem stellt für den empfangenen ersten öffentlichen Schlüssel ein erstes Zertifikat aus. Das generierte erste Zertifikat ist dabei in seiner Gültigkeit entsprechend den Angaben des empfangenen ersten Datenwertes beschränkt. Gemäß weiterer Ausführungsformen der Erfindung kann das generierte erste Zertifikat an das ID-Token zurückübertragen und auf diesem gespeichert werden.

Falls ein entsprechendes erstes asymmetrisches Schlüsselpaar und zugehöriges, für die angeforderte Signierung gültiges Zertifikat bereits auf dem ID-Token gespeichert ist, unterbleibt die Erzeugung eines ersten asymmetrischen Schlüsselpaares und zugehörigen ersten Zertifikates. In diesem Fall wird eine Meldung, dass ein gültiges asymmetrisches Schlüsselpaar bereits auf dem ID-Token vorhanden ist an das erste Computersystem gesendet.

Der sichere Kommunikationskanal zwischen dem ID-Token und dem ersten Computersystem kann nun getrennt werden.

Durch die beschriebenen Schritte ist sichergestellt, dass sich nun zumindest ein erstes asymmetrisches Schlüsselpaar, welches zur Signierung elektronischer Dokumente geeignet ist, auf dem ID-Token befindet. Um nun mit Hilfe des ersten privaten Schlüssels ein Dokument signieren zu können, sind noch weitere Schritte erforderlich:
Das dritte Computersystem muss sich bei dem ID-Token als berechtigt zur Initiation einer elektronischen Signatur authentifizieren. Ferner muss sich der Nutzer bei dem ID-Token gemäß eines der zuvor beschriebenen Authentifizierungsverfahren als zur Signaturerstellung berechtigt authentifizieren.

Das dritte Computersystem sendet die zu signierenden Daten oder einen von diesen abgeleiteten Wert, z.B. einen Hashwert eines zu signierenden elektronischen Dokuments sowie einen Befehl zur Signierung der gesendeten Daten an das ID-Token.

Gemäß weiteren Ausführungsformen können die zu signierenden Daten auch bereits während des Schrittes der Überprüfung auf Vorhandensein geeigneter erster asymmetrischer Schlüssel auf dem ID-Token an der ID-Token gesendet werden.

Der ID-Token verfügt über geeignete Algorithmen zur Verschlüsselung der empfangenen zu signierenden Daten durch den privaten Schlüssel des ersten asymmetrischen Schlüsselpaares. Durch die Verschlüsselung der an das ID-Token übertragenen Daten mit dem privaten Schlüssel des ersten asymmetrischen Schlüsselpaares werden die zur Durchführung der Transaktion zu signierenden Daten signiert.

Die vom ID-Token signierten Daten werden im nächsten Schritt an das dritte Computersystem übermittelt. Gemäß Ausführungsformen der Erfindung wird im Zuge dieser Übertragung auch der öffentliche Schlüssel des ersten asymmetrischen Schlüsselpaares an das dritte Computersystem übertragen. Das dritte Computersystem leitet die vom ID-Token empfangenen, signierten Daten sowie, gemäß mancher Ausführungsformen, auch den zugehörigen ersten öffentlichen Schlüssel an das zweite Computersystem weiter.. Nach weiteren Ausführungsformen der Erfindung wird im Falle eines Fehlschlagens der Signierung eine Fehlermeldung von dem ID-Token an das dritte Computersystem weitergegeben.

Nach weiteren Ausführungsformen der Erfindung kann der Nutzer die signierten Daten vor deren Weiterleitung an das zweite Computersystem durch weitere Daten ergänzen.

Nach Empfang der signierten Daten und ggf. des zugehörigen ersten öffentlichen Schlüssels durch das zweite Computersystem hat das zweite Computersystem die Möglichkeit, die Authentizität und Validität der Signatur der empfangenen signierten Daten zu überprüfen. Dies kann dadurch geschehen, dass das zweite Computersystem eine Anfrage zur Überprüfung der Gültigkeit des dem ersten öffentlichen Schlüssel zugeordneten ersten Zertifikates, eine sog. "Zertifikat-Prüfungsanfrage", an das erste Computersystem sendet, wobei diese Anfrage zumindest den empfangenen öffentlichen Schlüssel beinhaltet.

Die "Zertifikat-Prüfungsanfrage" enthält den öffentlichen Schlüssel, der dem zu prüfenden Zertifikat zugeordnet ist. Die Zuordnung von öffentlichem Schlüssel zu einem Zertifikat bedeutet, dass der private Schlüssel, der zur Signierung der zu signierenden Daten verwendet wurde, und der öffentliche Schlüssel ein asymmetrisches kryptographisches Schlüsselpaar bilden, wobei das dem öffentlichen Schlüssel zugeordnete Zertifikat Eigenschaften des öffentlichen Schlüssels bestätigt. Der Empfang der Zertifikats-prüfungsanfrage durch das erste Computersystem bewirkt, dass das erste Computersystem prüft, ob ein erstes Zertifikat verfügbar ist, welches dem öffentlichen Schlüssel, welcher in der Anfrage zur Überprüfung enthalten war, zugeordnet ist. Falls ein solches erstes Zertifikat gefunden wird, wird dieses an das zweite Computersystem gesendet. Da in diesem ersten Zertifikat Angaben zur Gültigkeit sowie persönliche Daten des Nutzers, über welchen dieser authentifiziert werden kann, enthalten sind, kann das zweite Computersystem überprüfen, ob die vorliegende Signatur für die aktuelle Transaktion beziehungsweise den aktuellen Zeitraum beziehungsweise das aktuelle Dokument Gültigkeit besitzt.

### Ausführungsformen des ID-Tokens als elektronischer Personalausweis oder Reisepass

Nach erfolgreicher Authentifizierung des ersten Computersystems bei dem ID-Token kann das erste Computersystem zumindest ein Attribut von einem Datenspeicher des ID-Tokens lesen. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, und/oder Adresse gelesen. Es kann aber zum Beispiel auch nur ein einzelnes Attribut gelesen werden, welches nicht zur Feststellung der Identität des Nutzers, sondern beispielsweise zur Überprüfung der Berechtigung des Nutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist. Durch die Kombination des Nachweises der Identität eines Nutzers oder zumindest des Nachweises bestimmter Attribute des Nutzers, wie zum Beispiel dessen Alter, mit einer sicheren Signaturfunktion in ein und demselben ID-Token wird ein besonders nutzerfreundliches und multifunktionales ID-Token geschaffen, welches eine Vielzahl von Anforderungen, die bei der Durchführung elektronische Transaktionen eine Rolle spielen können, erfüllt.

Beispielsweise kann der Nutzer ein Konto online eröffnen, wozu Attribute, die die Identität des Nutzers beinhalten oder den Nutzer einer bestimmten Personengruppe zuordnen, von dem ersten Computersystem, also zum Beispiel einem Trust-Center, an das zweite Computersystem, zum Beispiel dem Computersystem einer Bank, übertragen werden. Die Übermittlung von Attributen, welche sicher einem bestimmten Nutzer zuschreibbar sind, wird gemäß Ausführungsformen der Erfindung vorteilhaft ergänzt durch das erfindungsgemäße Verfahren zur Erzeugung elektronischer Zertifikate und zur Signierung elektronischer Dokumente durch das gleiche ID-Token. So ist es möglich, mittels eines ID-Tokens gemäß Ausführungsformen der vorliegenden Erfindung rechtsverbindliche Verträge abzuschließen, z.B. mit einer Bank, um ein Konto zu eröffnen, und außerdem elektronische Dokumente wie etwa einen Kreditvertrag zu signieren, mit den entsprechenden rechtsverbindlichen Konsequenzen.

Nach einer Ausführungsform der Erfindung erfolgt die Übertragung der aus dem ID-Token gelesenen Attribute von dem ersten Computersystem zunächst an das dritte Computersystem des Nutzers.

### Ausführungsformen, bei welchen der ID-Token kein hoheitliches Dokument (z.B. kein elektronischer Personalausweis oder Reisepass) darstellt

Nach weiteren Ausführungsformen der Erfindung kann das erfindungsgemäße ID-Token auch frei im Handel erworben werden. In dieser Ausführungsform kommt dem ID-Token keine hoheitliche Ausweisfunktionalität zu. Bei manchen Ausführungsformen des ID-Tokens ist es jedoch dennoch möglich, besagtes ID-Token zur Authentifizierung des zugehörigen Nutzers beziehungsweise Eigentümers zu verwenden. Für diese Ausführungsformen muss auch bei den im Handel erworbenen ID-Token die Möglichkeit bestehen, dass sich der Besitzer eindeutig und sicher bei dem ID-Token authentifiziert, da eine Signatur, welche von einem ID-Token ausgestellt wird, welches nicht eindeutig und sicher einem bestimmten Nutzer zugeschrieben werden kann, sehr unsicher ist. Im Falle der frei im Handel erhältlichen Ausführungsformen eines erfindungsgemäßen ID-Tokens ist ein persönliches Erscheinen vor einer berechtigten Zertifizierungsstelle, ein auf postalischem Wege versendeter schriftlicher Antrag oder zum Beispiel ein fernmündlicher Antrag unter Angabe eines fernmündlichen Authentifizierungsdatums erforderlich. In jedem Fall muss sich also der Nutzer des käuflich erworben ID-Tokens also vor einer berechtigten Instanz in irgendeiner Form zumindest einmalig authentifizieren. Verschiedene Verfahren zur einmaligen Authentifizierung des Nutzers z.B. beim Kauf eines elektronischen Gerätes sind z.B. vom Vertrieb von Mobilfunkgeräten wie etwa Handys bekannt. Eine Authentifizierung kann beispielsweise an der Kasse eines Warenhauses beim Kauf des erfindungsgemäßen ID-Tokens durch Vorlage eines Personalausweises erfolgen. Der Nutzer erhält sodann von besagter Instanz Zugangsdaten, um sich in Zukunft bei dem ID-Token authentifizieren zu können, zum Beispiel eine erste initiale Transport- PIN, ein Passwort, ein zweites Zertifikat oder andere geeignete Daten, welche den Nutzer die Authentifizierung vor dem ID-Token ermöglichen.

Während nach dem Stand der Technik ein Zertifikat i.d.R. einmalig oder für einen langen Zeitraum ausgestellt wird und ebenso lange auf das zugehörige asymmetrischen Schlüsselpaar zur Generierung (qualifizierender) elektronischer Signaturen aufgepasst werden muss, wird gemäß Ausführungsformen der Erfindung die Erstellung (qualifizierender) elektronischer Signaturen bzw. die Erstellung des dafür erforderlichen Schlüsselmaterials enorm erleichtert, sodass die Erzeugung nur sehr begrenzt gültiger Zertifikate und Schlüssel nicht zu einem technischen Mehraufwand für den Nutzer führt. Nach Ausführungsformen der vorliegenden Erfindung ist nur eine einmalige Authentifizierung bei einer berechtigten Instanz erforderlich, z.B. beim Kauf des ID-Tokens, wobei den Nutzer sichere Zugangsdaten zur eindeutigen Authentifizierung bei dem ID-Token mitgeteilt werden. Danach kann der Nutzer dann medienbruchfrei für verschiedenste Transaktionsanlässe immer wieder neue Zertifikate erstellen und diese ggf. auch löschen bzw. ungültig machen.

Nach bevorzugten Ausführungsformen besitzt das ID-Token keine für die Signatur von elektronischen Dokumenten gedachten Signaturschlüssel, wenn dieses zum ersten Mal an den Nutzer und neuen Besitzer ausgehändigt wird. Solange der Nutzer des ID-Tokens diesen nicht für die Ausstellung elektronische Signaturen verwendet, befindet sich auf dem ID-Token auch kein asymmetrisches Schlüsselpaar beziehungsweise Zertifikat, welches von Dritten missbraucht werden könnte. Generiert der Nutzer zu einem späteren Zeitpunkt erste asymmetrische Schlüsselpaare zu Signaturzwecken, so sind diese Schlüssel ebenfalls vor Missbrauch sicher, da sie zum Einen auf einem geschützten Speicherbereich des ID-Tokens gespeichert sind, und zum Anderen der öffentliche Schlüssel nach bevorzugten Ausführungsformen der vorliegenden Erfindung einem ersten Zertifikat zugeordnet ist, welches nur einen sehr begrenzten Gültigkeitszeitraum besitzt. Der Gültigkeitszeitraum beschränkt sich gemäß Ausführungsformen der Erfindung z.B. auf eine einzige Transaktion, auf ein einziges zu signierendes elektronisches Dokument oder auf einen sehr kurzen, zur Durchführung der Transaktion mindestens erforderlichen Zeitraum.

Nach bevorzugten Ausführungsformen der Erfindung können sich auf dem Speichermedium des ID-Tokens mehrere erste asymmetrische Schlüsselpaare und zugehörige erste Zertifikate befinden. Da ein erstes Zertifikat die Gültigkeit eines ersten asymmetrischen Schlüsselpaares auf einen bestimmten Zeitraum, einen bestimmten Dienstleister oder einen bestimmten Typ von Dokument beschränken kann, ist die Existenz mehrerer, für verschiedene Transaktionstypen gültiger erster Schlüsselpaare und zugehöriger erster Zertifikate vorteilhaft. So könnte beispielsweise ein erfindungsgemäßes ID-Token auf dem geschützten Speicherbereich einen ersten privaten Schlüssel beinhalten, dessen zugehöriges erstes Zertifikat speziell nur zur Signierung von elektronischen Dokumenten dieser Bank berechtigt. Desweiteren könnte besagtes ID-Token auch einen weiteren ersten privaten Schlüssel zur Signierung eines Ratenkaufvertragsdokumentes für ein gekauftes Haushaltsgerät gespeichert haben, wobei das zu diesem ersten Schlüssel gehörende erste Zertifikat speziell nur für dieses eine Vertragsdokument mit einer bestimmten Vorgangsnummer Gültigkeit besitzt.

### Löschung und Sperrung von Schlüsselpaaren und Zertifikaten

Gemäß weiterer Ausführungsformen kann der Nutzer die zweite PIN samt eines oder mehrerer erster asymmetrischer Schlüsselpaare und erster Zertifikate, welche unter Verwendung dieser zweiten PIN generiert und auf das Speichermedium des ID-Tokens gespeichert wurden, löschen. Nach Spezifikation und Eingabe einer neuen zweiten PIN, der Signatur-PIN, kann der Nutzer daraufhin wie zuvor beschrieben neue erste asymmetrische Schlüsselpaare und zugehörige Zertifikate erzeugen. Die Möglichkeit, bestehende zweite PINs und zugehörige erste asymmetrische Schlüsselpaare und Zertifikate zu löschen und durch neue zu ersetzen, stellt einen zusätzlichen Sicherheitsvorteil dar, denn falls der Nutzer den Verdacht hegt, ein anderer Nutzer könnte unberechtigterweise in den Besitz des privaten Schlüssels gelangt sein, kann er das zugehörige Schlüsselpaar und Zertifikat jederzeit löschen und durch ein neues Schlüsselpaar und zugehöriges Zertifikat ersetzen.

Nach Ausführungsformen der vorliegenden Erfindung besitzt der Nutzer des ID-Tokens also die Möglichkeit der Löschung eines zuvor generierten ersten asymmetrischen Schlüsselpaares sowie die Möglichkeit der Löschung eines dem zuvor generierten ersten asymmetrischen Schlüsselpaares zugeordneten ersten Zertifikates auf dem ID-Token. Nach bevorzugten Ausführungsformen wird das Löschen dabei durch Programmroutinen des ID-Tokens ausgeführt.

Auch eine zuvor spezifizierte zweite PIN kann gemäß weiteren Ausführungsformen gegebenenfalls gelöscht und durch eine neue zweite vom Nutzer zu spezifizierende PIN ersetzt werden.

Nach weiteren Ausführungsformen besitzt der Nutzer des ID-Tokens die Möglichkeit, eine Anforderung zur Sperrung des ersten Zertifikates an das erste Computersystem zusenden. Nach Überprüfung der Authentizität dieser Anforderung durch das erste Computersystem wird das erste Zertifikat, auf welches sich die Anforderung bezieht, durch das erste Computersystem gesperrt. Nach weiteren Ausführungsformen kann diese Anforderung automatisch vom ID-Token an das erste Computersystem gesendet werden, nachdem der Nutzer einen Befehl zur Löschung des in Kopie auf dem ID-Token gespeicherten ersten Zertifikates gegeben hat.

Nach weiteren Ausführungsformen ist auch das zweite Computersystem, also zum Beispiel das Computersystem eines Dienstleisters wie etwa einer Bank oder eines online Kaufhaus ist, dazu berechtigt, eine Anfrage zur Sperrung eines bestimmten, einem Nutzer zugeordneten ersten Zertifikates, an das erste Computersystem zu senden und dieses zur Sperrung des in dieser Anforderung spezifizierten ersten Zertifikates zu veranlassen. Hierbei muss das erste Zertifikat, auf welches sich die Anforderung zur Sperrung bezieht, in der Regel Eigentum des Dienstleisters sein, um zu verhindern, dass unberechtigte Dritte ein erstes Zertifikat willkürlich sperren können. So könnte ein Dienst beispielsweise auf dessen Kosten die Ausstellung eines ersten Zertifikates für einen Kunden veranlassen, wobei der Dienst berechtigt ist, dieses erste Zertifikat, obwohl es einem bestimmten Kunden zugeordnet ist und von diesem für Signaturzwecke im Geschäftsverkehr mit dem Dienst verwendet wird, zu sperren.

Weitere Ausführungsformen des erfindungsgemäßen Verfahrens beinhalten ferner den Schritt der Übertragung des erzeugten ersten Zertifikates vom ersten Computersystem an das ID-Token und der Speicherung des ersten Zertifikates auf dem ID-Token.

Weitere Ausführungsformen des erfindungsgemäßen Verfahrens beinhalten ferner die Schritte:
- Löschung eines zuvor generierten ersten asymmetrischen Schlüsselpaares von dem ID-Token, und/oder
- Löschung eines zu dem zuvor generierten ersten asymmetrischen Schlüsselpaares gehörenden ersten Zertifikates von dem ID-Token, sofern dieses auf dem ID-Tokens gespeichert wurde, und/oder
- Sperrung des durch das erste Computersystem generierten ersten Zertifikates, welches dem gelöschten asymmetrischen Schlüsselpaar zugeordnet ist, durch das erste Computersystem,
wobei die Löschung des zuvor generierten asymmetrischen Schlüsselpaares und/oder des ersten Zertifikats von dem ID-Token auszuführen sind.

Weitere Ausführungsformen des erfindungsgemäßen Verfahrens beinhalten ferner den Schritt:
- Senden des zumindest einen von dem ersten Computersystem aus dem ID-Token gelesenen Attributs von dem ersten Computersystem an das dritte Computersystem, von wo das zumindest eine Attribut nach Freigabe durch den Nutzer an das zweite Computersystem weitergeleitet wird.

Gemäß Ausführungsformen des erfindungsgemäßen Verfahrens beinhaltet das mindestens eine Attribut Informationen über die Identität des Nutzers oder dessen Zugehörigkeit zu einer Nutzergruppe.

Gemäß weiteren Ausführungsformen des erfindungsgemäßen Verfahrens wird das mindestens eine Attribut zusammen mit dem ersten öffentlichen Schlüssel durch das erste Computersystem aus dem ID-Token ausgelesen und an das erste Computersystem übertragen. Gemäß bevorzugter Ausführungsformen des Verfahrens erfolgt die Übertragung des öffentlichen Schlüssels und des zumindest einen Attributs über eine geschützte Verbindung zwischen dem ID-Token und dem ersten Computersystem, z.B. eine durch Ende-zu-Ende Verschlüsselung geschützte Verbindung zwischen dem ID-Token und dem ersten Computersystem. Diese Ausführungsformen sind vorteilhaft, da durch die Übertragung des öffentlichen Schlüssels, für welchen noch kein Zertifikat ausgestellt wurde, über eine geschützte Verbindung an das erste Computersystem sicherstellt, dass es einem Angreifer nicht gelingt, durch Aufzeichnen, Manipulation und Analyse der Kommunikation zwischen dem ID-Token und dem ersten Computersystem (z.B. "Man-in-the-Middle-Angriffe") die übertragenen Daten im Klartext mitzulesen oder zu verfälschen.

Gemäß weiterer Ausführungsformen des erfindungsgemäßen Verfahrens wird das mindestens eine ausgelesene Attribut von dem ersten Computersystem in das durch das erste Computersystem für den öffentlichen Schlüssel erzeugte erste Zertifikat integriert, so dass das mindestens eine Attribut Bestandteil des ersten Zertifikates ist. Das mindestens eine integrierte Attribut kann z.B. verwendet werden, um den Namen des Eigentümers des öffentlichen Schlüssels in dem ersten Zertifikat zu bezeichnen.

Diese Ausführungsformen sind vorteilhaft, da mit Hilfe ein und derselben technischen Plattform dem Nutzer sowohl ein sicheres Signaturverfahren bereitgestellt wird, als auch ein Verfahren, das es dem Nutzer ermöglicht, Dritten gegenüber z.B. nutzerbezogene Eigenschaften oder Berechtigungen nachzuweisen. Die Attribute können z.B. bestimmte Eigenschaften des Nutzers wie etwa dessen Zugehörigkeit zu einer bestimmten Nutzergruppe, den Namen des Nutzers, dessen Wohnort etc. spezifizieren. Dadurch, dass ein oder mehrere dieser Attribute von einem geschützten Speicherbereich des ID-Tokens zusammen mit dem öffentlichen Schlüssel ausgelesen werden, und die ausgelesenen Attribute als Bestandteil des Zertifikates Dritten öffentlich zur Verfügung gestellt werden, ist es möglich, die Zuschreibung der in den Attributen spezifizierten Eigenschaften an den Nutzer Dritten gegenüber sicher nachzuweisen. So kann beispielsweise der Name des Nutzers des ID-Tokens als Attribut in dem ID-Token gespeichert sein. Liest das erste Computersystem bei der Erstellung des ersten Zertifikates dieses Attribut aus dem ID-Token aus, so kann das erste Computersystem den in dem Attribut angegebenen Namen des Nutzers zur Spezifizierung des Namen des Eigentümers des öffentlichen Schlüssels verwenden. Gemäß weiteren Ausführungsformen erfordert das Auslesen des mindestens einen Attributes zur Integration des Attributes in das erstellte erste Zertifikat die Zustimmung des Nutzers. Alternativ oder zusätzlich zu der Integration des mindestens einen ausgelesenen Attributes in das erste Zertifikat kann das mindestens eine ausgelesene Attribut auch von dem ersten Computersystem an das zweite Computersystem übertragen werden.

Weitere Ausführungsformen des erfindungsgemäßen Verfahrens beinhalten ferner die Schritte:
- Signierung des zumindest einen aus dem ID-Token gelesenen Attributs durch das erste Computersystem,
- Übertragung des signierten Attributs von dem ersten Computersystem an ein zweites Computersystem.

Weitere Ausführungsformen des erfindungsgemäßen Verfahrens beinhalten ferner, dass der Lesezugriff des ersten Computersystems erfolgt, um die in einer Attributspezifizierung spezifizierten ein oder mehreren Attribute aus dem ID-Token auszulesen.

Weitere Ausführungsformen des erfindungsgemäßen Verfahrens beinhalten ferner die Schritte:
- Spezifizierung eines oder mehrerer Attribute durch das zweite Computersystem,
- Senden der Attributspezifizierung von dem zweiten Computersystem an das erste Computersystem,
- wobei der Lesezugriff des ersten Computersystems erfolgt, um die in der Attributspezifizierung spezifizierten ein oder mehrere Attribute aus dem ID-Token auszulesen.

Eine Attributspezifizierung ist dabei eine Spezifikation von ein oder mehreren Attributen, die aus dem ID-Token ausgelesen werden sollen.

Weitere Ausführungsformen des erfindungsgemäßen Verfahrens beinhalten ferner nach erfolgreicher Authentifizierung des Nutzers und des ersten Computersystems gegenüber dem ID-Token den Schritt des Lesezugriffs des ersten Computersystems auf das zumindest eine in dem ID-Token gespeicherte Attribut zur Übertragung des zumindest einen Attributs nach dessen Signierung an ein zweites Computersystem.

Weitere Ausführungsformen des erfindungsgemäßen Verfahrens beinhalten ferner den Schritt der Authentifizierung des ersten Computersystems gegenüber dem ID-Token mit Hilfe eines zweiten Zertifikats des ersten Computersystems, wobei das zweite Zertifikat eine Angabe derjenigen in dem ID-Token gespeicherten Attribute beinhaltet, für welche das erste Computersystem für den Lesezugriff berechtigt ist.

Gemäß weiteren Ausführungsformen der Erfindung authentifiziert sich das erste Computersystem gegenüber dem ID-Token basierend auf einem Challenge-Response Protokoll.

Gemäß weiteren Ausführungsformen der Erfindung überprüft der ID-Token die Leseberechtigung des ersten Computersystems für den Lesezugriff auf zumindest eines der Attribute mit Hilfe eines zweiten Zertifikats.

Gemäß weiteren Ausführungsformen des erfindungsgemäßen Verfahrens werden die in der Attributspezifizierung spezifizierten Attribute zusammen mit dem öffentlichen Schlüssel durch das erste Computersystem aus dem ID-Token ausgelesen. Das gemeinsame Auslesen des ersten öffentlichen Schlüssels und des mindestens einen Attributes kann z.B. im Zuge einer Zertifikatsanforderung erfolgen. Eine Zertifikatsanforderung ist eine Anforderung an ein ID-Provider-Computersystem, ein Zertifikat für einen öffentlichen Schlüssel auszustellen.

Gemäß weiteren Ausführungsformen der Erfindung wird nach Erstellung des ersten Zertifikats durch das erste Computersystem und Übertragung des erstellten ersten Zertifikates auf das ID-Token der erste öffentliche Schlüssel vom ID-Token an das dritte Computersystem übertragen. Das dritte Computersystem kann den ersten Öffentlichen Schlüssel an das zweite Computersystem übertragen, z.B. zusammen mit den signierten Daten, sodass das zweite Computersystem die Gültigkeit der Signatur prüfen kann. Gemäß Ausführungsformen der Erfindung kann der erste öffentliche Schlüssel als Bestandteil des ersten Zertifikates von dem ID-Token an das dritte Computersystem und von dem dritten Computersystem an das zweite Computersystem übertragen werden.

Gemäß weiteren Ausführungsformen werden die ausgelesenen Attribute von dem ersten Computersystem an das zweite Computersystem übermittelt.

Weitere Ausführungsformen des erfindungsgemäßen Verfahrens beinhalten, dass die Anforderung einen Identifikator zur Identifizierung des ersten Computersystems durch das zweite Computersystem beinhaltet, wobei die Übertragung der Attributspezifizierung von dem zweiten Computersystem an das erste Computersystem ohne Zwischenschaltung des dritten Computersystems erfolgt.

Gemäß weiteren Ausführungsformen des erfindungsgemäßen Verfahrens erfolgt die Übertragung des öffentlichen Schlüssels und/oder des mindestens einen Attributs von dem ID-Token zu dem ersten Computersystem über eine geschützte Verbindung zwischen dem ID-Token und dem ersten Computersystem, wobei die geschützte Verbindung beispielsweise auf einer Ende-zu-Ende Verschlüsselung basieren kann.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens. Bei dem digitalen Speichermedium kann es sich insbesondere um ein nicht-flüchtiges Speichermedium handeln, z.B. einer CD-ROM, einem Flash-Laufwerk, einem magneto-optischen Speicher etc. handeln.

In einem weiteren Aspekt betrifft die Erfindung ein ID-Token, welches Mittel zur Erzeugung eines ersten asymmetrischen Schlüsselpaares bestehend aus einem ersten privaten Schlüssel und einem ersten öffentlichen Schlüssel besitzt. Dieses ID-Token verfügt ferner über ein Speichermedium mit zumindest einem geschützten Speicherbereich. Das von dem ID-Token erzeugte erste asymmetrische Schlüsselpaar wird in dem Speichermedium des ID-Tokens gespeichert, wobei zumindest der erste private Schlüssel in einem geschützten Speicherbereich des ID-Tokens gespeichert wird. Der ID-Token verfügt gemäß Ausführungsformen der Erfindung ferner über Mittel zur Authentifizierung eines dem ID-Token zugeordneten Nutzers gegenüber dem ID-Token, über Mittel zur Authentifizierung eines ersten Computersystems gegenüber dem ID-Token, und über Mitteln zum Aufbau einer geschützten Verbindung zu dem ersten Computersystem, über die das erste Computersystem den generierten ersten öffentlichen Schlüssel aus dem geschützten Speicherbereich auslesen kann, wobei gemäß Ausführungsformen der Erfindung eine notwendige Voraussetzung für das Erzeugung des ersten asymmetrischen Schlüsselpaares durch das ID-Token die erfolgreiche Authentifizierung des Nutzers und des ersten Computersystems gegenüber dem ID-Token ist.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen des durch der ID-Token generierten öffentlichen Schlüssels, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer des dritten Computersystems aufgrund der Ende-zu-Ende-Verschlüsselung keine Änderungen der über die Verbindung übertragenen Daten vornehmen kann.

Nach weiteren Ausführungsformen der Erfindung ist der ID-Token als elektronisches Gerät, insbesondere als einen USB Stick oder ein Dokument, insbesondere ein Wert-oder Sicherheitsdokument ausgebildet. Ein Wert- oder Sicherheitsdokument kann zum Beispiel ein von einer Behörde ausgestellter elektronischer Personalausweis oder Reisepass sein.

Nach weiteren Ausführungsformen kann eine Verbindung zwischen dem dritten Computersystem und dem ID-Token aufgebaut werden. Falls der ID-Token als USB-Stick ausgebildet ist, kann die Verbindung z.B. in dem Anschluss des ID-Tokens an eine USB Schnittstelle des dritten Computersystems aufgebaut werden.

Gemäß weiteren Ausführungsformen kann z.B. ein Card-Reader für die Verbindung zu einem als Smartcard ausgebildeten ID-Token Verwendung finden. Auch ein kontaktloses Auslesen des z.B. als Chipkarte mit RFID-Chip ausgebildeten ID-Tokens gemäß weiterer Ausführungsformen ist möglich.

Gemäß weiteren Ausführungsformen verfügt das ID-Token über einem geschützten Speicherbereich zur Speicherung von zumindest einem Attribut, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

Gemäß weiteren Ausführungsformen der Erfindung wird das zumindest eine Attribut von dem ID-Token zu dem ersten Computersystem über eine durch Ende-zu-Ende Verschlüsselung geschützte Verbindung übertragen.

Gemäß weiteren Ausführungsformen des ID-Tokens erfolgt die Authentifizierung des Nutzers gegenüber dem ID-Token zur Signierung der zu signierenden Daten die Eingabe einer ersten und einer zweiten PIN, wobei die erste PIN dem Nutzer zugeordnet ist und die Eingabe der zweiten PIN nur nach erfolgreicher Eingabe der ersten PIN erfolgen kann. Gemäß weiteren Ausführungsformen verfügt das ID-Token über Mittel zur Löschung einer bereits auf dem ID-Token gespeicherten zweiten PIN und zur Speicherung einer vom Nutzer vor einem Signierungsschritt neu spezifizierten zweiten PIN.

In einem weiteren Aspekt betrifft die Erfindung ein erstes Computersystem mit Mitteln zum Lesen eines ersten öffentlichen Schlüssels über eine gesicherte Verbindung über ein Netzwerk von dem ID-Token, wobei der erste öffentliche Schlüssel und ein erster privater Schlüssel ein erstes asymmetrisches Schlüsselpaar bilden, wobei das erzeugte erste Schlüsselpaar dem Nutzer zugeordnet ist. Ein erfindungsgemäßes erstes Computersystem verfügt ferner über Mittel zur Authentifizierung gegenüber einem ID-Token, Mittel zum Empfang eines ersten Datenwertes eines zweiten Computersystems, und Mittel zur Erzeugung eines ersten Zertifikats für den empfangenen ersten öffentlichen Schlüssel, wobei die Gültigkeit des ersten Zertifikates von dem empfangenen ersten Datenwert bestimmt wird und wobei das erste Zertifikat dem Nutzer zugeordnet ist.

Gemäß weiteren Ausführungsformen des erfindungsgemäßen ersten Computersystems ist Voraussetzung für die Erzeugung des ersten Zertifikates, welches den von dem ID-Token generierten ersten öffentlichen Schlüssel einem Nutzer zuweist, die erfolgreiche Authentifizierung eines Nutzers und des ersten Computersystems gegenüber dem ID-Token, Das erfindungsgemäße erste Computersystem verfügt ferner über einen Prozessor sowie ein Computer-lesbares, nicht flüchtiges Speichermedium zur Speicherung von Programminstruktionen sowie eines oder mehrerer erster Zertifikate.

Weitere Ausführungsformen des ersten Computersystems verfügen über Mittel zum Empfang einer Anforderung zur Sperrung eines ersten Zertifikates, und über Mittel zur Überprüfung, ob die Anforderung zur Sperrung des ersten Zertifikates von dem Betreiber des zweiten Computersystems stammt, wobei das erste Computersystem die angeforderte Sperrung des ersten Zertifikates nur dann ausführt, wenn die Anforderung zur Sperrung von dem Betreiber des zweiten Computersystems stammt.

Gemäß weiteren Ausführungsformen des ersten Computersystems stammt die Anforderung zur Sperrung dann von dem Betreiber des zweiten Computersystems, wenn ein erster Identifikator des Anforderers mit einem zweiten Identifikator, der Bestandteil des zu sperrenden Zertifikates ist, übereinstimmt, und wobei es sich bei dem zweiten Identifikator, welcher Bestandteil des zu sperrenden Zertifikates ist, um einen ersten Datenwert handelt, wobei der erste Datenwert durch das zweite Computersystem zum Zwecke der Erstellung des ersten Zertifikates in Antwort auf eine Transaktionsanforderung eines Nutzers generiert wurde, und wobei der erste Datenwert durch das erste Computersystem bei der Erstellung des ersten Zertifikates als Bestandteil des zu erstellenden ersten Zertifikates aufgenommen wurde.

Gemäß weiteren Ausführungsformen des ersten Computersystems beinhaltet dieses Mittel zum Empfang einer Attributspezifizierung über ein Netzwerk, wobei die Attributspezifizierung zumindest ein Attribut spezifiziert, sowie über Mittel zum Lesen zumindest eines Attributs aus dem ID-Token über eine geschützte Verbindung, wobei das Lesen des zumindest einen Attributs voraussetzt, dass sich ein dem ID-Token zugeordneter Nutzer und das erste Computersystem gegenüber dem ID-Token authentifiziert haben.

Gemäß weiteren Ausführungsformen des ersten Computersystems beinhaltet dieses Mittel Mitteln zur Generierung einer Anforderung an den Nutzer zur Authentifizierung gegenüber dem ID-Token aufgrund des Empfangs der Attributspezifizierung.

Gemäß weiteren Ausführungsformen des ersten Computersystems beinhaltet dieses Mittel zum Empfang der Attributspezifizierung von einem zweiten Computersystem, wobei die Attributspezifizierung mindestens ein von dem ID-Token auszulesendes Attribut spezifiziert, über Mitteln zum Auslesen des mindestens einen in der Attributspezifizierung spezifizierten Attributes von dem ID-Token, und über Mittel zum Senden des zumindest einen aus dem ID-Token gelesenen Attributs an ein drittes Computersystem zur Weiterleitung an das zweite Computersystem.

Gemäß weiteren Ausführungsformen des ersten Computersystems beinhaltet dieses Mittel zum Signieren des zumindest einen von dem aus dem ID-Token an das erste Computersystem übertragenen Attributes, und über Mittel zum Senden des zumindest einen signierten Attributs an ein drittes Computersystem oder ein zweites Computersystem.

Gemäß weiteren Ausführungsformen des ersten Computersystems beinhaltet dieses mehrere zweite Zertifikate unterschiedlicher Leserechte, wobei das Computersystem dazu ausgebildet ist, aufgrund des Empfangs der Attributspezifizierung zumindest eines der zweiten Zertifikate auszuwählen, welches die zum Lesen der in der Attributspezifizierung spezifizierten Attribute ausreichenden Leserechte aufweist.

Gemäß weiteren Ausführungsformen der Erfindung beinhaltet das erste Computersystem Mittel, um mindestens ein Attribut zusammen mit dem öffentlichen Schlüssel aus dem ID-Token auszulesen. Das gemeinsame Auslesen des ersten öffentlichen Schlüssels und des mindestens einen Attributs kann z.B. im Zuge einer Zertifikatsanforderung an das erste Computersystem erfolgen. Gemäß weiteren Ausführungsformen des ersten Computersystems werden nur diejenigen Attribute von dem ID-Token ausgelesen, welche in einer Attributspezifizierung spezifiziert sind.

Gemäß weiteren Ausführungsformen des ersten Computersystems verfügt das erste Computersystem über Mittel zum Lesen des öffentlichen Schlüssels und/oder des mindestens einen in dem ID-Token gespeicherten Attribut zur Übertragung des ausgelesenen ersten Öffentlichen Schlüssels und/oder des mindestens einen Attributs von dem ID-Token zu dem ersten Computersystem. Gemäß weiteren Ausführungsformen findet die Übertragung des ausgelesenen öffentlichen Schlüssels und/oder des mindestens einen in dem ID-Token gespeicherten Attributs über eine geschützte Verbindung statt, wobei die geschützte Verbindung zwischen dem ID-Token und dem ersten Computersystem ausgebildet ist, wobei die geschützte Verbindung beispielsweise auf einer Ende-zu-Ende Verschlüsselung basieren kann. Gemäß Ausführungsformen des ersten Computersystems verfügt dieses Computersystem ferner über Mittel, um das mindestens eine ausgelesene Attribut in das für den ersten öffentlichen Schlüssel zu erstellende Zertifikat zu integrieren, sodass das mindestens eine Attribut Bestandteil des ersten Zertifikats wird. Dadurch ist es z.B. möglich, den Nutzer, dem der erste öffentliche Schlüssel, für welchen das erste Zertifikat erstellt wurde, zugeordnet ist, in dem ersten Zertifikat namentlich zu bezeichnen.

### Sperrung des erstellten ersten Zertifikates durch das erste Computersystem

Nach einer Ausführungsform der Erfindung kann das erste Computersystem zudem Mittel zum Empfang einer Anforderung zur Sperrung des ersten Zertifikates beinhalten. Ferner kann dieses Computersystem Mittel zur Sperrung des ersten Zertifikates nach Überprüfung, dass die Anforderung von dem Nutzer stammt, welchem das erste Zertifikat zugeordnet ist, beinhalten. Gemäß Ausführungsformen der vorliegenden Erfindung kann der Nachweis, dass diese Anforderung von dem Nutzer stammt, welchen das erste Zertifikat zugeordnet ist, dadurch erfolgen, dass sich der Nutzer bei dem ID-Token authentifiziert und die Anforderung zur Sperrung des zu den ersten öffentlichen Schlüssel des ID-Tokens gehörenden Zertifikates durch das ID-Token an das erste Computersystem versendet wird.

Nach einer weiteren Ausführungsform des erfindungsgemäßen ersten Computersystems können die Mittel zum Empfang einer Anforderung zur Sperrung des ersten Zertifikates ferner geeignet sein, Anforderungen zur Sperrung eines einem Nutzer zugeordneten ersten Zertifikates zu erhalten, wobei die Anforderung von einem zweiten Computersystem versendet wird und wobei die dem zweiten Computersystem zugeordnete Instanz Eigentümer des zu sperrenden ersten Zertifikates ist. Nach dieser Ausführungsformen der Erfindung kann die Anforderung zur Sperrung eines einem Nutzer zugeordneten Zertifikates also auch durch ein zweites Computersystem an das erste Computersystem gesendet werden. Gemäß dieser Ausführungsformen verfügt das erste Computersystem also auch über Mittel zum Empfang einer Anforderung durch ein zweites Computersystem zur Sperrung eines ersten Zertifikates und über Mittel zur Sperrung des zu sperrenden ersten Zertifikates nach Überprüfung, dass die Anforderung von dem zweiten Computersystem von einer Instanz stammt, die Eigentümer des zu sperrenden ersten Zertifikates ist.

Gemäß Ausführungsformen des erfindungsgemäßen ersten Computersystems fügt das erste Computersystem nach Erhalt eines ersten Datenwertes diesen ersten Datenwert so in das zu erstellende erste Zertifikat ein, dass der erste Datenwert zu einem maschinenlesbaren und/oder Klartext- Bestandteil des erstellten ersten Zertifikates wird. Nach bevorzugten Ausführungsformen wird dieser erste Datenwert von einem zweiten Computersystem spezifiziert. Nach weiteren bevorzugten Ausführungsformen wird dieser erste Datenwert von einem zweiten Computersystem in Antwort auf Erhalt einer Transaktionsanforderung spezifiziert.

Ausführungsformen der Erfindung ermöglichen eine Prüfung auf Gültigkeit des Zertifikates durch das zweite Computersystem, indem das erste Computersystem den von einem zweiten Computersystem spezifizierten ersten Datenwert in das zur Durchführung der angeforderten Transaktion erstellte Zertifikat integriert. Das zweite Computersystem kann im Zuge der Zertifikatsprüfung überprüfen, ob der erste Datenwert, welchen das zweite Computersystem spezifiziert hat, mit dem in dem Zertifikat eines öffentlichen Schlüssels enthaltenen Datenwert übereinstimmt, wobei das Zertifikat nur im Falle der Übereinstimmung der verglichenen Werte als gültig erachtet wird.

Gemäß Ausführungsformen des ersten Computersystems verfügt dieses Computersystem ferner über Mittel, um den ersten Datenwert bei der Erstellung des ersten Zertifikates in das erste Zertifikat zu integrieren, sodass der erste Datenwert Bestandteil des ersten Zertifikats wird. Der erste Datenwert kann beispielsweise den Namen des Betreibers des Dienst-Computersystems bezeichnen. Durch die Integration des ersten Datenwertes in das erste Zertifikat durch das erste Computersystem kann der erste Datenwert gemäß Ausführungsformen der Erfindung den Eigentümer des Zertifikates, der die Kosten für die Zertifikatserstellung trägt und/oder die Instanz, die zu der Sperrung des Zertifikats berechtigt ist, kennzeichnen.

Gemäß weiteren Ausführungsformen kann vor dem Aufbau der sicheren Verbindung auch noch die Authentifizierung des dritten Computersystems bei dem ID-Token erforderlich sein. Die sichere Verbindung kann zum Beispiel zur Übertragung eines Befehls zur Erzeugung des ersten asymmetrischen Schlüsselpaares vom ersten Computersystem an das ID-Token und zur Übertragung des von dem ID-Token generierten ersten öffentlichen Schlüssels auf das erste Computersystem genutzt werden und ggf. auch zur Übertragung des von dem ersten Computersystem ausgestellten, dem ersten öffentlichen Schlüssel zugehörenden ersten Zertifikates an das ID-Token.

### Signatur- und Zertifikatsprüfung

Nach einer Ausführungsform der Erfindung hat das erste Computersystem ein oder mehrere Zertifikate, die jeweils unterschiedlichen ersten öffentlichen Schlüsseln zugeordnet sind und die Authentizität und Gültigkeit der von diesen generierten Signaturen verbürgen. Nach Empfang einer Anfrage zur Überprüfung der Gültigkeit eines ersten öffentlichen Schlüssels Zertifikats-Prüfungsanfrage, welche auch den öffentlichen Schlüssel, mit welchem eine elektronischen Signatur durchgeführt wurde, beinhaltet, wählt das erste Computersystem das Zertifikat, welches diesen öffentlichen Schlüssel zugeordnet ist, aus, und sendet es an das anfragende zweite Computersystem. Gemäß besagten Ausführungsformen verfügt das erste Computersystem auch über Mittel zum Empfang einer Anforderung von einem zweiten Computersystem zur Überprüfung der Gültigkeit des ersten Zertifikates, wobei die Anforderung zumindest den öffentlichen Schlüssel, welcher dem zu sperrenden ersten Zertifikat zugeordnet ist, enthält.

Nach einer Ausführungsform der Erfindung empfängt das erste Computersystem zusammen mit der Zertifikats-Prüfungsanfrage einen Identifikator des zweiten Computersystems. Mit Hilfe des Identifikators identifiziert das erste Computersystem das zweite Computersystem, welches die Überprüfungsdienste in Anspruch nehmen möchte, um diese Dienstleistung gegenüber dem zweiten Computersystem zu vergebühren.

Gemäß weiteren Ausführungsformen werden nach erfolgter Signierung der zu signierenden Daten die signierten Daten von dem ID-Token an das dritte Computersystem übertragen. Zudem wird das erste Zertifikat oder der erste öffentliche Schlüssel von dem ID-Token an das dritte Computersystem übertragen. Gemäß bevorzugten Ausführungsformen ist der öffentliche Schlüssel Bestandteil des ersten Zertifikats und wird mit diesem übertragen. Die signierten Daten und der erste öffentliche Schlüssel wird sodann vom dritten Computersystem an das zweite Computersystem übertragen, wobei der öffentliche Schlüssel als Bestandteil des Zertifikates übertragen werden kann. Das zweite Computersystem kann nun die Gültigkeit des dem öffentlichen Schlüssel zugehörigen ersten Zertifikats prüfen. Falls das erste Zertifikat nicht von dem dritten an das zweite Computersystem übertragen wurde, kann das erste Zertifikat durch das zweite Computersystem von dem ersten Computersystem angefordert werden.

Im Weiteren werden Ausführungsformen der Erfindung mit Bezugnahme auf die Zeichnungen näher erläutert. Es zeigen:
- Figur 1: ein Blockdiagramm einer ersten Ausführungsform erfindungsgemäßer Computersysteme,
- Figur 2: ein Flussdiagramm einer Ausführungsform eines erfindungsgemäßen Verfahrens,
- Figur 3: ein UML-Diagramm einer weiteren Ausführungsform eines erfindungsgemäßen Verfahrens, gemäß welcher das ID-Token über eine Authentifizierungsfunktion verfügt,
- Figur 4: ein UML-Diagramm einer weiteren Ausführungsform eines erfindungsgemäßen Verfahrens und stellt Schritte bei der Erzeugung eines Zertifikates dar,
- Figur 5a: verschiedene Ausführungsformen eines erfindungsgemäßen ID-Tokens,
- Figur 5b: ist ein Blockdiagramm, welches eine mögliche Konfiguration eines Nutzer-Computersystems zur Verwaltung mehrerer für die Nutzer-Identifizierung verwendbarer ID-Token darstellt,
- Figur 5c: ist ein Blockdiagramm mit mehreren Computersystemen, worin mehrere unterschiedliche ID-Provider Computersysteme enthalten sind,
- Figur 6: ist ein Blockdiagramm, welches eine mögliche Konfiguration eines Nutzer-Computersystems zur Verwaltung mehrerer erfindungsgemäßer ID-Token zur Signierung elektronischer Dokumente darstellt, und
- Figur 7: ist ein UML Diagramm einer weiteren Ausführungsform eines erfindungsgemäßen Verfahrens und stellt Schritte zur Generierung des Zertifikates, der Signaturerstellung und Zertifikats-Prüfung dar.

Elemente der nachfolgenden Ausführungsformen, die einander entsprechen, werden mit denselben Bezugszeichen gekennzeichnet.

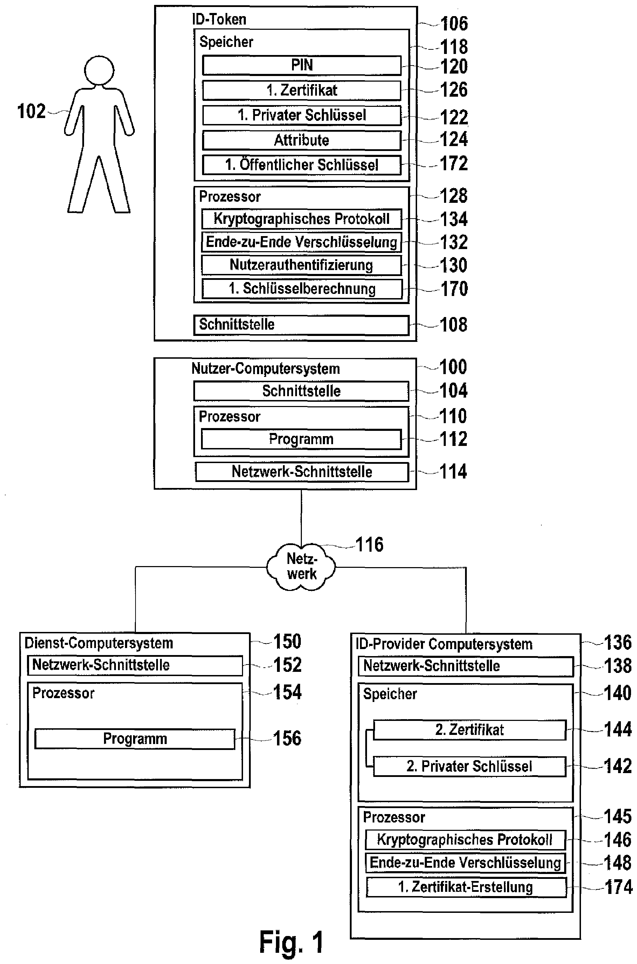

Die **Figur 1** zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist. Das Computersystem 100 entspricht funktional einem dritten Computersystem entsprechend zuvor beschriebenen Ausführungsformen der Erfindung.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann. Speicherbereich 120 kann also den Referenzwert der ersten PIN und ggf. auch den Referenzwert der zweiten PIN beinhalten.

Der geschützte Bereich 122 dient zur Speicherung zumindest eines ersten privaten Schlüssels. Die in Figur 1 dargestellten Ausführungsform des erfindungsgemäßen ID-Tokens beinhaltet ferner einen weiteren geschützten Speicherbereich 124 welcher beispielsweise geheime Attribute, zum Beispiel persönliche Daten des dem ID-Token zugeordneten Nutzers 102, wie zum Beispiel dessen Name, Wohnort, Geburtsdatum, Geschlecht, und/oder von Attributen, die das ID-Token selbst betreffen, wie zum Beispiel die Institution, die das ID-Token erstellt oder ausgegeben hat, die Gültigkeitsdauer des ID-Tokens, einen Identifikator des ID-Tokens, wie zum Beispiel eine Passnummer oder eine Kreditkartennummer, enthalten kann.

Der elektronische Speicher 118 kann ferner einen Speicherbereich 126 zur Speicherung eines ersten Zertifikats aufweisen. Das erste Zertifikat kann einen ersten öffentlichen Schlüssel beinhalten oder diesem ersten öffentlichen Schlüssel zugeordnet sein, wobei dieser erste öffentliche Schlüssel dem in dem geschützten Speicherbereich 122 gespeicherten ersten privaten Schlüssel zugeordnet ist und mit diesem zusammen das von dem ID-Token generierte erste asymmetrische Schlüsselpaar bildet. Das erste Zertifikat kann nach einem Public Key Infrastruktur (PKI) Standard erstellt worden sein, beispielsweise nach dem X.509 Standard. Der erste private Schlüssel welcher in dem geschützten Speicher 122 enthalten ist kann zur Signatur elektronischer Dokumente Verwendung finden.

Das erste Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein, insbesondere in einem Speichermedium desjenigen ersten Computersystems, welches an der Ausstellung des ersten Zertifikates beteiligt war.

Der ID-Token 106 hat einen Prozessor 128. Der Prozessor 128 dient zur Ausführung von Programminstruktionen 130, 132, 134 und 170. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in das ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der das ID-Token 106 betreffenden Schritte eines kryptographischen Protokolls zur Authentifizierung eines ersten Computersystems, zum Beispiel eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Berechtigung zur Initiierung der Generierung des ersten asymmetrischen Schlüsselpaares, zum Lesen des generierten ersten öffentlichen Schlüssels und gegebenenfalls zum Schreiben des zu dem ersten öffentlichen Schlüssel gehörenden Zertifikates auf den Speicherbereich 126 nach. Die Authentifizierung kann auch gegenseitig sein, d.h. auch der ID-Token 106 muss sich dann gegenüber dem ersten Computersystem, zum Beispiel dem ID-Provider-Computersystem 136, nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber zur Übertragung des Befehls zur Erstellung eines ersten asymmetrischen Schlüsselpaares von dem ID-Provider-Computersystem 136 an das ID-Token sowie der Übertragung des generierten ersten öffentlichen Schlüssels von dem ID-Token an das ID-Provider-Computersystem 136. Der durch die Ende zu Ende Verschlüsselung ausgebildete sichere Kommunikationskanal kann ferner zur Übertragung der von dem ID-Provider-Computersystem 136 aus dem geschützten Speicherbereich 124 ausgelesenen Attribute verwendet werden, zur Übertragung des Befehls zur Erstellung eines ersten asymmetrischen Schlüsselpaares vom ID-Provider-Computersystem 136 an das ID-Token 106, sowie zum Schreiben des zu dem ersten öffentlichen Schlüssel gehörenden ersten Zertifikates in den Speicherbereich 126. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Die Programminstruktionen 170 spezifizieren ein geeignetes Verfahren zur Berechnung des ersten asymmetrischen Schlüsselpaares. Die Ausführung der Programminstruktionen 170 kann durch das ID-Provider-Computersystem 136 initiiert werden. Nach erfolgreicher Ausführung der Programminstruktionen 170 wird der erste private Schlüssel in dem geschützten Speicherbereich 122 geschrieben während der zugehörige erste öffentlichen Schlüssel in Speicherbereich 172 gespeichert und als Kopie an das ID-Provider-Computersystem übertragen. Das zu diesem ersten öffentlichen Schlüssel gehörende und von dem ID-Provider-Computersystem erzeugte erste Zertifikat kann gemäß der in Figur 1 dargestellten Ausführungsform in dem Speicherbereich 126 gespeichert werden.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für das ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein zweiter privater Schlüssel 142 des ID-Provider-Computersystems 136 sowie das entsprechende zweite Zertifikat 144 gespeichert ist, welches zum Beispiel bei der Authentifizierung des ID Providercomputersystems bei dem ID-Token Verwendung finden kann. Auch bei diesem zweiten Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls 134 zur Authentifizierung des ID Providercomputersystems bei dem ID-Token ausgeführt. Insgesamt wird also das kryptographische Protokoll zur Authentifizierung des ID Provider Computersystems bei dem ID-Token durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Generierung des ersten asymmetrischen Schlüsselpaares durch die Programminstruktionen 170 des ID-Tokens 106 bildet.

Ein zweites Computersystem, zum Beispiel das in Figur 1 abgebildete Dienst-Computersystem 150, kann zur Entgegennahme einer Transaktionsanforderung, zum Beispiel einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Nutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des im Zuge der Transaktionsanforderung beauftragten oder bestellten Produkts oder der Dienstleistung versendet das Dienst-Computersystem 150 eine Signaturanforderung an das Nutzer-Computersystem 100, also eine Anforderung zur Signierung von Daten, deren Signierung zur Durchführung der angeforderten Transaktion erforderlich ist. Die zu signierenden Daten können z.B. als elektronisches Dokument ausgebildet sein. Diese Signaturanforderung enthält die zu signierenden Daten oder Angaben dazu, wie die zu signierenden Daten erhalten werden können. Gemäß mancher Ausführungsformen der Erfindung enthält die Signaturanforderung zudem einen ersten Datenwert, welcher den zu signierenden Daten zugeordnet und/oder von diesem abgeleitet ist und welcher zur Beschränkung der Gültigkeit der angeforderten elektronischen Signatur geeignet ist. Nach Empfang dieser Signaturanforderung durch das Nutzer-Computersystem 100 authentifiziert sich der Nutzer 102 und das ID-Provider-Computersystem 136 bei dem ID-Token. Nach erfolgreicher Authentifizierung sowohl des Nutzers als auch des ID-Provider-Computersystems wird auf Befehl des ID-Provider-Computersystems hin ein erstes asymmetrisches Schlüsselpaar, sofern noch nicht auf dem ID-Token vorhanden, durch die Programminstruktionen 170 zur Berechnung des ersten asymmetrischen Schlüsselpaares des ID-Tokens erzeugt. Die Gültigkeit des zu dem generierten ersten öffentlichen Schlüssels gehörenden ersten Zertifikates ist dabei gemäß den in dem ersten Datenwert enthaltenen Angaben beschränkt.

Nach Authentifizierung zumindest des Nutzers 102 sowie des Nutzer-Computersystems 100 bei dem ID-Token 106 kann der Nutzer 102 des Nutzer-Computersystems 100 die zu signierenden Daten, z.B. das empfangene elektronische Dokument bzw. dessen Hash-Wert, mit dem generierten ersten privaten Schlüssel signieren und an das Dienst-Computersystem 150 zusammen mit dem ersten öffentlichen Schlüssel zurücksenden. Das Dienst-Computersystem 150 kann nun die Authentizität und Gültigkeit der Signatur des signierten elektronischen Dokumentes zum Beispiel dadurch überprüfen, dass es eine Zertifikat-Prüfungsanfrage an das ID-Provider-Computersystem 136 sendet, wobei die Zertifikat-Prüfungsanfrage den zu der Signatur gehörenden öffentlichen Schlüssel beinhaltet. Das ID-Provider-Computersystem 136 kann nun das diesem ersten öffentlichen Schlüssel zugeordnete erste Zertifikat an das anfragende Dienst-Computersystem 150 zurücksenden. Da in dem zurückgesendeten Zertifikat Angaben hinsichtlich der Identität des Nutzers sowie der Gültigkeit des Zertifikates enthalten sind, kann das Dienst-Computersystem 150 überprüfen, ob die Signatur zum gegenwärtigen Zeitpunkt und für die aktuelle Transaktion Gültigkeit besitzt. Nur wenn diese Prüfung bestanden wird, wird die Bestellung oder der Auftrag des Nutzers 102 entgegengenommen und/oder ausgeführt.

Beispielsweise ist es für das Zustandekommen eines rechtlich verbindlichen Kreditvertrages erforderlich, dass der Nutzer 102 ein elektronisches Dokument, welches den Kreditvertrag beinhaltet, mit einer qualifizierten elektronischen Signatur versieht. Im Stand der Technik muss der Nutzer 102 hierzu beispielsweise eine dem Nutzer auf Lebenszeit bzw. sehr lange Zeit ausgestelltes und zugeordnetes Schlüsselpaar zur Signierung elektronischer Dokumente verwenden und entsprechende Vorsorgemaßnahmen vor Missbrauch dieses Schlüsselpaares treffen. Da gemäß Ausführungsformen der vorliegenden Erfindung das zur Signierung verwendete erste asymmetrische Schlüsselpaar beziehungsweise das diesem zugeordnete erste Zertifikat in seiner Gültigkeit beschränkt ist, wird die Missbrauchsgefahr erheblich reduziert.

Die in Figur 1 dargestellte Ausführungsform der Erfindung hat ferner den Vorteil, dass der Nutzer das ID-Token auch zum Nachweis seiner Identität gegenüber dem Dienst-Computersystem 150 verwenden kann oder auch nur zum Nachweis, dass bestimmte Eigenschaften auf seine Person zutreffen, zum Beispiel, dass der Nutzer 102 ein bestimmtes Mindestalter hat. Das Mindestalter kann zum Beispiel eines der im Speicherbereich 124 gespeicherten Attribute darstellen. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltene Daten ist. Beispielsweise kann ein solches Attribut ein Mindestalter des Nutzers 102 sein oder die Zugehörigkeit des Nutzers 102 zu einem Personenkreis, der auf bestimmte vertrauliche Daten eine Zugriffsberechtigung hat.

Zur Generierung eines ersten Zertifikats und zugehörigen ersten asymmetrischen Schlüsselpaares zur Signatur eines elektronischen Dokumentes, das von dem Dienst-Computersystem 150 in Antwort auf einer Transaktionsanforderung für einen Nutzer zur Durchführung einer Transaktion zur Verfügung gestellt wird, wird wie folgt vorgegangen:
1. Authentifizierung des Nutzers 102 gegenüber dem ID-Token 106
   Die Authentifizierung des Nutzers 102 gegenüber dem ID-Token 106 kann zum Beispiel folgendermaßen geschehen: Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird eine Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein zweites Zertifikat 144 über diese Verbindung an das ID-Token 106. Durch die Programminstruktionen 134 wird dann eine so genannte Challenge generiert, d.h. beispielsweise eine Zufallszahl. Diese Zufallszahl wird mit dem in dem zweiten Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines zweiten privaten Schlüssels 142 und erhält so die Zufallszahl. Die Zufallszahl sendet das ID-Provider-Computersystem 136 über die Verbindung an das ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als zweiter symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Berechtigung zu der Erzeugung eines ersten asymmetrischen Schlüsselpaares, zum Speichern zumindest des ersten privaten Schlüssels auf den geschützten Speicherbereich 122, zum Speichern des zugehörigen öffentlichen Schlüssels auf den Speicherbereich 172, sowie zum Lesen des generierten ersten öffentlichen Schlüssels. Gemäß der Figur 1 dargestellten Ausführungsform erhält das ID-Provider-Computersystem 136 ferner das Recht, das zu den ersten öffentlichen Schlüssel gehörende, von dem ID-Provider-Computersystem generierte erste Zertifikat in Speicherbereich 126 des ID-Tokens zu schreiben. Das ID-Provider-Computersystem 136 ist ferner nach erfolgter Authentifizierung des Nutzers 102 und des ID Providercomputersystems 136 an das ID-Token 106 berechtigt, je nach Ausführungsform der Erfindung eines, mehrere oder alle in dem geschützten Speicherbereich 124 gespeicherten Attribute zu lesen. Aufgrund eines entsprechenden Kommandos zur Generierung des ersten asymmetrischen Schlüsselpaares, welches das ID-Provider-Computersystem 136 über die sichere Verbindung an das ID-Token 106 sendet, wird das erste asymmetrische Schlüsselpaar durch die Programminstruktionen 170 durch den Prozessor 110 des ID-Tokens generiert. Auch die Schritte des Lesens von Attributen aus dem Speicherbereich 124, des Empfangens des ersten öffentlichen Schlüssels sowie das Schreibens des zugehörigen ersten Zertifikates auf dem Speicherbereich 126 werden durch entsprechende Befehle des ID Provider Computersystems an das ID-Token veranlasst. Der Datenaustausch erfolgt hierbei jeweils innerhalb einer sicheren Datenübertragungsverbindung. Dadurch erhält das ID-Provider-Computersystem 136 Kenntnis des durch das ID-Token erstellten öffentlichen Schlüssels und kann ein zugehöriges erstes Zertifikat erstellen. Die gesicherte Datenübertragungsverbindung kann beispielsweise nach einem so genannten "Secure Messaging-Verfahren" ausgebildet sein.

Ferner kann das ID-Provider-Computersystem 136 einen ersten Datenwert eines zweiten Computersystems, zum Beispiel dem Dienst-Computersystem 150, empfangen. Der Empfang dieses ersten Datenwertes kann direkt vom zweiten Computersystem geschehen oder indirekt vermittelt über das ID-Token. Der erste Datenwert dient dem ID-Provider-Computersystem zur Festlegung des Gültigkeitsbereiches oder der Gültigkeitsdauer des zu dem empfangenen ersten öffentlichen Schlüssel gehörenden Zertifikates.

Von dem ID-Provider-Computersystem gelesene Attribute können von dem ID-Provider-Computersystem mit Hilfe eines zweiten Zertifikats 144 signiert und über das Nutzer-Computersystem 100 oder direkt an das Dienst-Computersystem 150 übertragen werden. Dadurch wird das Dienst-Computersystem 150 über die aus dem ID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Nutzer 102 angeforderten Dienst zu erbringen.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass es nur durch Eingabe einer korrekten PIN oder eines korrekten biometrischen Merkmals durch den Nutzer 102 freigeschaltet wird. Erst diese Freischaltung ermöglicht den Start der Programminstruktionen 132, 134 und 170 und damit die Authentifizierung des ID-Provider-Computersystems 136, den Aufbau einer Ende zu Ende Verschlüsselung sowie die Generierung eines ersten kryptografischen Schlüsselpaares.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann die Programminstruktionen 170 zur Generierung eines ersten asymmetrischen Schlüsselpaares ausführen kann und/oder erst dann einen Lesezugriff auf den geschützten Speicherbereich 124 durchführen kann, nachdem von den Programminstruktionen 130 die erfolgreiche Authentifizierung auch des Nutzers 102 signalisiert worden ist.

Ist auf dem Speichermedium des ID-Tokens bereits ein geeignetes erstes asymmetrisches Schlüsselpaar mit zugeordnetem gültigen ersten Zertifikat vorhanden, kann die Erzeugung dieses Schlüsselpaares mittels des ID-Provider-Computersystems über die sichere Datenübertragungsverbindung auch unterbleiben und der vorhandene erste private Schlüssel kann nach Authentifizierung des Nutzers sowie des Nutzer-Computersystems 100 direkt zur Signierung elektronischer Dokumente verwendet werden.

Von besonderem Vorteil ist die Nutzbarmachung des ID-Tokens 106 für zum Beispiel E-Commerce und E-Gouvernement-Anwendungen, da das erfindungsgemäße Verfahren beziehungsweise erfindungsgemäße ID-Token und Computersystem die medienbruchfreie Generierung von ersten asymmetrischen Schlüsselpaaren veranlassen kann, die zur Signatur elektronischer Dokumente verwendet werden können und welche besonders hohen Sicherheitsanforderungen entsprechen, so dass ein Missbrauch insbesondere des ersten privaten Schlüssels ausgeschlossen ist. Zum einen ist der private Schlüssel auf einem geschützten Speicherbereich des ID-Tokens gespeichert, so dass ohne Eingabe einer ersten beziehungsweise einer ersten und mindestens einer zweiten PIN dieser nicht ausgelesen werden kann. Zum anderen ermöglichen Ausführungsformen der vorliegenden Erfindung die Erzeugung in ihrer Gültigkeit stark beschränkter erster asymmetrischer Schlüsselpaare und zugehöriger erster Zertifikate. Des weiteren sind Ausführungsformen des erfindungsgemäßen ID-Tokens für E-Commerce Anwendungen besonders vorteilhaft, da diese nicht nur eine sichere Signaturfunktion bereitstellen sondern außerdem dem Nutzer ermöglichen, sich vor verschiedenen Dienstanbietern als berechtigt zu authentifizieren. Letzteres wird durch die Authentifizierung des Nutzers 102 und des ID-Provider-Computersystems 136 gegenüber dem ID-Token 106 ermöglicht, was einen Vertrauensanker schafft, basierend auf welchem weitere vertrauenskritische Anwendungen ausgeführt werden können, zum Beispiel die Signierung elektronischer Dokumente. Von besonderem Vorteil ist ferner, dass eine zentrale Speicherung der Attribute verschiedener Nutzer 102 nicht erforderlich ist.

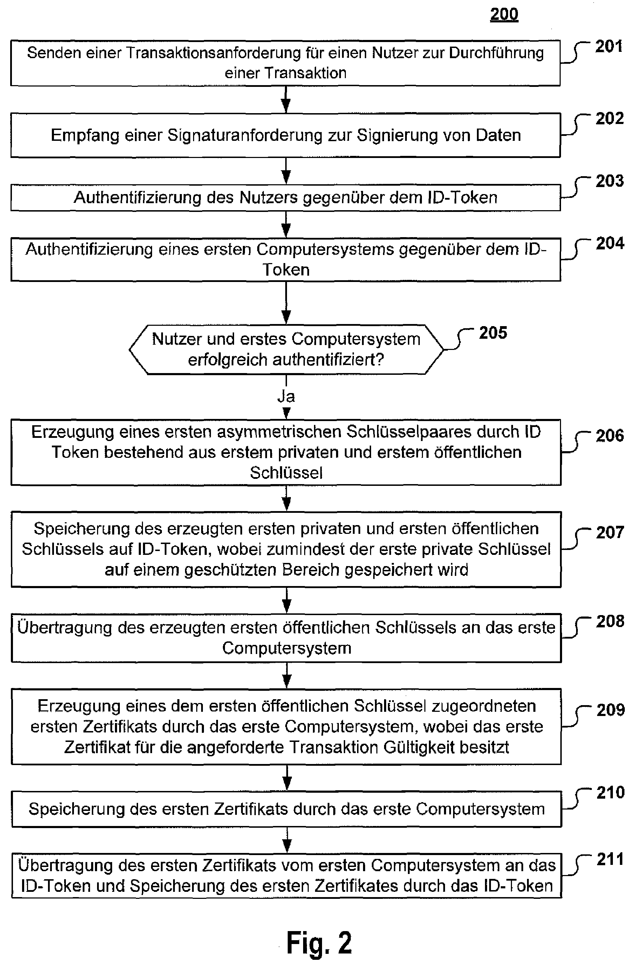

**Die** **Figur 2** zeigt eine Ausführungsform eines erfindungsgemäßen Verfahrens 200 zur Erstellung eines ersten Zertifikates. In dem Schritt 201 wird eine Transaktionsanforderung für den Nutzer zur Durchführung einer Transaktion zum Beispiel von dem Nutzer-Computersystem 100 an das Dienst-Computersystem 150 gesendet. Beispielsweise startet der Nutzer 102 hierzu einen Internet-Browser des Nutzer-Computersystems 100 und gibt eine URL zum Aufruf einer Webseite des Dienst-Computersystems 150 ein. In die aufgerufene Webseite gibt der Nutzer dann seine Transaktionsanforderung ein, zum Beispiel einen Antrag an ein Geldinstitut auf Bewilligung eines Kredites einer bestimmten Höhe.

Schritt 202 beinhaltet den Empfang einer Signaturanforderung zur Signierung von Daten, wobei die Signierung der Daten zur Durchführung der angeforderten Transaktion erforderlich ist. Der Empfang der Signaturanforderung erfolgt dabei als Antwort auf den Schritt des Sendens 201 der Transaktionsanforderung.. Das Nutzer-Computersystem 100 kann beispielsweise von einem zweiten Computersystem wie zum Beispiel einem Computersystem des Kreditinstitutes, an welches die Transaktionsanforderung im Schritt 201 gerichtet wurde, eine Signaturanforderung empfangen. Diese Signaturanforderung kann zum Beispiel ein oder mehrere elektronische Dokumente, welche durch den Nutzer signiert werden sollen, enthalten. Gemäß weiterer Ausführungsformen der Erfindung kann die Signaturanforderung ferner einen ersten Datenwert enthalten, welcher zur Beschränkung der Gültigkeit des zu generierenden Zertifikates geeignet ist. Gemäß weiteren Ausführungsformen kann der erste Datenwert auch zu einem späteren Zeitpunkt an das Nutzer-Computersystem übertragen werden.

Gemäß Ausführungsformen der Erfindung erfolgt im Schritt 203 die Authentifizierung des Nutzers 102 gegenüber dem ID-Token 106, und im Schritt 204 eine Authentifizierung eines ersten Computersystems, zum Beispiel des ID Provider Computersystems 136, bei dem ID-Token 106. Zusätzlich kann eine Authentifizierung auch des ID-Tokens gegenüber dem ID-Provider-Computersystem vorgesehen sein. Im Schritt 205 wird geprüft, ob sich sowohl der Nutzer 102 als auch das erste Computersystem 136 erfolgreich bei dem ID-Token 106 authentifiziert haben. Nur wenn dies der Fall ist, das Ergebnis des Prüfschrittes 205 also positiv ist, kann Schritt 206 ausgeführt werden.

Schritt 206 beinhaltet, dass das erste Computersystem mittels eines entsprechenden Kommandos den Prozessor 128 des ID-Tokens 106 zur Ausführung der Programminstruktionen 170 zur Erstellung eines ersten asymmetrischen Schlüsselpaares veranlasst. Gemäß weiterer Ausführungsformen der Erfindung kann Schritt 206 zudem beinhalten, dass das ID-Provider-Computersystem von dem ID-Token die Zugriffsberechtigung zum Auslesen der Attribute von Speicherbereich 124 erhält, welche dann zum Beispiel mittels Ende-zu-Ende-Verschlüsselung über eine sichere Verbindung an das ID-Provider-Computersystem übertragen werden. Die ausgelesenen Attributwerte können dann von dem ID-Provider-Computersystem mittels zweiter Signaturschlüssel signiert und über das Netzwerk 116 an zum Beispiel ein zweites Computersystem 150 entweder direkt oder über das Nutzer-Computersystem 100 übertragen werden.

Im darauf folgenden Schritt 207 werden der erzeugte erste private Schlüssel und der erzeugte erste öffentliche Schlüssel auf dem ID-Token gespeichert. Der erste private Schlüssel wird dabei auf den geschützten Bereich 122 gespeichert. Ferner wird in Schritt 208 der erzeugte erste öffentliche Schlüssel an das erste Computersystem, zum Beispiel das ID-Provider-Computersystem 136, übertragen. In Schritt 209 erzeugt das ID-Provider-Computersystem ein dem ersten öffentlichen Schlüssel zugeordnetes erstes Zertifikat. Dieses erste Zertifikat hat für die angeforderte Transaktion Gültigkeit und wurde nur speziell zur Durchführung der angeforderten Transaktion erstellt. In Schritt 210 kann nun das generierte erste Zertifikat von dem ersten Computersystem gespeichert und öffentlich zur Verfügung gestellt werden. Je nach Ausführungsform der Erfindung kann in einem weiteren Schritt 211 das erzeugte erste Zertifikat zudem auf den Speicherbereich 126 des ID-Tokens 106 geschrieben werden.

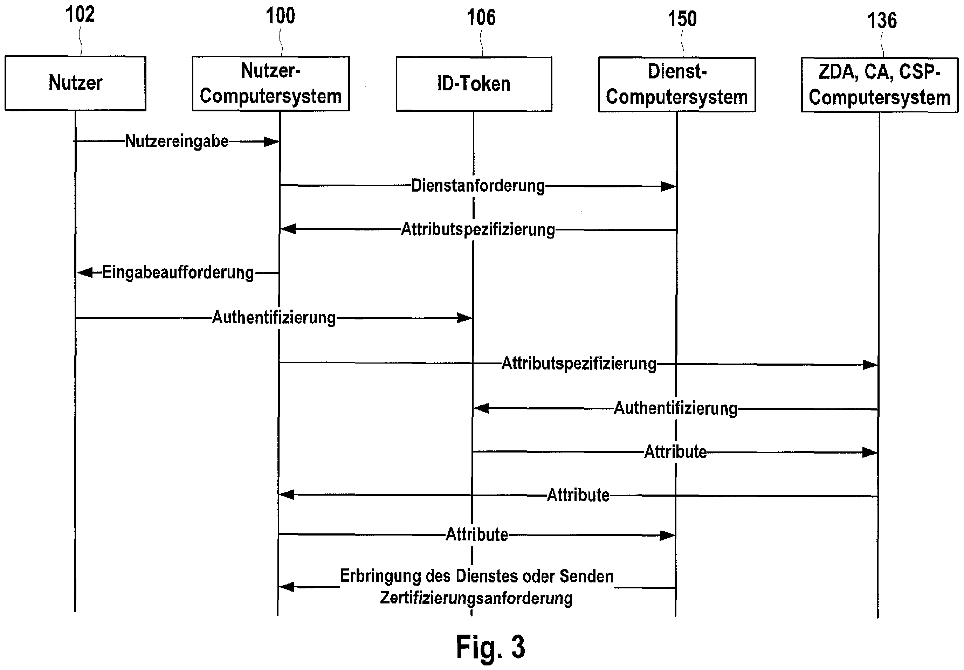

**Figur 3** zeigt weitere vorteilhafte Verfahrensschritte, welche durch ID-Token, welche zusätzlich noch ein oder mehrere Nutzer-spezifische Attribute in dem geschützten Speicherbereich 124 gespeichert haben, ausführbar sind. Diese Schritte dienen nicht unmittelbar der Zertifikaterstellung, sind jedoch in der Praxis besonders vorteilhaft, weil sie in Kombination mit erfindungsgemäßen Schritten zur Erzeugung eines Zertifikats die elektronische Transaktionsabwicklung im E-Commerce-Bereich enorm vereinfachen können. So kann mittels der im folgenden beschriebenen und in Figur 3 dargestellten Arbeitsschritte sich der Nutzer eines erfindungsgemäßen ID-Tokens zusätzlich bei einem Dienst authentifizieren oder zumindest beweisen, dass er zur Wahrnehmung eines bestimmten Dienstes berechtigt ist, zum Beispiel dass er ein gewisses Mindestalter hat. Beispielsweise könnte sich der Nutzer über diese Authentifizierungsfunktion zunächst überhaupt erst einmal Zugang zu einem Dienst verschaffen, um dann im nächsten Schritt einen rechtsverbindlichen Vertrag mit dem Dienstanbieter dadurch einzugehen, dass der Nutzer dem Dienstanbieter eine Transaktionsanforderung entsprechend des erfindungsgemäßen Verfahrens schickt, ein elektronisches Vertragsdokument erhält, dieses ausfüllt, mit Hilfe des ID-Tokens und des darin generierten privaten Schlüssels signiert und so einen rechtsverbindlichen Vertrag mit dem Dienstleister eingeht.

Im Folgenden wird also speziell die Authentifizierungsfunktion, welche in Kombination mit der Signaturfunktion der ID Karte besonders vorteilhaft ist, beschrieben.

Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines dort angebotenen Dienstes. Die Dienstanforderung des Nutzers 102 wird von dem Nutzer-Computersystem 100 an das Dienst-Computersystem 150 übertragen.

Das Dienst-Computersystem 150 antwortet auf die Dienstanforderung mit einer Attributspezifizierung, d.h. beispielsweise einer Liste von Attributnamen. Beispielsweise könnte der Dienst da Attribut 'Alter' abfragen. Die Attributspezifizierung 166 beinhaltet eine Spezifizierung derjenigen Attribute des ID-Tokens 106, deren Kenntnis das Dienst-Computersystem 150 benötigt, um den von dem Nutzer 102 gewünschten Dienst erbringen zu können. Diese Attributspezifizierung ist eine Anforderung des Dienst-Computersystems 150 an das ID-Provider-Computersystem 136 zum sicheren Lesen dieser Attribute. Nach Empfang der Attributspezifizierung fordert das Nutzer-Computersystem 100 den Nutzer 102, beispielsweise durch eine Eingabeaufforderung, zur Authentifizierung gegenüber dem ID-Token 106 auf.

Der Nutzer 102 authentifiziert sich daraufhin gegenüber dem ID-Token 106, beispielsweise durch Eingabe seiner ersten PIN. Nach erfolgreicher Authentifizierung wird die Attributspezifizierung von dem Nutzer-Computersystem 100 an ein ID-Provider-Computersystem 136 weitergeleitet. Dieses authentifiziert sich daraufhin gegenüber dem ID-Token 106 und richtet eine Leseanforderung zum Lesen der Attribute gemäß der Attributspezifizierung an das ID-Token 106. Beispielsweise liest das ID-Provider-Computersystem nun das Attribut zur Altersangabe des Nutzers aus dem geschützten Speicherbereich 124.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen. Das ID-Provider-Computersystem 136 signiert die Attribute mit einem dem ID Providercomputersystem eigenen zweiten Signaturschlüssel, welcher zu einem zweiten asymmetrischen Schlüsselpaar gehört, und sendet die signierten Attribute an das Nutzer-Computersystem 100. Nach Freigabe durch den Nutzer 102 werden die signierten Attribute dann an das Dienst-Computersystem 150 übertragen, welches dann ggf. den gewünschten Dienst erbringen kann.

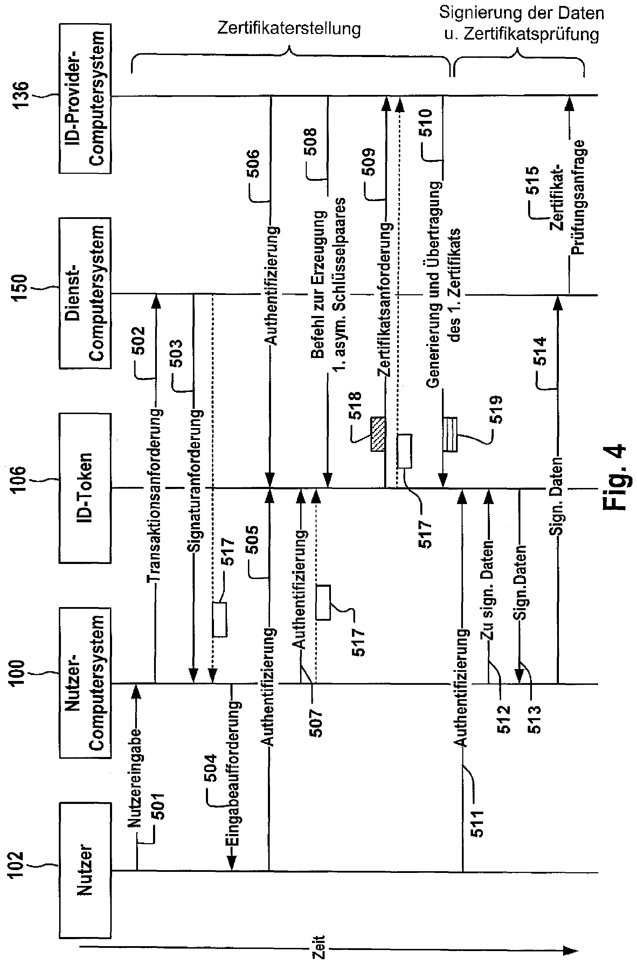

**Figur 4** zeigt ein Ablaufschema einer Ausführungsform des erfindungsgemäßen Verfahrens zur Erzeugung eines Zertifikats mittels des ID-Tokens 106 in Form eines UML Diagramms. Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Eine entsprechende Transaktionsanforderung 502 des Nutzers 102 wird von dem Nutzer-Computersystem 100 an das Dienst-Computersystem 150 übertragen. Diese Transaktionsanforderung kann zum Beispiel ein ausgefülltes HTML Formular darstellen, in welchem der Nutzer bei dem Dienst, zum Beispiel einer Bank, ersucht, beispielsweise um die Erteilung eines Kredites und die Zusendung der zugehörigen Vertragsunterlagen/Dokumente.

Das Dienst-Computersystem 150 antwortet auf die Transaktionsanforderung 502 mit einer Signaturanforderung 503, d.h. beispielsweise der Zusendung eines elektronischen Dokumentes an den Nutzer zusammen mit der Aufforderung, dieses ausgefüllt und versehen mit einer dem Nutzer zugehörigen Signatur, insbesondere einer qualifizierten elektronischen Signatur, zu versehen und an den Dienst zurückzusenden. Nach Empfang der Signaturanforderung 503 fordert das Nutzer-Computersystem 100 den Nutzer 102, beispielsweise durch eine Eingabeaufforderung 504, zur Authentifizierung 505 gegenüber dem ID-Token 106 auf.

Der gepunktete Pfeil unmittelbar unter der Signaturanforderung 503, welcher von dem Dienst-Computersystem 150 in Richtung auf das Nutzer-Computersystem 100 zeigt, deutet an, dass die Signaturanforderung 503gemäß mancher Ausführungsformen der Erfindung einen ersten Datenwert 517 beinhalten kann, welcher geeignet ist, die Gültigkeit des zu erstellenden ersten asymmetrischen Signatur-Schlüsselpaares und des zugehörigen ersten Zertifikats zu beschränken. Gemäß weiteren Ausführungsformen können auch mehrere Datenwerte 517, die geeignet sind, die Gültigkeit des zu erstellenden ersten asymmetrischen Signatur-Schlüsselpaares und des zugehörigen ersten Zertifikats zu beschränken, übertragen werden. Bei den im Folgenden erläuterten Ausführungsformen wird das Verfahren für einen ersten Datenwert 517 beschrieben. Dieser erste Datenwert 517 kann zum Beispiel ein Hashwert des übermittelten elektronischen Dokumentes, eine Dokumentennummer, Transaktionsnummer, Rechnungsnummer, Auftragsnummer, ein Identifikator des Betreibers des zweiten Computersystems, ein Identifikator des zweiten Computersystems selbst oder dergleichen sein. Ebenso kann der erste Datenwert ein von diesen Nummern oder dem Inhalt des Dokuments abgeleiteter Wert, zum Beispiel ein Hashwert, sein.

Der zeitliche Verlauf des in Figur 4 dargestellten Verfahrens verläuft von oben nach unten entsprechend des auf der linken Seite der Figur dargestellten Zeitpfeiles. Hinsichtlich mancher Details kann sich der Ablauf der einzelnen Schritte je nach Ausführungsform leicht unterschiedlich gestalten.

Gemäß mancher Ausführungsformen der Erfindung ist es notwendig, dass sich sowohl der Nutzer 102 als auch das ID-Provider-Computersystem 136 bei dem ID-Token 106 authentifizieren, bevor das ID-Provider-Computersystem einen Befehl zur Erzeugung eines ersten asymmetrischen Schlüsselpaares an das ID-Token 106 senden kann. Die Authentifizierung des ID-Provider-Computersystems durch Pfeil 506 dargestellt. Gemäß weiteren Ausführungsformen authentifiziert sich in Schritt 507 auch das Nutzer-Computersystem 100 am ID-Token. Ob sich zunächst der Nutzer und danach das ID-Provider-Computersystem bei dem ID-Token authentifizieren oder umgekehrt hängt von der jeweiligen Ausführungsform der Erfindung ab. Der Nutzer 102 authentifiziert sich in Schritt 505 gegenüber dem ID-Token 106, beispielsweise durch Eingabe einer ersten PIN. Diese Authentifizierung findet gemäß der hier dargestellten Ausführungsform vermittelt über das Nutzer-Computersystem 100 statt.

Gemäß weiteren Ausführungsformen wird der erste Datenwert 517, welchen das Nutzer-Computersystem 100 im Zuge des Erhalts der Signaturanforderung von dem Dienst-Computersystem 150 erhalten hat, zum Beispiel auf dem Nutzer-Computersystem 100 zwischengespeichert. Der erste Datenwert 517 kann z.B. im Zuge der Authentifizierung 505 des Nutzers 102 über das Nutzer-Computersystem 100 bei dem ID-Token 106 an das ID-Token weitergereicht werden. Der erste Datenwert kann auch z.B. im Zuge einer Authentifizierung 507 des dritten Computersystems bei dem ID-Token 507 oder zu einem anderen Zeitpunkt an das ID-Token übertragen werden. Die Weiterleitung des ersten Datenwertes 517, welcher zur Beschränkung der Gültigkeit des aufzustellenden Zertifikates von dem Nutzer-Computersystem an das ID-Token übermittelt wird, ist auch hier in Form eines gepunkteten Pfeiles unmittelbar unterhalb des Authentifizierungspfeils 507 dargestellt.

In dem durch Pfeil 508 repräsentierten Schritt erfolgt die Übermittlung eines Befehls zur Erzeugung eines ersten asymmetrischen Schlüsselpaares. Gemäß bevorzugten Ausführungsformen der Erfindung erfolgt die Übermittlung dieses Befehls über eine gesicherte Kommunikationsverbindung von dem ID Providercomputersystem an das ID-Token.

Der Prozessor des ID-Tokens führt die Programminstruktionen zur Generierung des ersten asymmetrischen Schlüsselpaares aus, speichert den ersten privaten Schlüssel in geschützten Speicherbereich 122 und den zugehörigen ersten öffentlichen Schlüssel 518 in Speicherbereich 172. Der erste öffentliche Schlüssel 518 kann nun von dem ID-Provider-Computersystem 136 vom Speicherbereich 172 des ID-Tokens 106 gelesen werden und zur Generierung eines zugehörigen ersten Zertifikates 519 verwendet werden: Gemäß Ausführungsformen der Erfindung wird im Zuge einer Zertifikatsanforderung 509 von dem ID-Token an das ID-Provider-Computersystem der erste öffentliche Schlüssel 518 von dem ID-Token an das ID-Provider-Computersystem übertragen. Zusätzlich zu dem öffentlichen Schlüssel 518 kann auch der erste Datenwert 517 von dem ID-Token durch das ID-Provider-Computersystem gelesenen und an das ID-Provider-Computersystem übertragen werden, wo der erste Datenwert 517 von dem ID Provider-Computersystem zur Bestimmung der Gültigkeitsdauer des generierten Zertifikats 519 verwendet wird. Gemäß der in Figur 4 dargestellten Ausführungsform wird sodann das generierte erste Zertifikat 519 veröffentlicht, an das ID-Token 106 in Schritt 510 zurückübertragen und in Speicherbereich 126 gespeichert.

Der in Speicherbereich 122 gespeicherte erste private Schlüssel, welcher dem übertragenen ersten Zertifikat 519 zugeordnet ist, kann nun zur Signierung von Daten, z.B. eines elektronischen Dokumentes, verwendet werden. Der private Schlüssel besitzt nur solange oder nur unter den Voraussetzungen (Rechts-) verbindlichkeit, wie dies in dem zugehörigen ersten Zertifikat 519 in Abhängigkeit von dem ersten Datenwert 517 spezifiziert ist.

Weitere Ausführungsformen der Erfindung sehen vor der Generierung der Signatur durch das ID-Token einen weiteren Authentifizierungsschritt 511 vor, bei welchem sich der Nutzer, z.B. mittels einer Signatur-PIN, bei dem ID-Token authentifiziert. Nach erfolgreicher Generierung des ersten asymmetrischen Schlüsselpaares können die in der Signaturanforderung 503 enthaltenen oder anderweitig bezogenen Daten, z.B. ein elektronisches Dokument, von dem Nutzer-Computersystem 100 an das ID-Token 106 in Schritt 512 übertragen werden. Die zu signierenden Daten, z.B. das übertragene elektronische Dokument, werden mittels des ersten privaten Schlüssels verschlüsselt und damit signiert. Die signierten Daten werden in Schritt 513 von dem ID-Token 106 an das Nutzer-Computersystem 100 zurück übertragen.

Gemäß weiterer Ausführungsformen der Erfindung wird ein aus den zu signierenden Daten, z.B. aus einem zu signierenden elektronischen Dokument, ein abgeleiteter Wert gebildet. Ein abgeleiteter Wert kann z.B. ein Hashwert des elektronischen Dokumentes sein. Nur dieser abgeleitete Wert wird gemäß dieser Ausführungsformen in Schritt 512 von dem dritten Computersystem an das ID-Token zur Signierung weitergeleitet, so dass die Menge der in Schritten 512 und 513 zu übertragenen Daten reduziert wird.

Der Nutzer hat nun die Möglichkeit, die signierten Daten in Schritt 514 von dem Nutzer-Computersystem 100 an das Dienst-Computersystem 150 zu übertragen, beispielsweise, indem er eine E-Mail an das Dienst-Computersystem schickt und die signierten Daten als Attachement beifügt. Zusätzlich zu den signierten Daten wird auch der erste öffentlichen Schlüssel 519, welcher zusammen mit dem ersten privaten Schlüssel, der zur Signierung verwendet wurde, das erste asymmetrische Schlüsselpaar bildet, an das Dienst-Computersystem 150 übertragen.

Nach Erhalt der signierten Daten und des zugehörigen ersten öffentlichen Schlüssels 519 kann das Dienst-Computersystem eine Zertifikat-Prüfungsanfrage 515 an das ID-Provider-Computersystem 136 schicken. Die Zertifikat-Prüfungsanfrage enthält, gemäß Ausführungsformen der Erfindung, den öffentlichen Schlüssel 519. Nach Erhalt der Zertifikat-Prüfungsanfrage bestimmt das ID-Provider-Computersystem 136 das zugehörige erste Zertifikat 519 und übermittelt dieses beziehungsweise die in diesem ersten Zertifikat enthaltenen Daten zurück an das Dienst-Computersystem 150. Dadurch wird das Dienst-Computersystem in die Lage versetzt, die Signatur der signierten Daten auf Authentizität und Gültigkeit zu überprüfen.

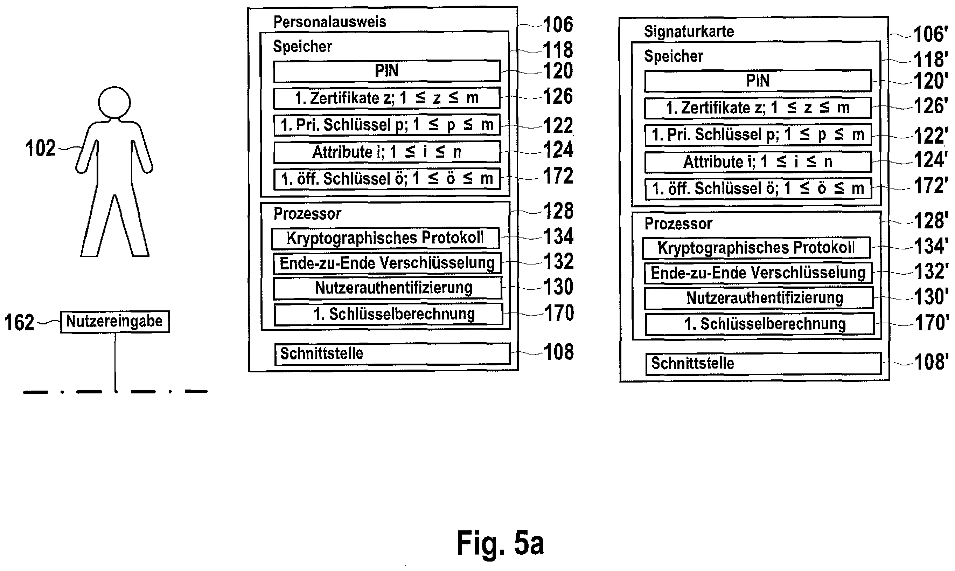

**Die** **Figur 5a** zeigt weitere Ausführungsformen eines erfindungsgemäßen ID-Tokens, welche als Dokument ausgebildet sind, zum Beispiel als Papier- und/oder kunststoffbasiertes Dokument mit einem integrierten elektronischen Schaltkreis, durch den die Schnittstelle 108, der Speicher 118 und der Prozessor 128 gebildet werden. Bei dem integrierten elektronischen Schaltkreis kann es sich beispielsweise um ein so genanntes Funketikett handeln, welches auch als RFID-Tag oder RFID-Label bezeichnet wird. Die Schnittstelle 108 kann aber auch kontaktbehaftet oder als so genanntes Dual Mode Interface ausgebildet sein.

Insbesondere kann es sich bei dem Dokument 106 um ein Wert- oder Sicherheitsdokument handeln, wie zum Beispiel um ein maschinenlesbares Reisedokument (MRTD), wie zum Beispiel einen elektronischen Reisepass oder einen elektronischen Personalausweis mit Signierfunktion, oder um ein Zahlungsmittel, wie zum Beispiel eine Kreditkarte mit zusätzlicher Signierfunktion, oder eine Karte zur Signierung elektronischer Dokumente.

In dem geschützten Speicherbereich 122 bei den hier betrachteten Ausführungsformen können 1 bis mehrere erste private Schlüssel p gespeichert sein, wobei 1 ≤ p ≤ m ist. Entsprechend sind in Speicherbereich 172 ein bis mehrere, den ersten privaten Schlüsseln jeweils zugeordnete öffentliche Schlüssel ö gespeichert, wobei 1 ≤ ö ≤ m ist. In den in Figur 5a dargestellten Ausführungsformen sind auch die zu den jeweiligen asymmetrischen Schlüsselpaaren gehörenden ersten Zertifikate auf dem ID-Token gespeichert. Entsprechend sind auf Speicherbereich 126 ein bis mehrere Zertifikate z gespeichert, wobei 1 ≤ z ≤ m ist. Die Generierung und Speicherung mehrerer erster asymmetrischen Schlüsselpaare und zugehöriger erster Zertifikate kann vorteilhaft sein, insbesondere wenn die ersten Schlüsselpaare und ersten Zertifikate für eine bestimmte oder einige wenige bestimmte Transaktionen beziehungsweise zu signierenden Dokumente erstellt wurden und nur für diesen Zweck beziehungsweise nur für diese Transaktionen Gültigkeit haben. So könnte eines der ersten asymmetrischen Schlüsselpaare zur Signierung eines Kreditvertrages erstellt worden und gültig sein, ein nächstes erstes asymmetrisches Schlüsselpaar zur Signierung eines Ratenkaufs einer Kücheneinrichtung bei einem bestimmten Online-Versandhaus, und ein weiteres erstes asymmetrisches Schlüsselpaar könnte für die Signierung der Steuererklärung erstellt worden und gültig sein.

In dem geschützten Speicherbereich 124 sind bei der hier betrachteten Ausführungsform ferner die Attribute i gespeichert, wobei 1 ≤ i ≤ n ist.

Bei einem der in Figur 5a exemplarisch gezeigten ID-Token 106 handelt es sich um einen elektronischen Personalausweis mit zusätzlicher Signierfunktion, bei einem weiteren, auf der rechten Seite der Figur 5a dargestellten ID-Token handelt es sich um eine speziell für die Signierung von elektronischen Dokumenten im Handel erhältliche Signaturkarte 106', bei welcher sich der Nutzer vor Verwendung der Signierfunktion authentifizieren muss. Der Nutzer 102 kann also über einen oder mehrere weitere ID-Token verfügen, die prinzipiell gleich aufgebaut sind, wie z.B. einen ID-Token 106, der als Personalausweis mit zusätzlicher Signaturfunktion fungiert, sowie ID-Token 106', einer primär für Signaturzwecke im Handel erworbenen Karte.

Beispielsweise handelt es sich bei dem Attribut i = 1 um den Namen, bei dem Attribut i = 2 um den Vornamen, bei dem Attribut i = 3 um die Adresse und bei dem Attribut i = 4 um das Geburtsdatum eines Nutzers, dem das ID-Token zugeordnet ist.

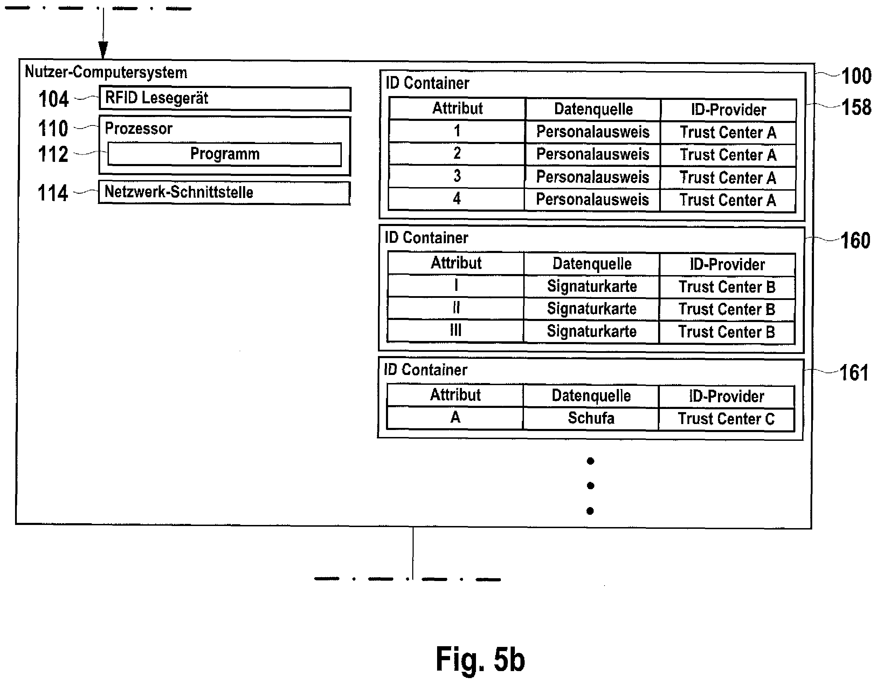

**Figur 5b** zeigt ein Blockdiagramm eines Nutzer-Computersystems mit mehreren Konfigurationsdatensätzen 160, 160'. Jeder Datensatz ist dabei einem erfindungsgemäßen ID-Token, welches neben der Signaturfunktionalität auch über eine Authentifizierungsfunktionalität verfügt, zugeordnet. Verschiedene Dienste können z.B. unterschiedliche Daten des Nutzers erfordern. Manche Dienste können z.B. nur eine Altersangabe erfordern, während andere Dienste die kompletten Adressdaten des Nutzers und/oder die Angabe weitere Attribute erfordern. Der Nutzer verwendet möglicherweise mehrere verschiedene ID-Token, auf welchen unterschiedliche personenbezogene Attribute in redundanter oder nicht-redundanter Form gespeichert sind. Um die Verwaltung der personenbezogenen Attribute, welche auf mehreren verschiedenen ID-Token gespeichert und jeweils von verschiedenen ID-Provider-Computersystemen ausgelesen werden dürfen, zu ermöglichen, verfügt das Nutzer-Computersystem 100 gemäß weiterer Ausführungsformen der Erfindung über ein Programm zur Verwaltung und Konfiguration einer Vielzahl von erfindungsgemäßen ID-Token, insbesondere der darin gespeicherten Attribute und Signaturschlüssel.

In dem Nutzer-Computersystem 100 können mehrere Konfigurationsdatensätze 158, 160, ... gespeichert sein. Jeder der Konfigurationsdatensätze gibt für eine bestimmte Attributmenge eine Datenquelle und ein ID-Provider-Computersystem an, welches die spezifizierte Datenquelle lesen kann. Bei dieser Ausführungsform kann das Nutzer-Computersystem 100 über das Netzwerk 116 verschiedene ID-Provider-Computersysteme 136, 136', ... ansprechen, die jeweils zu verschiedenen so genannten Trust-Centern gehören können. Beispielsweise gehört das ID-Provider-Computersystem 136 zu dem Trust-Center A und das im Prinzip gleich strukturierte ID-Provider-Computersystem 136' zu einem anderen Trust-Center B.

In dem Konfigurationsdatensatz 158, der auch als ID-Container bezeichnet wird, ist die Attributmenge der Attribute i = 1 bis i = 4 definiert. Diesen Attributen ist jeweils die Datenquelle "Personalausweis", d.h. der ID-Token 106 zugeordnet, sowie das Trust-Center A, d.h. das ID-Provider-Computersystem 136. Dieses kann beispielsweise in Form seiner URL in dem Konfigurationsdatensatz 158 spezifiziert sein.

In dem Konfigurationsdatensatz 160 ist dagegen eine Attributmenge I, II und III definiert. Als Datenquelle für diese Attribute ist jeweils die Signaturkarte, d.h. der ID-Token 106', angegeben. Der ID-Token 106' hat einen geschützten Speicherbereich 124', in dem die Attribute I, II, III, ... gespeichert sind. Bei dem Attribut I kann es sich zum Beispiel um den Namen des Inhabers der Signaturkarte, bei dem Attribut II um die Signaturkartennummer und bei dem Attribut III um die Gültigkeitsdauer der Signaturkarte handeln, etc.

Als ID-Provider-Computersystem ist in dem Konfigurationsdatensatz 160 das ID-Provider-Computersystem 136' des Trust-Centers B angegeben.

Alternativ zu der in der Figur 5b gezeigten Ausführungsform können in demselben Konfigurationsdatensatz für verschiedene Attribute auch verschiedene Datenquellen und/oder verschiedene ID-Provider-Computersysteme angegeben sein.

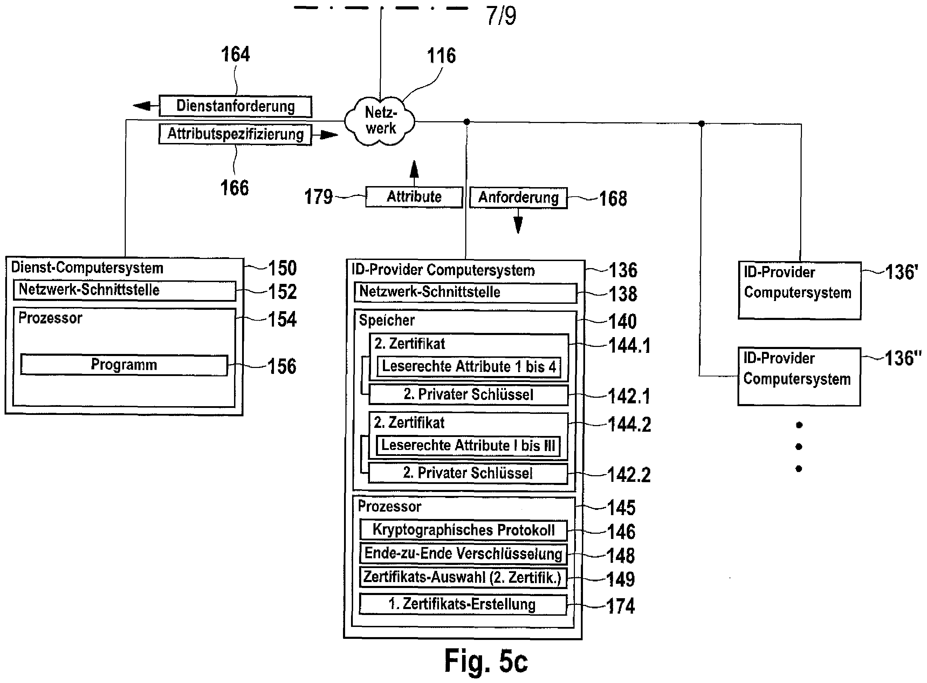

In der Ausführungsform der **Figur 5c** kann jedes der ID-Provider-Computersysteme 136, 136', ... jeweils mehrere zweite Zertifikate haben.

Beispielsweise sind in dem Speicher 140 des ID-Provider-Computersystems 136, der in der Figur 5a exemplarisch gezeigt ist, mehrere zweite Zertifikate, wie zum Beispiel die zweiten Zertifikate 144.1 und 144.2 mit den jeweils zugeordneten zweiten privaten Schlüsseln 142.1 und 142.2 gespeichert. In dem zweiten Zertifikat 144.1 sind Leserechte des ID-Provider-Computersystems 136 auf die Attribute i = 1 bis i = 4 definiert, wohingegen in dem zweiten Zertifikat 144.2 Leserechte auf die Attribute I bis III definiert sind.

Zur Inanspruchnahme eines von dem Dienst-Computersystem 150 angebotenen Dienstes tätigt der Nutzer 102 zunächst eine Nutzereingabe 162 in das Nutzer-Computersystem 100, um beispielsweise in eine Webseite des Dienst-Computersystems 150 seine Anforderung für den gewünschten Dienst einzugeben. Die Schnittstelle 104 des Nutzer-Computersystems 100 kann bei weiteren Ausführungsformen als RFID-Lesegerät ausgebildet sein, welches einen integralen Bestandteil des Nutzer-Computersystems bilden kann oder als separate Komponente an dieses angeschlossen sein kann.

Diese Dienstanforderung 164 wird von dem Nutzer-Computersystem 100 über das Netzwerk 116 an das Dienst-Computersystem 150 übertragen. Das Dienst-Computersystem 150 antwortet darauf mit einer Attributspezifizierung 166, d.h. mit einer Spezifizierung derjenigen Attribute, welche das Dienst-Computersystem 150 zur Bearbeitung der Dienstanforderung 164 von dem Nutzer 102 benötigt. Die Attributspezifizierung kann beispielsweise in Form der Attributnamen erfolgen, wie zum Beispiel "Name", "Vorname", "Adresse", "Kreditkartennummer".

Der Empfang der Attributspezifizierung 166 wird dem Nutzer 102 durch das Nutzer-Computersystem 100 signalisiert. Der Nutzer 102 kann daraufhin einen oder erforderlichenfalls mehrere der Konfigurationsdatensätze 158, 160, ... auswählen, die jeweils Attributmengen definieren, welche die Attribute gemäß der Attributspezifizierung 166 zumindest als Teilmenge beinhalten.

Verlangt der Attributspezifizierung 166 beispielsweise lediglich die Mitteilung des Namens, des Vornamens und der Adresse des Nutzers 102, so kann der Nutzer 102 den Konfigurationsdatensatz 158 auswählen. Wird dagegen zusätzlich in der Attributspezifizierung 166 die Signaturkartennummer spezifiziert, so kann der Nutzer 102 zusätzlich den Konfigurationsdatensatz 160 auswählen. Dieser Vorgang kann auch vollautomatisch durch das Nutzer-Computersystem 100, beispielsweise durch Ausführung der Programminstruktionen 112, durchgeführt werden.

Im Weiteren wird zunächst davon ausgegangen, dass nur einer der in Figur 5b dargestellten Konfigurationsdatensätze, wie zum Beispiel der Konfigurationsdatensatz 158, aufgrund der Attributspezifizierung 166 ausgewählt wird.

Das Nutzer-Computersystem 100 sendet daraufhin eine Anforderung 168 an das oder die in dem gewählten Konfigurationsdatensatz angegebene ID-Provider-Computersysteme, in dem betrachteten Beispiel an das ID-Provider-Computersystem 136 des Trust-Centers A. Diese Anforderung 168 beinhaltet eine Angabe der von dem ID-Provider-Computersystem 136 aus der in dem Konfigurationsdatensatz 158 angegebenen Datenquelle auszulesenden Attribute gemäß der Attributspezifizierung 166.

Das ID-Provider-Computersystem 136 wählt daraufhin eines oder mehrerer seiner zweiten Zertifikate aus, welche die zum Lesen dieser Attribute erforderlichen Leserechte aufweisen. Wenn beispielsweise die Attribute i = 1 bis 3 aus dem Personalausweis gelesen werden sollen, so wählt das ID-Provider-Computersystem 136 sein zweites Zertifikat 144.1 aus, weiches die dafür erforderlichen Leserechte definiert. Diese Auswahl des zweiten Zertifikats wird durch Ausführung der Programminstruktionen 149 durchgeführt.

Daraufhin wird die Ausführung eines kryptographischen Protokolls gestartet. Beispielsweise sendet das ID-Provider-Computersystem 136 hierzu eine Antwort an das Nutzer-Computersystem 100. Das Nutzer-Computersystem 100 fordert daraufhin den Nutzer 102 zu seiner Authentifizierung gegenüber der spezifizierten Datenquelle, d.h. hier gegenüber dem Personalausweis, auf.

Der Nutzer 102 bringt daraufhin seinen Personalausweis, d.h. das ID-Token 106, in den Bereich des RFID-Lesegeräts 104, und gibt beispielsweise seine PIN zu seiner Authentifizierung ein. Durch die erfolgreiche Authentifizierung des Nutzers 102 gegenüber dem ID-Token 106 wird dieser für die Durchführung des kryptographischen Protokolls, d.h. für die Durchführung der Programminstruktionen 134 freigeschaltet. Im Weiteren authentifiziert sich das ID-Provider-Computersystem 136 gegenüber dem ID-Token 106 mit Hilfe des ausgewählten zweiten Zertifikats 144.1, beispielsweise mit Hilfe eines Challenge-Response-Verfahrens. Diese Authentifizierung kann auch gegenseitig sein. Nach erfolgreicher Authentifizierung des ID-Provider-Computersystems 136 gegenüber dem ID-Token 106 richtet das ID-Provider-Computersystem eine Leseanforderung zum Lesen der erforderlichen Attribute an das Nutzer-Computersystem 100, welche dieses über das RFID-Lesegerät 104 an das ID-Token 106 weiterleitet. Der ID-Token 106 prüft anhand des zweiten Zertifikats 144.1, ob das ID-Provider-Computersystem 136 die dafür erforderlichen Leserechte hat. Wenn dies der Fall ist, werden die gewünschten Attribute aus dem geschützten Speicherbereich 124 ausgelesen und mittels Ende-zu-Ende-Verschlüsselung an das ID-Provider-Computersystem über das Nutzer-Computersystem 100 übertragen.

Das ID-Provider-Computersystem 136 sendet dann eine Antwort 179, die die ausgelesenen Attribute beinhaltet, über das Netzwerk 116 an das Dienst-Computersystem 150. Die Antwort 179 ist mit dem zweiten Zertifikat 144.1 digital signiert.

Alternativ sendet das ID-Provider-Computersystem 136 die Antwort 179 an das Nutzer-Computersystem 100. Der Nutzer 102 erhält daraufhin die Möglichkeit, die in der Antwort 179 beinhalteten Attribute zu lesen und zu entscheiden, ob er diese Attribute wirklich an das Dienst-Computersystem 150 weiterleiten möchte oder nicht. Erst nach Eingabe eines Freigabekommandos des Nutzers 102 in das Nutzer-Computersystem 100 wird dann die Antwort 179 an das Dienst-Computersystem 150 weitergeleitet. Bei dieser Ausführungsform ist es ferner möglich, dass der Nutzer 102 die Antwort 179 um weitere Daten ergänzt.

Wenn mehrere ID-Provider-Computersysteme 136, 136', ... involviert sind, so können die einzelnen Antworten der ID-Provider-Computersysteme durch das Nutzer-Computersystem 100 in einer einzigen Antwort, die sämtliche der Attribute gemäß Attributspezifizierung 166 beinhalten, zusammengefasst werden, welche dann von dem Nutzer-Computersystem 100 an das Dienst-Computersystem 150 gesendet wird.

Nach einer Ausführungsform der Erfindung kann der Nutzer 102 anlässlich der Dienstanforderung 164 ein oder mehrerer seiner Attribute gegenüber dem Dienst-Computersystem 150 offenbaren, beispielsweise indem diese Attribute des Nutzers als Teil der Dienstanforderung 164 über das Netzwerk 116 an das Dienst-Computersystem übertragen werden. Insbesondere kann der Nutzer 102 diese Attribute in die Webseite des Dienst-Computersystems 150 eingeben. Die Richtigkeit dieser Attribute wird dann durch die Antwort 179 bestätigt, d.h. das Dienst-Computersystem 150 kann die von dem Nutzer 102 empfangenen Attribute mit den von dem ID-Provider Computersystem 136 aus dem ID-Token 106 ausgelesenen Attribute vergleichen und auf Übereinstimmung prüfen.

Nach einer weiteren Ausführungsform der Erfindung kann auch zumindest ein weiteres Attribut in der Attributspezifizierung 166 angegeben sein, welches nicht auf einem der ID-Token des Nutzers 102 gespeichert ist, sondern von einer externen Datenquelle abfragbar ist. Hierbei kann es sich z.B. um ein Attribut betreffend die Kreditwürdigkeit des Nutzers 102 handeln. Das Nutzer-Computersystem 100 kann hierzu einen weiteren Konfigurationsdatensatz 161 beinhalten, welcher für das Attribut A - z.B. die Kreditwürdigkeit - die Angabe einer Datenquelle und eines ID-Provider Computersystems beinhaltet. Bei der Datenquelle kann es sich um eine Online Auskunftei, wie z.B. Schufa, Dun & Bradstreet oder dergleichen handeln. Als ID-Provider Computersystem ist beispielsweise ein Trust Center C angegeben. Die Datenquelle kann sich hier in dem Trust Center C befinden.

Um das Attribut A abzufragen richtet also das Nutzer-Computersystem 100 eine entsprechende Anforderung an das Trust Center C, d.h. das ID-Provider Computersystem 136". Dieses liefert daraufhin das Attribut A, welches das Nutzer-Computersystem 100 zusammen mit den weiteren Attributen, die aus dem oder den ID-Token des Nutzers 102 ausgelesen wurden, an das Dienst-Computersystem 150 weiterleitet.

Vorzugsweise erfolgt die Abfrage des Attributs A nachdem die die digitale Identität des Nutzer 102 betreffenden Attribute bereits aus einem der ID-Token des Nutzers 102 abgefragt worden sind, und beispielsweise als signierte Antwort 179 von dem Nutzer-Computersystem 100 empfangen worden sind. Die Abfrage des Attributs A durch das Nutzer-Computersystem 100 von dem ID-Provider Computersystem 136" beinhaltet dann die signierte Antwort 179, so dass das ID-Provider Computersystem 136" hinsichtlich der Identität des Nutzers 102 ein sichere Information hat.

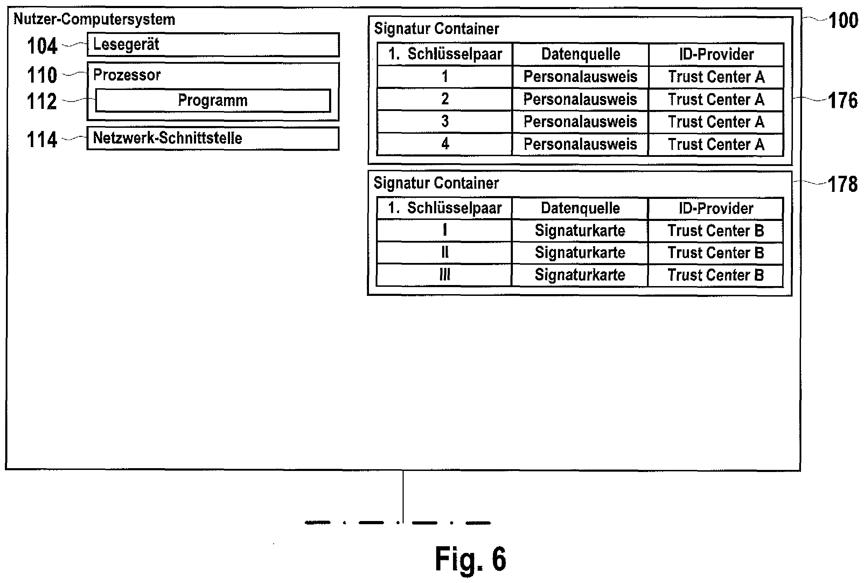

**Figur 6** zeigt ein Blockdiagramm eines Nutzer-Computersystems mit mehreren Konfigurationsdatensätzen 176, 178. Jeder Konfigurationsdatensatz 176, 178 ist dabei einem erfindungsgemäßen ID-Token, welches neben der Signaturfunktionalität auch über eine Authentifizierungsfunktionalität verfügt, zugeordnet. Verschiedene Dienste können z.B. für Signierungszwecke unterschiedliche Zertifizierungsanfragen an das Nutzer-Computersystem gesendet haben, was die Generierung mehrerer erster asymmetrischer Schlüsselpaare und zugehöriger erster Zertifikate zu Signierungszwecken zur Folge hatte. Ein Bankdienstleister könnte beispielsweise die Erstellung eines ersten asymmetrischen Schlüsselpaares spezifisch für ein bestimmtes Kreditvertragsdokument veranlasst haben, während ein Anbieter von Haushaltsgeräten die Erstellung eines ersten asymmetrischen Schlüsselpaares und zugehörigem ersten Zertifikat für alle Bestellvorgänge, welche dem Nutzer als Kunden zuzurechnen sind, veranlasst haben könnte. Die Vielzahl der generierten ersten asymmetrischen Schlüsselpaare und zugehörigen ersten Zertifikate kann dabei von dem gleichen oder mehreren unterschiedlichen ID-Provider-Computersystemen 136 zertifiziert worden sein. Die ersten asymmetrischen Schlüsselpaare und gegebenenfalls auch die zugehörigen ersten Zertifikate können alle auf dem gleichen oder mehreren unterschiedlichen ID-Token des Nutzers 102 gespeichert worden sein. Um zu gewährleisten, dass der Nutzer 102 auch im Falle der Verwendung mehrere erfindungsgemäßer ID-Token zu Signaturzwecken und gegebenenfalls auch für Identifizierungszwecke verwendet, kann auf dem Nutzer-Computersystem 100 ein Programm zur Verwaltung mehrerer Konfigurationsdatensätze 176,178 installiert sein.

Jeder der Konfigurationsdatensätze 176,178 gibt für ein bestimmtes erstes asymmetrisches Schlüsselpaar und zugehöriges erstes Zertifikat eine Datenquelle sowie ein ID-Provider-Computersystem an, welche an der Generierung des jeweiligen ersten asymmetrischen Schlüsselpaares beteiligt waren. Jeder Konfigurationsdatensatz gibt also an, über welches ID-Provider-Computersystem ein elektronisches Dokument, welches mit einem bestimmten ersten privaten Schlüssel signiert wurde, verifiziert werden kann.

Nach weiteren Ausführungsformen der Erfindung kann der Nutzer des Nutzer-Computersystems 100 mithilfe dieses Verwaltungsprogrammes und der darin enthaltenen Konfigurationsdaten unter einer Vielzahl von Datenquellen (Personalausweis mit Signier-Funktion, Signaturkarte, Kreditkarte mit Signier-Funktion, USB Stick mit Signier-Funktion etc.) und einer Vielzahl darauf gespeicherter erster privater Signaturschlüssel wählen. Nach Auswahl einer bestimmten Datenquelle und eines darauf enthaltenen privaten Signaturschlüssels kann der Nutzer also ein elektronisches Dokument signieren und an ein Dienst-Computersystem 150 senden. Da mithilfe der Konfigurationsdatensätze 176,178 jedem privaten Signaturschlüssel ein ID-Provider (ZDA) eindeutig zugeordnet ist, kann der Nutzer zusammen mit den signierten elektronischen Dokument gleichzeitig immer auch zum Beispiel eine URL oder einen anderen Bezeichner zu dem ID-Provider, welcher dem verwendeten privaten Signaturschlüssel zugeordnet ist, an das Dienst-Computersystem senden. Das Dienst-Computersystem erhält also nicht nur ein signiertes elektronisches Dokument sondern automatisch auch Angaben zu dem ID-Provider, bei welchem das Dienst-Computersystem die Gültigkeit der Signatur des empfangenen signierten elektronischen Dokumentes überprüfen kann.

In dem Konfigurationsdatensatz 176, der auch als Signatur-Container bezeichnet wird, ist ein Satz von asymmetrischen ersten Schlüsselpaaren i = 1 bis i = 4 definiert. Diesen Schlüsselpaaren ist jeweils die Datenquelle "Personalausweis", d.h. der ID-Token 106 zugeordnet, sowie das Trust-Center A, d.h. das ID-Provider-Computersystem 136. Dieses kann beispielsweise in Form einer URL in dem Konfigurationsdatensatz 158 spezifiziert sein.

In dem Konfigurationsdatensatz 178 ist dagegen eine Menge an ersten asymmetrischen Schlüsselpaares I, II und III definiert. Als Datenquelle für diese Attribute ist jeweils die Signaturkarte, d.h. der ID-Token 106', angegeben. Der ID-Token 106' hat einen geschützten Speicherbereich 122', in dem die ersten privaten Signaturschlüssel der ersten asymmetrischen Schlüsselpaares I, II, III, ... gespeichert sind. Bei dem Schlüsselpaar I kann es sich zum Beispiel um ein erstes asymmetrisches Schlüsselpaar handeln, welches zur Signierung eines Kreditvertrages erstellt wurde.

Als ID-Provider-Computersystem ist in dem Konfigurationsdatensatz 178 das ID-Provider-Computersystem des Trust-Centers B angegeben.

Alternativ zu der in der Figur 6 gezeigten Ausführungsform können in demselben Konfigurationsdatensatz für verschiedene erste asymmetrische Schlüsselpaare auch verschiedene Datenquellen und/oder verschiedene ID-Provider-Computersysteme angegeben sein.

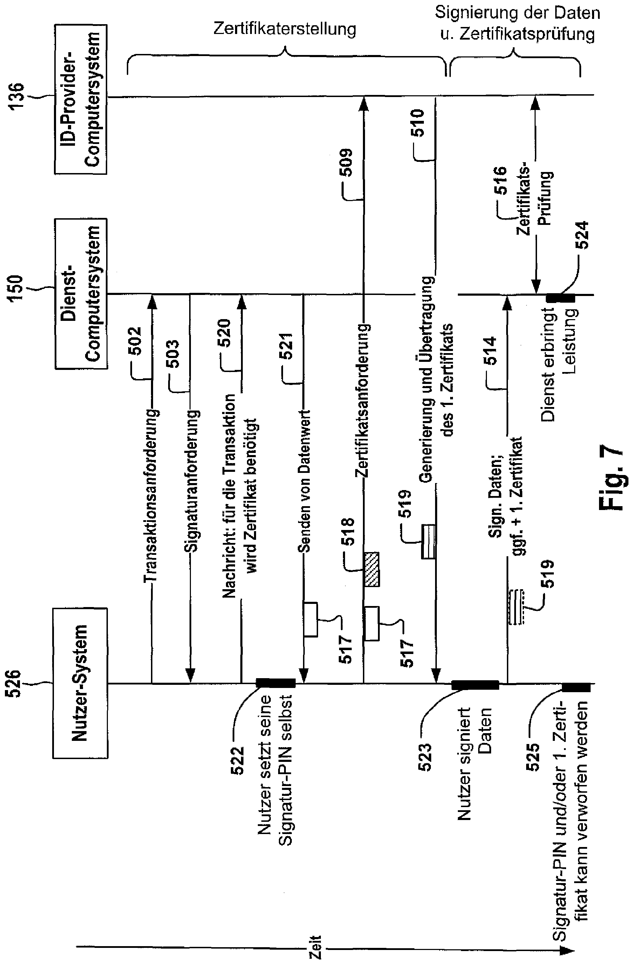

**Figur 7** zeigt ein Ablaufschema gemäß einer Ausführungsform des erfindungsgemäßen Verfahrens zur Erzeugung eines Zertifikats in Form eines UML Diagramms. Die in Figur 4 erläuterten Datenverarbeitung- und Kommunikations-Schritte zwischen dem Nutzer-Computersystem 100 und dem ID-Token 106 sind in Figur 7 zusammengefasst und durch das Nutzer-System 526 repräsentiert. Das Nutzer-System 526 repräsentiert gemäß Ausführungsformen der Erfindung des in Figur 4 beschriebenen Nutzer-Computersystems 100 und ID-Tokens 106. Die in Figur 7 dargestellten Schritte beziehen sich also im Wesentlichen auf Datenkommunikationsschritte zwischen der Nutzerseite, der Dienstseite und der der ID-Provider-Computersystemseite. Die Datenverarbeitungsschritte, welche auf der Nutzerseite stattfinden, basieren gemäß Ausführungsformen der Erfindung auf den in Figur 4 dargestellten Schritten. Gemäß weiteren Ausführungsformen kann die konkrete Implementierung der auf der Nutzerseite ablaufenden Verfahrensschritte der Erstellung eines digitalen Zertifikats sowie der Signierung von Daten auch von den im Kontext von Figur 4 beschriebenen Ausführungsformen abweichen.

Zunächst wird eine Transaktionsanforderung 502 von dem Nutzer-System 526 an das Dienst-Computersystem 150 gesendet. Dies kann zum Beispiel durch Ausfüllen eines durch das Dienst-Computersystem 150 bereitgestellten HTML Formulars zur Bestellung eines Buches von einem Online-Buchhändler durch den Nutzer 102 geschehen.

Nachdem das Dienst-Computersystem 150 die Transaktionsanforderung 502 erhalten hat, sendet es eine Signaturanforderung 503 an das Nutzer-System 526. Die Signaturanforderung 503 kann Daten, deren Signierung zur Durchführung der angeforderten Transaktion notwendig ist, enthalten. Je nach Art der angeforderten Transaktion kann sich das Nutzer-System 526 die zu signierenden Daten aber auch anderweitig beschaffen.

Nach Erhalt der Signaturanforderung 503 durch das Nutzer-System 526 erfolgt eine Prüfung, ob ein erstes Zertifikat zur Verfügung steht, welches zum Nachweis der Gültigkeit der gemäß der Signaturanforderung 503 zu erbringenden Signatur geeignet ist. Das Zertifikat muss zudem für die angeforderte Transaktion Gültigkeit besitzen, d.h., darf z.B. nicht abgelaufen sein. Gemäß Ausführungsformen der Erfindung kann es mehrere Gründe dafür geben, dass ein geeignetes Zertifikat nicht verfügbar ist. Falls der Nutzer zum Beispiel seine Signatur-PIN vergessen hat oder zum Beispiel aus Kostengründen über kein eigenes geeignetes Zertifikat verfügt, ergibt die Prüfung, dass kein erstes asymmetrisches Schlüsselpaar mit zugeordnetem gültigen Zertifikat vorhanden ist. Gleiches gilt, wenn z.B. verfügbare erste Zertifikate abgelaufen sind.

Gemäß Ausführungsformen des erfindungsgemäßen ersten Computersystems 136 verfügt dieses über Mittel zur Prüfung, ob auf dem ID-Token des Nutzers bereits ein existierendes asymmetrisches Schlüsselpaar mit zugeordnetem gültigen Zertifikat auf dem ID-Token vorhanden ist, wobei ein neues asymmetrisches Schlüsselpaar und ein diesem neuen asymmetrischen Schlüsselpaar zugeordnetes Zertifikat nur dann erstellt werden, falls in dem ID-Token kein bereits existierendes asymmetrisches Schlüsselpaar mit zugeordnetem gültigen Zertifikat gespeichert ist.

Ergibt die Prüfung, dass ein geeignetes erstes Zertifikat nicht vorhanden ist, wird in Schritt 520 eine Nachricht von dem Nutzer-System 526 an das Dienst-Computersystem 150 gesendet, wobei die Nachricht beinhaltet, dass kein geeignetes erstes Zertifikat vorhanden ist beziehungsweise dass die Ausstellung eines solchen geeigneten ersten Zertifikates erforderlich ist.

In Vorbereitung auf einen zur Durchführung der angeforderten Transaktion benötigten Signaturschritt kann der Nutzer 102, dem das Nutzer-System 526 zugeordnet ist, seine Signatur-PIN selbst setzen.

Nach Erhalt der Nachricht sendet das Dienst-Computersystem 150 in Schritt 521 einen ersten Datenwert 517 an das Nutzer-System 526. Der erste Datenwert kann einen Zeitraum angeben, während dessen das auszustellende Zertifikat Gültigkeit besitzen soll. Nach weiteren Ausführungsformen der Erfindung ist der erste Datenwert 517 ein von den zu signierenden Daten abgeleiteter Wert, z.B. ein Hash-Wert, oder ein Bestandteil der zu signierenden Daten, zum Beispiel die Dokumentnummer oder eine Auftragsnummer eines zu signierenden elektronischen Dokumentes.

Gemäß weiterer Ausführungsformen der Erfindung ist der erste Datenwert 517 geeignet, dem Nutzer 102 zu signalisieren, dass die Kosten für die Ausstellung des ersten Zertifikates nicht vom Nutzer 102 getragen werden müssen, sondern dass die Kosten vom Betreiber des Dienst-Computersystems 150 getragen werden. Das Nutzer-System 526 kann beispielsweise über eine Software verfügen, welche geeignet ist, nach Erhalt des ersten Datenwertes 517 eine entsprechende Meldung an den Benutzer 102 zu generieren.

Gemäß weiteren Ausführungen der Erfindung ist der erste Datenwert 517 zudem geeignet, dem ID-Providercomputersystem 136 anzuzeigen, dass es sich bei dem auszustellenden ersten Zertifikat um ein einmal-Zertifikat handelt, welches in seiner Gültigkeit auf die Signaturerstellung für ein einziges elektronisches Dokument z.B. mit einer bestimmten Dokumentennummer, welche mit dem ersten Datenwert 517 übereinstimmt, beschränkt ist. Anders als bei vorbekannten Signaturverfahren wird zur Durchführung einer angeforderten Signatur also nach bevorzugten Ausführungsformen der Erfindung nicht auf bestehende Zertifikate zurückgegriffen, sondern es wird speziell für die angeforderte Transaktion die Ausstellung eines in seiner Gültigkeit begrenzten Zertifikates initiiert.

Nach Erhalt des ersten Datenwertes 517 kann gemäß Ausführungsformen der Erfindung durch das Nutzer-System 526 ein erstes asymmetrisches Schlüsselpaar gebildet werden.

Der erste Datenwert 517 und der erste öffentliche Schlüssel des ersten asymmetrischen Schlüsselpaares werden im Zuge der Zertifikatsanforderung 509 von dem Nutzer-System 526 an das ID-Provider-Computersystem 136 übertragen. Das ID-Provider-Computersystem 136 erstellt nach Empfang der Zertifikatsanforderung 509 ein erstes Zertifikat 519 für den ersten öffentlichen Schlüssel 518. Die Gültigkeit des erstellten Zertifikates 519 wird dabei von dem ersten Datenwert 517 bestimmt. Spezifiziert der erste Datenwert 517 beispielsweise einem Zeitraum der Gültigkeit des Zertifikates, so ist dieser Gültigkeitszeitraum auch in den erstellten ersten Zertifikat 519 spezifiziert. Ist der erste Datenwert 517 beispielsweise als Dokumentennummer des zu signierenden Dokuments ausgebildet, so enthält das erstellte Zertifikat 517 auch die Dokumentennummer und verleiht nur Signaturen Gültigkeit, welche basierend auf dem durch die Dokumentennummer spezifizierten elektronischen Dokument erstellt wurden.

Das erstellte erste Zertifikat 519 kann nun auf einem Zertifikatsserver veröffentlicht werden und/oder in Schritt 510 an das Nutzer-System 526 zurück-übertragen werden.

Ein weiterer vorteilhafter Aspekt von Ausführungsformen der vorliegenden Erfindung ist darin begründet, dass der erste Datenwert 517 gemäß dieser Ausführungsformen geeignet ist, dem ID-Provider-Computersystem 136 zu signalisieren, dass der Betreiber des Dienst-Computersystems die Kosten für das angeforderte erste Zertifikat übernehmen wird.

Ein weiterer vorteilhafter Aspekt von Ausführungsformen der vorliegenden Erfindung ist darin begründet, dass der erste Datenwert 517 gemäß besagter Ausführungsformen geeignet ist, dem ID-Provider-Computersystem 136 zu signalisieren, dass das angeforderte erste Zertifikat nur gegenüber dem Betreiber des Dienst-Computersystems 150 Gültigkeit besitzt. Dadurch kann verhindert werden, dass der Nutzer 102 ein erstes Zertifikat, welches auf Kosten eines ersten Dienstanbieters für diesen Nutzer 102 erstellt wurde, zur Durchführung von Geschäftstransaktionen mit anderen Dienstanbietern verwendet. Die Beschränkung der Gültigkeit des ersten Zertifikates auf dem Dienstanbieter, welcher die Kosten für die Ausstellung des Zertifikates übernimmt, kann beispielsweise dadurch realisiert werden, dass der erste Datenwert den Namen des Dienstanbieters enthält, und dass dieser Name als Klartext und/oder in maschinenlesbarer Form zum Bestandteil des ersten Zertifikates wird.

Der Nutzer 102 kann nach Erstellung des ersten Zertifikates die von dem Nutzer zuvor gesetzte Signatur-PIN eingeben, um sich zur Durchführung der Signierung zu authentifizieren. Das Nutzer-System 526 signiert daraufhin in Schritt 523 die Daten, deren Signierung zur Durchführung der angeforderten Transaktion erforderlich ist, mit dem ersten privaten Schlüssel. Die erstellte Signatur ist gültig, da für den öffentlichen Schlüssel, der dem ersten privaten Schlüssel zugeordnet ist, ein erstes Zertifikat existiert, welches der im Zuge der Transaktion auszustellenden Signatur Gültigkeit verleiht.

Die signierten Daten, zum Beispiel ein signiertes elektronisches Dokument, können nun in Schritt 514 von dem Nutzer-System 526 an das Dienst-Computersystem 150 übertragen werden. In Schritt 514 kann gegebenenfalls auch das erste Zertifikat an das Dienst-Computersystem übertragen werden. Durch Entschlüsselung der Signatur mit dem ersten öffentlichen Schlüssel kann das Dienst-Computersystem die Unverfälschtheit des signierten elektronischen Dokumentes prüfen. Durch eine Zertifikats-Prüfung 516, die durch das Dienst-Computersystem und das ID-Provider-Computersystem 136 durchgeführt wird, kann die Zuordnung des öffentlichen Schlüssels zu dem Nutzer 102 des Nutzer-Systems 526 überprüft werden. In Schritt 516 kann zudem überprüft werden, ob das erste Zertifikat 519 und damit auch die Signatur des signierten elektronischen Dokumentes für die angeforderte Transaktion Gültigkeit besitzt, also ob zum Beispiel der erste Datenwert des ersten Zertifikates mit zum Beispiel der Dokumentennummer des signierten Dokumentes übereinstimmt.

Wird die Unverfälschtheit der Signatur und die Gültigkeit des ersten Zertifikates durch die Zertifikats-Prüfung 516 bestätigt, kann der Dienst in Schritt 524 seine Leistung erbringen.

Gemäß bevorzugter Ausführungsformen prüft das zweite Computersystem die Signatur der signierten Daten, indem es von dem ersten Computersystem das zu dem öffentlichen Schlüssel zugehörige Zertifikat anfordert, falls das zugehörige Zertifikat nicht zusammen mit den signierten Daten von dem dritten Computersystem an das zweite Computersystem übermittelt wurde. Gemäß weiterer bevorzugter Ausführungsformen prüft das zweite Computersystem ob das zugehörige Zertifikat den ersten Datenwert, welcher von dem zweiten Computersystem zur Begrenzung der Gültigkeit des Zertifikates spezifiziert wurde, beinhaltet.

Der Nutzer 102 kann gemäß Ausführungsformen der Erfindung die Signatur-PIN neu setzen und/oder das erste Zertifikat löschen. Eine Missbrauchsgefahr bezüglich des erstellten ersten privaten Schlüssels wird also mehrfach ausgeschlossen, da gemäß bevorzugter Ausführungsformen der Erfindung das zugehörige erste Zertifikat nach Durchführung der angeforderten Transaktion keine Gültigkeit mehr besitzt, und da der Nutzer 102 zudem die Möglichkeit des Setzens einer neuen Signatur-PIN (zweite PIN) besitzt und/oder nicht mehr benötigte erste Zertifikate und/oder asymmetrische Schlüsselpaare von dem ID-Token zu löschen.

Gemäß weiteren Ausführungsformen der Erfindung kann das Verfahren auch zur Steuerung von Hauselektronik, insbesondere sicherheitskritischer Hauselektronik, benutzt werden. In vielen größeren Bürokomplexen von Firmen besteht das Problem, dass es notwendig ist, Personen, die Zugang zu den Räumlichkeiten wünschen, diesen Zugang abgestuft nach deren Funktion der Personen innerhalb der Firma oder in Bezug auf die Firma zu verleihen. So benötigen z.B. einige Mitarbeiter der IT-Abteilung Zugang zu sicherheitskritischen Räumen, in welchen die Server stehen, der anderen Nutzergruppen, beispielsweise Büroangestellten oder Besuchern nicht zugänglich sein darf. Für Besucher ist es zudem erforderlich, in Abhängigkeit von der Länge und des Zwecks des Besuches besondere, eingeschränkte Zugangsrechte auszustellen.

So ist es gemäß Ausführungsformen der vorliegenden Erfindung möglich, das Mobiltelefon eines Besuchers als Nutzer-Computersystem, dessen elektronischen Ausweis mit Signierfunktion als ID-Token und einen firmeneigenen Server, der als "Dienstleistung" den Zugang zu verschiedenen Räumlichkeiten der Firma verwaltet, zu verwenden. Der Besucher kann sich z.B. über sein Handy eine Transaktionsanforderung an den Firmenserver senden, wobei die Transaktionsanforderung die Anfrage beinhaltet, bestimmte Räumlichkeiten der Firma zu betreten. Im Zuge dieser Transaktionsanforderung können noch weitere Attribute des Nutzers aus dessen ID-Token ausgelesen und an den Firmen-Server übertragen werden, z.B. Angaben zu seinem Namen und Vornamen. In Abhängigkeit von den ausgelesenen Attributen kann der Firmenserver sodann die Ausstellung von in ihrer Gültigkeit begrenzter Zertifikate anfordern, welche es dem Besucher erlauben, bestimmte Räume zu betreten. Der Firmenserver könnte spezifisch für den Besucher und für jeden Raum, zu welchem der Besucher Zugang haben soll, einen ersten Datenwert kreieren und die Ausstellung entsprechender Zertifikate anfordern. Der Zugang zu jedem dieser Räume könnte von dem Benutzer erfordern, dass der Benutzer mittels seines Mobilfunkgerätes und des ID-Tokens einen Signaturschritt beim Betreten eines Firmenraumes ausführt gemäß Ausführungsformen des erfindungsgemäßen Verfahrens. Da das Schlüsselmaterial und die Zertifikate nur jeweils für einen bestimmten Benutzer und bestimmte Räume erstellt wurden und diese nur für die angeforderte Transaktion (Zugang zu einem Raum) oder nur kurze Zeit Gültigkeit besitzen, besteht keine Gefahr, dass der Besucher sich unberechtigter Weise Zugang zu Räumlichkeiten verschafft oder einen ihm ausgehändigten Schlüssel verlieren und er dadurch Dritten unberechtigten Zugang verschaffen könnte.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienstanforderung
- 166: Attributspezifizierung
- 168: Anforderung
- 170: Programminstruktionen
- 172: Speicherbereich
- 174: Programminstruktionen
- 176: Konfigurationsdatensatz
- 178: Konfigurationsdatensatz
- 179: Antwort
- 501: Nutzereingabe
- 502: Transaktionsanforderung
- 503: Signaturanforderung
- 504: Eingabeaufforderung
- 505: Authentifizierungsschritt
- 506: Authentifizierungsschritt
- 507: Authentifizierungsschritt
- 508: Befehl Erzeugung erstes Schlüsselpaar
- 509: Zertifikatsanforderung
- 510: Übertragung 1. Zertifikat
- 511: Authentifizierungsschritt
- 512: Übertragung der zu signierenden Daten
- 513: Übertragung der signierten Daten
- 514: Übertragung der signierten Daten einen Dienst-Computersystem
- 515: Zertifikat-Prüfungsanfrage
- 516: Zertifikats-Prüfung
- 517: erster Datenwert
- 518: erster öffentlicher Schlüssel
- 519: erstes Zertifikat
- 520: Nachricht
- 521: Senden von erstem Datenwert
- 522: Nutzer setzt Signatur-PIN
- 523: Nutzer signiert Daten
- 524: Dienst erbringt Leistung
- 525: Löschen von Signatur-PIN und 1. Zertifikat
- 526: Nutzer-System

## Patentansprüche

1. Verfahren zur Erzeugung eines Zertifikats (519) mit den folgenden Schritten:
- Senden (201) einer Transaktionsanforderung für einen Nutzer, dem ein ID-Token (106) zugewiesen ist, zur Durchführung einer Transaktion,
- Aufgrund der Sendung der Transaktionsanforderung Überprüfung, ob ein Zertifikat (519) zur nutzerseitigen Signierung von Daten, deren Signierung zur Durchführung der in der Transaktionsanforderung angeforderten Transaktion notwendig ist, welches für die angeforderte Transaktion geeignet ist, verfügbar ist, und wenn dies nicht der Fall ist, Ausführung der folgenden Schritte:
• Erzeugung (206) eines asymmetrischen Schlüsselpaares bestehend aus einem privaten Schlüssel und einem öffentlichen Schlüssel durch das ID-Token,
• Speicherung (207) des erzeugten asymmetrischen Schlüsselpaares auf dem ID-Token, wobei zumindest der private Schlüssel in einem geschützten Speicherbereich des ID-Tokens gespeichert wird,
• Übertragung (208; 509) des generierten öffentlichen Schlüssels (518) an ein erstes Computersystem, und
• Erzeugung (209) des Zertifikates (519) durch das erste Computersystem für den öffentlichen Schlüssel, wobei das Zertifikat ein transaktionsgebundenes Zertifikat darstellt, dessen Gültigkeit auf die angeforderte Transaktion beschränkt ist, und wobei das Zertifikat dem Nutzer zugeordnet ist.

2. Verfahren nach Anspruch 1, ferner mit den Schritten:
- Empfang der zu signierenden Daten von einem zweiten Computersystem (150) durch ein drittes Computersystem (100),
- Signierung der zu signierenden Daten mit dem privaten Schlüssel durch das ID-Token, und
- Übertragung der signierten Daten von dem ID-Token an das dritte Computersystem.

3. Verfahren nach einem der Ansprüche 1-2, wobei eine Authentifizierung des Nutzers gegenüber dem ID-Token durch Eingabe einer ersten und einer zweiten PIN erfolgt, wobei die erste PIN dem Nutzer zugeordnet ist und die Eingabe der zweiten PIN nur nach erfolgreicher Eingabe der ersten PIN erfolgen kann.

4. Verfahren nach Anspruch 2, ferner mit den Schritten:
- Übertragung des öffentlichen Schlüssels vom ID-Token an das dritte Computersystem, wobei der öffentliche Schlüssel als Bestandteil des Zertifikates übertragen werden kann,
- Übertragung der signierten Daten und des öffentlichen Schlüssels vom dritten Computersystem an das zweite Computersystem, wobei der öffentliche Schlüssel als Bestandteil des Zertifikates übertragen werden kann, und
- Überprüfung der Signatur der signierten Daten durch das zweite Computersystem.

5. Verfahren nach einem der Ansprüche 1-4, ferner mit dem Schritt der:
- Überprüfung auf Vorhandensein eines bereits existierenden asymmetrischen Schlüsselpaares mit zugeordnetem gültigen Zertifikat auf dem ID-Token durch das erste Computersystem,
wobei das asymmetrische Schlüsselpaar und das Zertifikat nur dann erstellt werden, falls auf dem ID-Token kein bereits existierendes asymmetrisches Schlüsselpaar mit zugeordnetem gültigen Zertifikat gespeichert ist.

6. Verfahren nach einem der Ansprüche 1-5, wobei mindestens ein Datenwert (517) die Gültigkeit des erstellten Zertifikates (519) begrenzt.

7. Verfahren nach Anspruch 6, wobei eine Signaturanforderung zur Signierung der zu signierenden Daten empfangen (202) wird, wobei die Signierung der zu signierenden Daten zur Durchführung der angeforderten Transaktion erforderlich ist, wobei der Empfang der Signaturanforderung als Antwort auf das Senden (201) der Transaktionsanforderung erfolgt,
- wobei die Signaturanforderung von dem zweiten Computersystem an das dritte Computersystem versendet wird,
- wobei die Signaturanforderung den mindestens einen Datenwert enthält, und
- wobei der mindestens eine Datenwert durch das zweite Computersystem spezifiziert wird.

8. Verfahren nach Ansprüchen 6 oder 7, wobei der mindestens eine Datenwert (517) ausgebildet ist als
- Dokumentennummer eines elektronischen Dokumentes,
- Auftragsnummer des elektronischen Dokumentes,
- Identifikator des Betreibers des zweiten Computersystems (150), welches die Signaturanforderung versendet,
- Identifikator des zweiten Computersystems, welches die Signaturanforderung versendet, oder als
- ein Wert, welcher von der Dokumentennummer des elektronischen Dokumentes, der Auftragsnummer des elektronischen Dokumentes, dem Identifikator des Betreibers des zweiten Computersystems, dem Identifikator des zweiten Computersystems, oder dem Inhalt des elektronischen Dokumentes abgeleitet ist.

9. Verfahren nach einem der Ansprüche 6 oder 7, wobei der mindestens eine Datenwert (517) den Zeitraum, während dessen das Zertifikat Gültigkeit besitzt, spezifiziert.

10. Verfahren nach einem der Ansprüche 1 bis 9, wobei die Übertragung zumindest des öffentlichen Schlüssels zu dem ersten Computersystem über eine geschützte Verbindung mit Ende-zu-Ende Verschlüsselung zwischen dem ID-Token und dem ersten Computersystem erfolgt.

11. Verfahren nach Anspruch 10, ferner mit den Schritten:
- Authentifizierung (505) des Nutzers gegenüber dem ID-Token,
- Authentifizierung (506) des ersten Computersystems (136) gegenüber dem ID-Token (106),
- wobei nach erfolgreicher Authentifizierung des Nutzers (102) und des ersten Computersystems der Aufbau der geschützten Verbindung zwischen dem ID-Token und dem ersten Computersystem (136) erfolgt.

12. Verfahren nach einem der vorhergehenden Ansprüche 1-11, wobei
mindestens ein Attribut in dem ID-Token gespeichert ist, ferner mit dem Schritt:
- Lesezugriff des ersten Computersystems auf das zumindest eine in dem ID-Token gespeicherte Attribut zur Übertragung des zumindest einen Attributs an das zweite Computersystem (150).

13. Computersystem (136) mit:
- Mitteln (142, 144, 146) zur Authentifizierung gegenüber einem ID-Token (106, 106'),
- Mitteln (138) zum Lesen eines öffentlichen Schlüssels (518) über ein Netzwerk von dem ID-Token, wobei ein öffentlicher Schlüssel und ein privater Schlüssel ein asymmetrisches Schlüsselpaar bilden und wobei das asymmetrische Schlüsselpaar einem Nutzer (102) zugeordnet ist,
- Mitteln (138) zum Empfang eines Datenwertes (517) von einem zweiten Computersystem (150), und
- Mitteln (174) zur Erzeugung eines Zertifikats (519) für den öffentlichen Schlüssel, wobei die Gültigkeit des Zertifikates durch den empfangenen Datenwert (517) bestimmt wird, wobei das Zertifikat für eine von dem zweiten Computersystem angeforderte Transaktion geeignet ist und ein transaktionsgebundenes Zertifikat darstellt, dessen Gültigkeit auf die angeforderte Transaktion beschränkt ist, wobei das Zertifikat zur nutzerseitigen Signierung von Daten, deren Signierung zur Durchführung der Transaktion notwendig ist, dient, und wobei das Zertifikat dem Nutzer zugeordnet ist,
insbesondere mit:
- Mitteln zum Lesen zumindest eines in dem ID-Token gespeicherten Attributs zur Übertragung des zumindest einen Attributs an das zweite Computersystem (150),
insbesondere mit:
- Mitteln zum Empfang einer Anforderung durch das zweite Computersystem zur Sperrung des Zertifikates, und
- Mitteln zur Sperrung des Zertifikates nach Überprüfung, dass die Anforderung von einer Instanz stammt, die dem Zertifikat als Eigentümer zugeordnet ist.

14. Computersystem (136) nach Anspruch 13, mit:
- Mitteln zum Empfang einer Anforderung von dem zweiten Computersystem zur Überprüfung der Gültigkeit des Zertifikates, wobei die Anforderung zumindest den öffentlichen Schlüssel enthält,
- Mitteln zur Überprüfung der Gültigkeit des Zertifikates, und
- Mitteln zum Senden des Ergebnisses der Überprüfung an das zweite Computersystem.

15. Computerprogrammprodukt, insbesondere ein computer-lesbares, nichtflüchtiges Speichermedium mit ausführbaren Programminstruktionen zur Durchführung eines erfindungsgemäßen Verfahrens nach einem der Ansprüche 1-12.

## Claims

1. A method for generating a certificate (519), comprising the following steps:
- sending (201) a transaction request for a user, to whom an ID token (106) is assigned, to carry out a transaction,
- on account of the sending of the transaction request, checking whether a certificate (519) suitable for the requested transaction is available for user signing of data, of which the signing is necessary to carry out the transaction requested in the transaction request, and, if this is not the case, executing the following steps:
• generating (206) an asymmetric key pair consisting of a private key and a public key by means of an ID token,
• storing (207) the generated asymmetric key pair on the ID token, wherein at least the private key is stored in a protected memory area of the ID token,
• transmitting (208; 509) the generated public key (518) to a first computer system, and
• generating (209) the certificate (519) by means of the first computer system for the public key, wherein the certificate is a transaction-linked certificate, the validity of which is limited to the requested transaction, and wherein the certificate is assigned to the user.

2. The method according to claim 1, further comprising the following steps:
- receiving data to be signed from a second computer system (150) by means of a third computer system (100),
- signing the data to be signed with the private key by means of the ID token, and
- transmitting the signed data from the ID token to the third computer system.

3. The method according to one of claims 1-2, wherein the user is authenticated to the ID token by inputting a first and a second PIN, wherein the first PIN is associated with the user and the second PIN can only be input once the first PIN has been input successfully.

4. The method according to claim 2, further comprising the following steps:
- transmitting the public key from the ID token to the third computer system, wherein the public key can be transmitted as a component of the certificate,
- transmitting the signed data and the public key from the third computer system to the second computer system, wherein the public key can be transmitted as a component of the certificate, and
- checking the signature of the signed data by means of the second computer system.

5. The method according to any one of claims 1-4, further comprising the following step:
- checking the presence of an already existing asymmetric key pair with associated valid certificate on the ID token by means of the first computer system,
wherein the symmetric key pair and the certificate are only then produced if an existing asymmetric key pair with associated valid certificate is not already stored on the ID token.

6. The method according to any one of claims 1-5, wherein at least one data value (517) defines the validity of the produced certificate (519).

7. The method according to claim 6, wherein a signature request for signing the data to be signed is received (202), wherein the signing of the data to be signed is necessary to carry out the requested transaction, wherein the signature request is received as a response to the sending (201) of the transaction request,
- wherein the signature request is sent from the second computer system to the third computer system,
- wherein the signature request contains the at least one data value, and
- wherein the at least one data value is specified by the second computer system.

8. The method according to claims 6 or 7, wherein the at least one data value (517) is formed as
- a document number of an electronic document,
- an order number of the electronic document,
- an identifier of the operator of the second computer system (150), which sends the signature request,
- an identifier of the second computer system, which sends the signature request, or as
- a value, which is derived from the document number of the electronic document, the order number of the electronic document, the identifier of the operator of the second computer system, the identifier of the second computer system, or the content of the electronic document.

9. The method according to either one of claims 6 or 7, wherein the at least one data value (517) specifies the period of time during which the certificate is valid.

10. The method according to one of claims 1 to 9, wherein at least the public key is transmitted to the first computer system via a protected connection with end-to-end encryption between the ID token and the first computer system.

11. The method according to claim 10, further comprising the following steps:
- authenticating (505) the user to the ID token,
- authenticating (506) the first computer system (136) to the ID token (106),
- wherein, once the user (102) and the first computer system have been successfully authenticated, the protected connection between the ID token and the first computer system (136) is set up.

12. The method according to any one of the preceding claims 1-11,
wherein at least one attribute is stored in the ID token, further comprising the following step:
- read access of the first computer system to the at least one attribute stored in the ID token to transmit the at least one attribute to the second computer system (150).

13. A computer system (136), comprising:
- means (142, 144, 146) for authenticating to an ID token (106, 106'),
- means (138) for reading a public key (518) via a network from the ID token, wherein a public key and a private key form an asymmetric key pair, and wherein the asymmetric key pair is associated with a user (102),
- means (138) for receiving a data value (517) from a second computer system (150), and
- means (174) for generating a certificate (519) for the public key, wherein the validity of the certificate is determined by the received data value (517), wherein the certificate is suitable for a transaction requested by the second computer system and is a transaction-linked certificate, the validity of which is limited to the requested transaction, wherein the certificate is used for user signing of data, of which the signing is necessary to carry out the transaction, and wherein the certificate is associated with the user,
in particular comprising:
- means for reading at least one attribute stored in the ID token to transmit the at least one attribute to the second computer system (150),
in particular comprising:
- means for receiving a request by the second computer system to block the certificate, and
- means for blocking the certificate once it has been checked that the request originates from an authority that is associated with the certificate as the owner thereof.

14. The computer system (136) according to claim 13, comprising:
- means for receiving a request from the second computer system to check the validity of the certificate, wherein the request contains at least the public key,
- means for checking the validity of the certificate, and
- means for sending the result of the check to the second computer system.

15. A computer program product, particularly a computer-readable, non-volatile storage medium with executable program instructions for carrying out a method according to invention according to any one of claims 1-12.

## Revendications

1. Procédé de création d'un certificat (519), comportant les étapes suivantes :
- l'envoi (201) d'une demande de transaction pour un utilisateur, auquel est associé un jeton d'identification ID (106), pour l'exécution d'une transaction,
- en raison de l'envoi de la demande de transaction, la vérification si un certificat (519) pour la signature du côté utilisateur de données, dont la signature est nécessaire pour l'exécution de la transaction demandée dans la demande de transaction, laquelle appropriée pour la transaction demandée, est disponible, et si ce n'est pas le cas, l'exécution des étapes suivantes :
• la création (206) d'une paire de clés asymétrique constituée d'une clé privée et d'une clé publique, par le jeton d'ID,
• le stockage (207) de la paire de clés asymétrique créée sur le jeton d'ID, où au moins la clé privée est stockée dans un domaine de mémoire protégé du jeton d'ID,
• la transmission (208 ; 509) de la clé publique (518) créée vers un premier système informatique, et
• la création (209) du certificat (519) par le premier système informatique pour la clé publique, où le certificat représente un certificat lié à la transaction dont la validité est restreinte à la transaction demandée et où le certificat est associé à l'utilisateur.

2. Procédé selon la revendication 1, avec en outre les étapes :
- de réception des données devant être signées par un deuxième système informatique (150) par un troisième système informatique (10),
- de signature des données signées avec la clé privée par le jeton d'ID, et
- de transmission des données signées par le jeton d'ID vers le troisième système informatique.

3. Procédé selon l'une des revendications 1 ou 2, dans lequel une authentification de l'utilisateur vis-à-vis du jeton d'ID a lieu par la saisie d'un premier et d'un second code PIN, où le premier code PIN est associé à l'utilisateur et la saisie du deuxième code PIN ne peut être effectuée qu'après une saisie réussie du premier code PIN.

4. Procédé selon la revendication 2, avec en outre les étapes :
- de transmission de la clé publique du jeton d'ID vers le troisième système informatique, où la clé publique peut être transmise en tant que composant du certificat,
- de transmission des données signées et de la clé publique du troisième système informatique vers le deuxième système informatique, où la clé publique peut être transmise en tant que composant du certificat, et
- de vérification de la signature des données signées par le deuxième système informatique.

5. Procédé selon l'une des revendications 1 à 4, avec en outre les étapes :
- de vérification de la présence d'une paire de clés asymétrique déjà existante avec un certificat correspondant valide sur le jeton d'ID par le premier système informatique,
où la paire de clés asymétrique et le certificat ne sont établis que si aucune paire de clés asymétrique déjà existante avec un certificat valide n'est pas déjà stockée sur le jeton d'ID.

6. Procédé selon l'une des revendications 1 à 5, dans lequel au moins une valeur de donnée (517) limite la validité du certificat (519) établi.

7. Procédé selon la revendication 6, dans lequel une demande de signature pour la signature des données à signer est reçue (202), où la signature des données à signer est nécessaire pour l'exécution de la demande de signature, où la réception de la demande de signature a lieu sous forme de réponse à l'envoi (201) de la demande de transaction,
- où la demande de signature est envoyée du deuxième système informatique vers le troisième système informatique,
- où la demande de signature contient l'au moins une donnée de valeur, et
- où l'au moins une valeur de donnée est spécifiée par le deuxième système informatique.

8. Procédé selon les revendications 6 ou 7, dans lequel l'au moins une donnée de valeur (517) est conçue sous la forme
- d'un numéro de document d'un document électronique,
- d'un numéro de commande du document électronique,
- d'un identificateur de l'exploitant du deuxième système informatique (150), lequel réexpédie la demande de signature,
- d'un identificateur du deuxième système informatique, lequel réexpédie la demande de signature, ou sous forme
- d'une valeur, laquelle est dérivée du numéro de document du document électronique, du numéro de commande du document électronique, de l'identificateur de l'exploitant du deuxième système informatique, de l'identificateur du deuxième système informatique ou du contenu du document électronique.

9. Procédé selon les revendications 6 ou 7, dans lequel l'au moins une donnée de valeur (517) spécifie un intervalle de temps durant lequel le certificat possède une validité.

10. Procédé selon les revendications 1 à 9, dans lequel la transmission d'au moins la clé publique au premier système informatique a lieu par le biais d'une liaison sécurisée avec un cryptage de bout en bout entre le jeton d'ID et le premier système informatique.

11. Procédé selon la revendication 10, avec en outre les étapes
- d'authentification (505) de l'utilisateur vis à vis du jeton d'ID,
- d'authentification (506) du premier système informatique (136) vis-à-vis du jeton d'ID (106),
- où, après l'authentification réussie de l'utilisateur (102) et du premier système informatique, l'établissement de la liaison sécurisée entre le jeton d'ID et le premier système informatique (136) a lieu.

12. Procédé selon l'une des revendications précédentes 1 à 11, dans lequel au moins un attribut est stocké dans le jeton d'ID, avec en outre l'étape :
- d'accès en lecture du premier système informatique pour l'au moins un attribut stocké dans le jeton d'ID pour la transmission de l'au moins un attribut au deuxième système informatique (150).

13. Système informatique (136) doté :
- de moyens (142, 144, 146) pour l'authentification vis-à-vis d'un jeton d'ID (106, 106'),
- de moyens (138) pour la lecture d'une clé publique (518) par le biais d'un réseau à partir du jeton d'ID, où une clé publique et une clé privée forment une paire de clés asymétrique et où la paire de clés asymétrique est associée à un utilisateur (102),
- des moyens (138) pour la réception d'une date de valeur (517) provenant d'un deuxième système informatique (150), et
- de moyens (174) pour la création d'un certificat (519) pour la clé publique, où la validité du certificat est déterminée par la valeur de donnée (517) reçue, où le certificat est approprié pour une transaction demandée par le deuxième système informatique et représente un certificat relié à la transaction dont la validité se restreint à la transaction demandée, où le certificat sert à la signature du côté utilisateur de données dont la signature est nécessaire pour l'exécution de la transaction, et où le certificat est associé à l'utilisateur,
notamment avec :
- des moyens pour la lecture d'au moins un attribut stocké dans le jeton d'ID pour la transmission de l'au moins un attribut au deuxième système informatique (150),
notamment avec :
- des moyens pour la réception d'une demande par le deuxième système informatique pour le blocage du certificat, et
- des moyens pour le blocage du certificat après vérification que la demande est originaire d'une instance qui est associée au certificat en tant que propriétaire.

14. Système informatique (136) selon la revendication 13, avec :
- des moyens pour la réception d'une demande provenant du deuxième système informatique pour la vérification de la validité du certificat, où la demande contient au moins la clé publique,
- des moyens pour la vérification de la validité du certificat et
- des moyens pour l'envoi du résultat de la vérification au deuxième système informatique.

15. Produit-programme informatique, notamment support de stockage lisible par ordinateur non volatil avec des instructions de programme exécutables pour la réalisation du procédé conforme à l'invention selon l'une des revendications 1 à 12.
